(19) Europäisches Patentamt

European Patent Office

Office européen des brevets

(11) **EP 4 679 862 A1**

(12) **EUROPEAN PATENT APPLICATION**
published in accordance with Art. 153(4) EPC

(43) Date of publication:
**14.01.2026 Bulletin 2026/03**

(21) Application number: **24766709.0**

(22) Date of filing: **26.01.2024**

(51) International Patent Classification (IPC):
*H04R 3/00* (2006.01)   *G10K 15/04* (2006.01)
*H04M 1/72* (2021.01)   *H04M 3/56* (2006.01)
*H04N 7/14* (2006.01)   *H04N 7/15* (2006.01)
*H04S 7/00* (2006.01)

(52) Cooperative Patent Classification (CPC):
**G10K 15/04; H04M 1/72; H04M 3/56; H04R 3/00;**
H04N 7/14; H04N 7/15; H04S 7/00

(86) International application number:
**PCT/JP2024/002446**

(87) International publication number:
**WO 2024/185334 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **08.03.2023   JP 2023035310**

(71) Applicant: **Sony Group Corporation**
**Tokyo 108-0075 (JP)**

(72) Inventors:
• **FUKAYA, Hiromi**
**Tokyo 108-0075 (JP)**
• **MIYAZAKI, Shuhei**
**Tokyo 108-0075 (JP)**

(74) Representative: **D Young & Co LLP**
**3 Noble Street**
**London EC2V 7BQ (GB)**

(54) **INFORMATION PROCESSING DEVICE, INFORMATION PROCESSING METHOD, AND PROGRAM**

(57)   Sound direction control is executed so that a user utterance of a conversation partner via a network is heard as an utterance from a user position of the conversation partner with respect to a predefined self-position. A communication unit that receives a user utterance of a conversation partner via a network, and an output sound control unit that executes output control of the user utterance are included. An output sound control unit executes sound direction control and volume control so that a user utterance is heard as an utterance from a user position of a conversation partner with respect to a predefined self-position. The user position of the conversation partner with respect to the self position is determined according to a predetermined fixed position or a degree of intimacy with the conversation partner, and is set to a position closer to the self position as the degree of intimacy is higher.

FIG. 11

**Description**

TECHNICAL FIELD

The present disclosure relates to an information processing apparatus, an information processing method, and a program. More specifically, the present disclosure relates to an information processing apparatus, an information processing method, and a program that enable, when a plurality of user terminals is connected via a network to have a conversation or a meeting, outputting a background sound or a background image of a certain real environment such as a cafe to each user terminal, for example, to give a feeling that each user is having a conversation in the real environment such as the cafe.

BACKGROUND ART

In recent years, conversations and meetings via a network such as a remote meeting performed by transmitting and receiving a sound and image data using a communication terminal have been actively performed.
In the conversation via the network, a user terminal such as a PC or a smartphone possessed by each conversation participant user is connected to a communication network such as the Internet, and images and sounds are transmitted and received between the terminals via the communication network.
However, in many cases, the places where the users participating in the conversation actually exist are different places such as a home of each user, and the environments of whereabouts of the users are different.
On the other hand, actual conversations and meetings in the real world are held in one place such as a conference room or a cafe.
As described above, in the conversation via the network, since the environment of each user is different, there is no sense of having a conversation in one place, and there is a problem that it is difficult to obtain a sense of unity.
Note that, for example, Patent Document 1 (International Publication WO 2019/155735) discloses a conventional technique that discloses a system in which a user terminal is connected to a network to have a conversation.
Patent Document 1 discloses a configuration in which a virtual image of a conversation partner is displayed on a user terminal, and a direction and an expression of the displayed virtual image are changed in a manner similar to those of an actual conversation partner.
However, this disclosure configuration is only the display control of the conversational user, and does not control the background sound or the background image, and does not provide the feeling that the users having a conversation are in the same space.

CITATION LIST

PATENT DOCUMENT

Patent Document 1: International Publication WO2019/155735

SUMMARY OF THE INVENTION

PROBLEMS TO BE SOLVED BY THE INVENTION

The present disclosure has been made in view of the above problems, for example, and an object of the present disclosure is to provide an information processing apparatus, an information processing method, and a program capable of obtaining a sense that a user has a conversation in a real environment such as a cafe by outputting a background sound or a background image of the real environment such as the cafe to a user terminal of the user having a conversation via a communication network.

SOLUTIONS TO PROBLEMS

A first aspect of the present disclosure is an information processing apparatus including:

a communication unit that receives a user utterance of a conversation partner via a network; and
an output sound control unit that executes output control of the user utterance, in which
the output sound control unit
executes sound direction control so that the user utterance is heard as an utterance from a user position of the conversation partner with respect to a predefined self-position.

Furthermore, a second aspect of the present disclosure is an information processing method executed in an information processing apparatus,
the information processing apparatus including:

a communication unit that receives a user utterance of a conversation partner via a network; and
an output sound control unit that executes output control of the user utterance, and
the output sound control unit
executing sound direction control so that the user utterance is heard as an utterance from a user position of the conversation partner with respect to a predefined self-position.

Furthermore, a third aspect of the present disclosure is a program for causing an information processing apparatus to execute information processing,
the information processing apparatus including:

a communication unit that receives a user utterance of a conversation partner via a network; and
an output sound control unit that executes output control of the user utterance, and
the program causing the output sound control unit
to execute sound direction control so that the user utterance is heard as an utterance from a user position of the conversation partner with respect to a predefined self-position.

Note that a program in the present disclosure is, for example, a program that can be provided by a storage medium or a communication medium that provides the program in a computer-readable format for an information processing apparatus or a computer system capable of executing various program codes. By providing such a program in a computer-readable format, processing corresponding to the program is achieved on the information processing apparatus or the computer system.

Other objects, features, and advantages of the present disclosure will become apparent from detailed description based on embodiments of the present disclosure described later and the accompanying drawings. Note that, in the present specification, a system is a logical set configuration of a plurality of apparatuses, and is not limited to one in which apparatuses with various configurations are in the same housing.

According to a configuration of an embodiment of the present disclosure, a configuration is realized in which sound direction control is executed so that a user utterance of a conversation partner via a network is heard as an utterance from a user position of the conversation partner with respect to a predefined self-position.

Specifically, for example, a communication unit that receives a user utterance of a conversation partner via a network, and an output sound control unit that executes output control of the user utterance are included. An output sound control unit executes sound direction control and volume control so that a user utterance is heard as an utterance from a user position of a conversation partner with respect to a predefined self-position. The user position of the conversation partner with respect to the self position is determined according to a predetermined fixed position or a degree of intimacy with the conversation partner, and is set to a position closer to the self position as the degree of intimacy is higher.

With the present configuration, the configuration is realized in which sound direction control is executed so that the user utterance of the conversation partner via the network is heard as the utterance from the user position of the conversation partner with respect to the predefined self-position.

Note that effects described herein are merely examples and are not limited, and additional effects may also be provided.

BRIEF DESCRIPTION OF DRAWINGS

Fig. 1 is a diagram for explaining an overview of a configuration of and processing performed by an information processing system of the present disclosure.
Fig. 2 is a diagram for explaining specific examples of background sound data and background image data provided by a background data provision server to a user terminal.
Fig. 3 is a diagram for explaining a processing example in a case where background data (background sound data and background image data) is stored in a user terminal.
Fig. 4 is a diagram for explaining a configuration example of the user terminal used in a first embodiment.
Fig. 5 is a diagram for explaining a specific example of sound control processing executed by an output sound control unit of the user terminal.
Fig. 6 is a diagram for explaining an example of a processing sequence for determining background setting and a position of each user.

Fig. 7 is a diagram for explaining a setting that enables listening to an utterance of another user as if it were uttered from each user setting position.

Fig. 8 is a diagram for explaining a calculation processing example of a sound output control parameter applied to output sound control processing executed by the output sound control unit.

Fig. 9 is a diagram for explaining a calculation processing example of a sound output control parameter applied to output sound control processing executed by the output sound control unit.

Fig. 10 is a diagram for explaining an output control processing example of utterance sounds of other users b to d executed by an output sound control unit of a user terminal a of a user a.

Fig. 11 is a diagram for explaining an example of processing executed by an output sound control unit of a user terminal b of a user b.

Fig. 12 is a diagram for explaining an example of processing executed by an output sound control unit of a user terminal b of a user b.

Fig. 13 is a diagram for explaining an example of a case where four users a to d have a conversation using background data of a cafe where various background sounds exist.

Fig. 14 is a diagram for explaining a specific example of output sound control processing executed by an output sound control unit of a user terminal in a setting of a cafe as a background.

Fig. 15 is a diagram for explaining an example of a case where four users a to d have a conversation using background data of a cafe where many people are around.

Fig. 16 is a diagram for explaining a specific example of output sound control processing executed by the output sound control unit of the user terminal in a setting of a cafe where many people are around as a background.

Fig. 17 is a diagram for explaining a specific processing example of a second embodiment.

Fig. 18 is a diagram for explaining a display control processing example of a user (an avatar or a real image corresponding to the user) according to the degree of intimacy between users.

Fig. 19 is a diagram for explaining a specific example of an image displayed on a display unit by an image output unit according to a display position of each user determined by an output image control unit according to degree-of-intimacy information calculated by a degree-of-intimacy calculation unit.

Fig. 20 is a diagram for explaining a graph illustrating a control processing example of a user utterance output volume according to a degree of intimacy executed by the output sound control unit of the user terminal a.

Fig. 21 is a diagram for explaining an output sound control processing example corresponding to a specific degree of intimacy between the user a and the users b to d.

Fig. 22 is a diagram for explaining an output sound control processing example corresponding to a specific degree of intimacy between the user a and the users b to d.

Fig. 23 is a diagram for explaining a configuration example of the user terminal used in the second embodiment.

Fig. 24 is a diagram for explaining a detailed configuration example and a specific degree-of-intimacy calculation processing example of the degree-of-intimacy calculation unit.

Fig. 25 is a diagram illustrating a calculation processing example of a "user liking base degree-of-intimacy" calculated by the degree-of-intimacy calculation unit.

Fig. 26 is a diagram illustrating a calculation processing example of "conversation density base degree-of-intimacy" calculated by the degree-of-intimacy calculation unit.

Fig. 27 is a diagram for a change processing example of a display mode executed by the output image control unit during execution of a conversation between the plurality of users a to d.

Fig. 28 is a diagram for explaining a change processing example of a user image (avatar image or real image) according to a change in a degree of intimacy executed by the output image control unit.

Fig. 29 is a diagram illustrating an example in which user terminals of users having a conversation via a network output different background data to the user terminals.

Fig. 30 is a diagram for explaining a processing example of switching background data to be output to an own terminal according to a conversation between users.

Fig. 31 is a diagram for explaining a processing example of switching background data to be output to an own terminal according to a conversation between users.

Fig. 32 is a diagram for explaining a processing example of switching background data to be output to an own terminal according to a conversation between users.

Fig. 33 is a diagram for explaining a processing example of switching background data to be output to an own terminal according to a conversation between users.

Fig. 34 is a diagram for explaining a processing example of switching background data to be output to an own terminal according to a conversation between users.

Fig. 35 is a diagram for explaining a processing example of switching background data to be output to an own terminal according to a conversation between users.

Fig. 36 is a diagram for explaining a processing example of switching background data to be output to an own terminal according to a conversation between users.

Fig. 37 is a diagram for explaining a processing example in a case where the user a uses the user terminal a to have a conversation with another user via a network.

Fig. 38 is a diagram for explaining a processing example in a case where the user a uses the user terminal a to have a conversation with another user via a network.

Fig. 39 is a diagram for explaining a processing example in a case where the user a uses the user terminal a to have a conversation with another user via a network.

Fig. 40 is a diagram for explaining a processing example in a case where the user a uses the user terminal a to have a conversation with another user via a network.

Fig. 41 is a diagram for explaining a processing example in a case where the user a uses the user terminal a to have a conversation with another user via a network.

Fig. 42 is a diagram for explaining a processing example in a case where the user a uses the user terminal a to have a conversation with another user via a network.

Fig. 43 is a diagram for explaining a hardware configuration example of a user terminal and a server.

MODE FOR CARRYING OUT THE INVENTION

Hereinafter, an information processing apparatus, an information processing method, and a program according to the present disclosure will be described in detail with reference to the drawings. Note that the description will be made in accordance with the following items.

1. Overview of Configuration of and Processing Performed by Information Processing System of Present Disclosure
2. (First Embodiment) Example of Executing Sound Control Based on Position of User
2-1. Configuration Example of User Terminal of First Embodiment
2-2. Specific Example of Sound Control Processing Based on User Position
3. (Second Embodiment) Embodiment of Executing Sound Output Control and Display Control According to Degree of Intimacy Between Users
3-1. Specific Processing Example of Sound Output Control and Display Control Processing According to Degree of Intimacy Between Users
3-2. Configuration Example of User Terminal of Second Embodiment
4. (Third Embodiment) Embodiment in which Different Background Data is Used in Each User Terminal
4-1. (Processing Example 1) Processing Example in Case Where, in Case Where User Talks to Other User and Has Conversation With Other User, Background Data Set in Own Terminal is Set to Continuously Output
4-2. (Processing Example 2) Processing Example in Case Where, in Case Where User Talks to Other User and Has Conversation With Other User, Only Background Sound Data in Background Data Set in Own Terminal is Set to be Switched to Background Sound Set in User Terminal of Conversation Partner
4-3. (Processing Example 3) Processing Example in Case Where, in Case Where User Talks to Other User and Has Conversation With Other User, Not Only Background Sound Data But Also Background Image Data In Background Data Set in Own Terminal is Set to be Switched to Background Data Set in User Terminal of Conversation Partner
4-4. (Processing Example 4) Processing Example in Case Where, in Case Where User is Spoken to by Other User and Has Conversation With Other User, Background Data Set in Own Terminal is Set to Continuously Output
4-5. (Processing Example 5) Processing Example in which, in Case Where User Talks to Another New User During Conversation of Plurality of Users, Background Sound Data of User Terminal of New User is Set to be Transmitted and Output to User Terminals of Plurality of Users During Conversation
4-6. (Processing Example 6) Processing Example in which, in Case Where User Talks to Another New User During Conversation of Plurality of Users, Background Sound Data and Background Image Data of User Terminal of New User are Set to be Transmitted and Output to User Terminals of Plurality of Users During Conversation
4-7. (Processing Example 7) Processing Example in which, in Case Where User is Spoken to by Another New User During Conversation of Plurality of Users, Background Sound Data of User Terminal of New User is Set to be Transmitted and Output to User Terminals of Plurality of Users During Conversation
5. Example of Specific Processing Sequence of Outputting Background Data to User Terminal and Having Conversation Between Users
6. Hardware Configuration Example of User Terminal and Server
7. Summary of Configurations of Present Disclosure

[1. Overview of Configuration of and Processing Performed by Information Processing System of Present Disclosure]

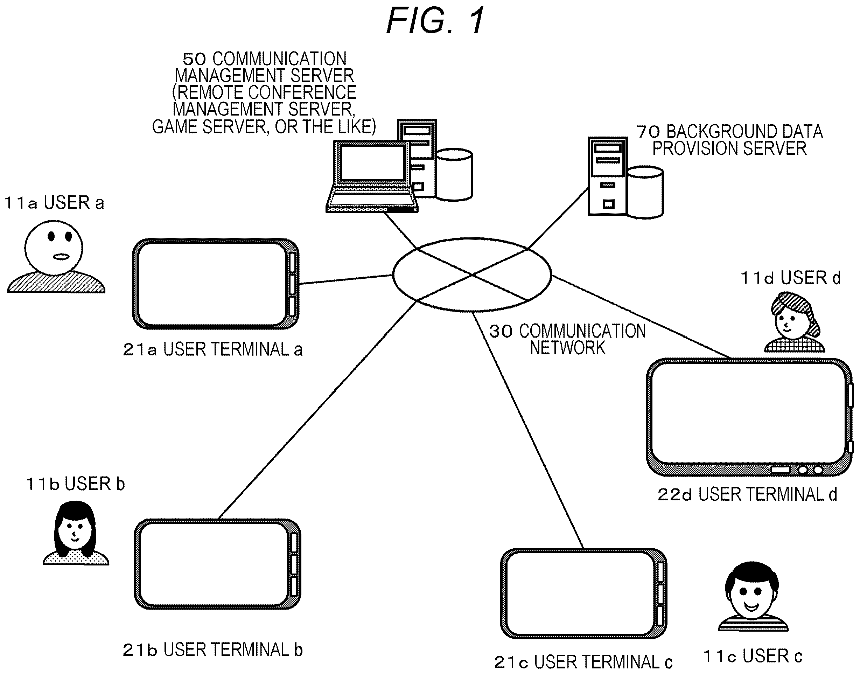

First, an overview of configuration of and processing performed by an information processing system of the present disclosure will be described with reference to Fig. 1 and subsequent drawings.

Fig. 1 is an example of a system that executes, for example, a remote conference, a remote meeting, an online game, or the like, and illustrates a configuration example of an information processing system capable of performing conversation between users via a communication network.

Fig. 1 illustrates users a, 11a to d, 11d who are users participating in a conversation via a communication network, user terminals a, 21a to d, 21d used by the respective users, a communication management server 50 which is a server that provides a communication execution environment, and a background data provision server 70 that provides various background sound data and background image data.

The communication management server 50 is, for example, a remote conference management server that provides a remote conference execution environment, a game server that provides a game execution environment, or the like.

The background data provision server 70 is a server that provides, to each user terminal, background sound data and background image data of places where the users a, 11a to d, 11d have a conversation such as a conference, for example, various places such as a cafe and a conference room.

Note that, although the communication management server 50 and the background data provision server 70 are illustrated as separate servers in the drawing, they may be one server.

In a case of executing a conversation via the communication network, the user terminals a, 21a to d, 21d and the communication management server 50 are connected via a communication network 30, and sounds and images output from the user terminals a, 21a to d, 21d are transmitted and received by the user terminals a, 21a to d, 21d via the communication management server 50.

Note that various background sound data and background image data provided by the background data provision server 70 can be stored in the user terminals a, 21a to d, 21d before executing a conversation via the communication network.

In a case where the user terminals a, 21a to d, 21d have acquired background sound data and background image data in advance, connection between the background data provision server 70 and the user terminals a, 21a to d, 21d is unnecessary at the time of executing a conversation via the communication network.

Furthermore, the user terminals a, 21a to d, 21d can execute a conversation via the communication network while acquiring various background sound data and background image data provided by the background data provision server 70. In this case, connection between the background data provision server 70 and the user terminals a, 21a to d, 21d is maintained at the time of executing a conversation via the communication network.

The user terminals 21a to 21d include, for example, a communicable information processing apparatus such as a PC, a smartphone, or a tablet terminal.

Each of these user terminals 21a to 21d includes a microphone and a camera, and sound data such as a user utterance and image data such as a user's face image acquired in the user terminal 21 are transmitted to another user terminal 21 via the communication management server 50.

Note that, in a case where processing using the background sound data or the background image data provided by the background data provision server 70 is performed, the user terminals 21a to 21d can have a conversation while outputting a background sound or a background image of a certain environment such as a common environment, for example, a cafe.

Each of the user terminals 21a to 21d that executes a communication processing via the network executes, for example, sound output control or image output control for outputting a background sound or a background image of a certain environment in addition to the sound output control of the conversation sound of each user.

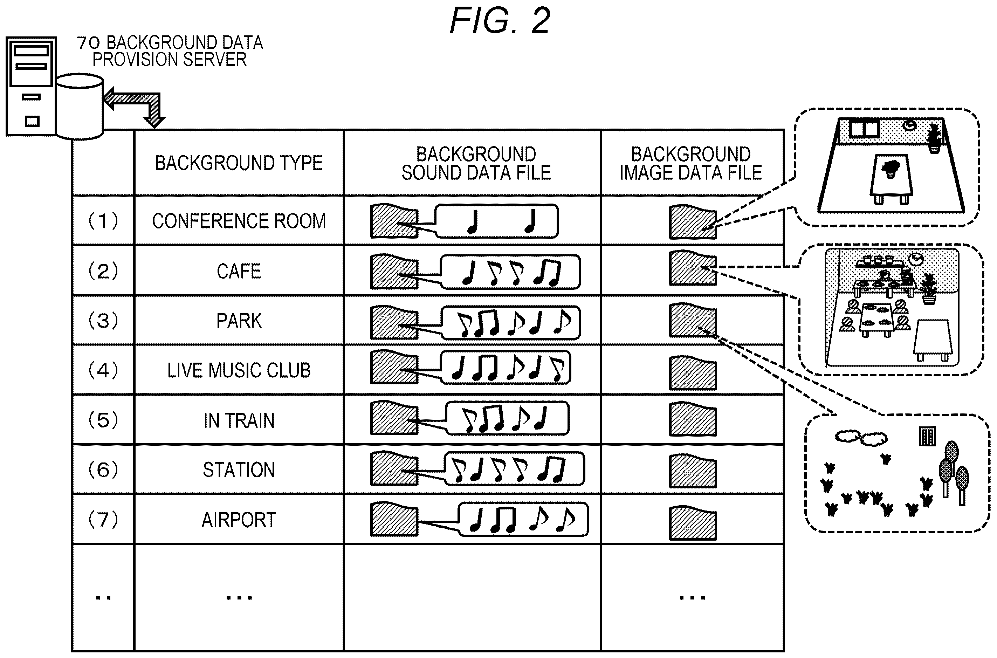

Specific examples of background sound data and background image data provided by the background data provision server 70 to the user terminal 21 will be described with reference to Fig. 2.

Fig. 2 illustrates specific examples of the background sound data and the background image data stored in a storage unit of the background data provision server 70.

As illustrated in Fig. 2, the storage unit of the background data provision server 70 stores, for example, the following background data (background sound data and background image data) corresponding to various backgrounds.

    (1) Conference room
    (2) Cafe
    (3) Park
    (4) Live music club
    (5) In train
    (6) Station

(7) Airport

The background sound data is various sound data generated in the space constituting the background. In a case where there are a wall, a ceiling, a floor, and the like constituting a space in the background space, the background sound data is sound data generated in consideration of echoes from these walls and the like.

For example, in a case where the background sound data is background sound data of a cafe, the sound data includes sound of a coffee siphon in the cafe space, speaking voice of a person in the cafe, and the like, and further includes reverberation sound from a wall of the cafe.

The background data provision server 70 generates sound data files in various environments and stores the sound data files in the storage unit. For example, an impulse response of a real space is analyzed to generate a sound data file storing sound data corresponding to various actual spaces.

Further, the image data stored in the image data file is three-dimensional image data or two-dimensional image data, and is image data capable of displaying images from various viewpoint directions. Each user can display images from various directions by operating (sliding with a finger or the like) a display unit of the user terminal.

As described above, various background sound data and background image data held by the background data provision server 70 can be stored in the user terminals a, 21a to d, 21d before executing a conversation via the communication network.

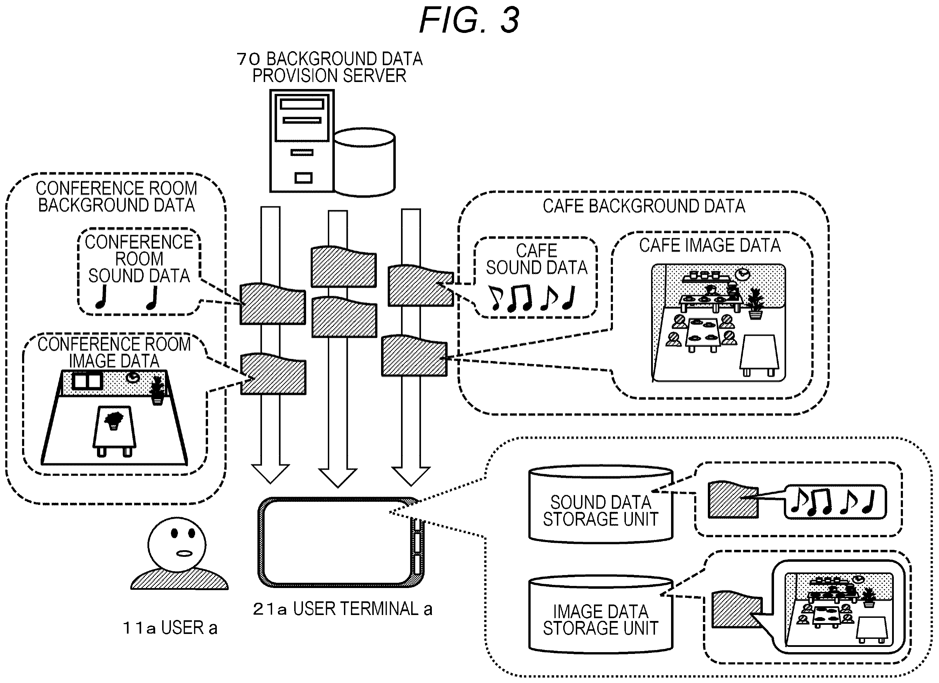

Fig. 3 is a diagram for explaining a processing example in a case where background data (background sound data and background image data) is stored in the user terminal 21.

Fig. 3 illustrates the background data provision server 70 and the user terminal a, 21a. The user terminal a, 21a can access the background data provision server 70, acquire (download) various background data (background sound data and background image data) from the background data provision server 70, and store the acquired background data in the storage units of the user terminal a, 21a.

The example illustrated in Fig. 3 illustrates an example in which various background sound data acquired from the background data provision server 70 are stored in the sound data storage unit which is the storage unit of the user terminal a, 21a, and various background image data acquired from the background data provision server 70 are stored in the image data storage unit.

Note that, although Fig. 3 illustrates a background data acquisition processing example by the user terminal a, 21a, the other user terminals b to d can also execute similar processing to acquire (download) various background data (background sound data and background image data) from the background data provision server 70 and store the acquired background data in the storage unit of each user terminal.

[2. (First Embodiment) Example of Executing Sound Control Based on Position of User]

Next, as a first embodiment, an embodiment in which sound control based on the position of the user is executed will be described.

[2-1. Configuration Example of User Terminal of First Embodiment]

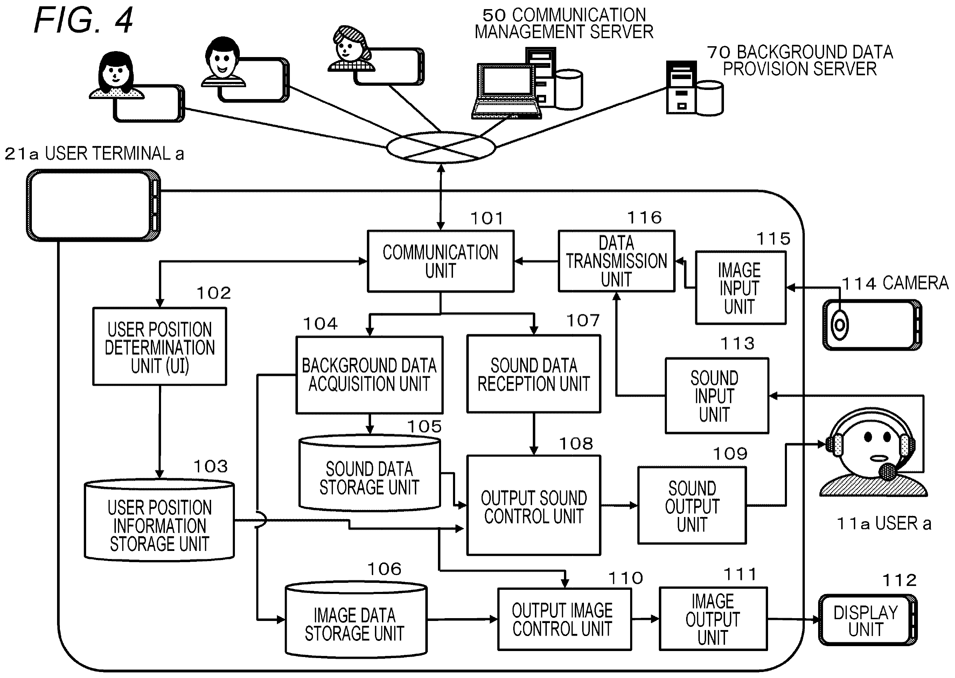

First, a configuration example of a user terminal used in the present first embodiment will be described with reference to Fig. 4.

Fig. 4 illustrates a configuration example of the user terminal a, 21a used by the user a, 11a who are users participating in a conversation via the communication network described with reference to Fig. 1.

Note that all of the user terminals a, 21a to d, 21d used by the users a, 11a to d, 11d have a configuration substantially similar to the configuration example illustrated in Fig. 4.

Note that, as described above, the user terminals 21a to 21d include, for example, a communicable information processing apparatus such as a PC, a smartphone, or a tablet terminal.

As illustrated in Fig. 4, the user terminal a, 21a includes a communication unit 101, a user position determination unit (UI) 102, a user position information storage unit 103, a background data acquisition unit 104, a sound data storage unit 105, an image data storage unit 106, a sound data receiving unit 107, an output sound control unit 108, a sound output unit 109, an output image control unit 110, an image output unit 111, a display unit 112, a sound input unit 113, a camera 114, an image input unit 115, and a data transmission unit 116.

The communication unit 101 executes communication processing via the communication network. Data transmission/reception processing with another user terminal, the communication management server 50, and the background data provision server 70 is executed.

In a case where a plurality of users has a conversation via a network, the user position determination unit (UI) 102 executes processing of determining the position of each user. For example, the user position can be determined using a user interface (UI).

For example, as described with reference to Fig. 1, in a case where the four users a, 11a to d, 11d have a conversation via the network, the processing of determining the positions of these four users is executed.

The user position determination processing is processing executed to control a direction in which a voice of each user is heard. Specific examples of the user position determination processing and the sound control processing according to the determined user position will be described later.

The user position information storage unit 103 is a storage unit for storing the user position information determined by the user position determination unit (UI) 102. For example, as described with reference to Fig. 1, in a case where four users a, 11a to d, 11d have a conversation via the network, the position information of these four users is stored.

The user position information stored in the user position information storage unit 103 is output to the output sound control unit 108 and the output image control unit 110.

The output sound control unit 108 and the output image control unit 110 execute output control of the utterance sound of each user (control of the direction in which each user utterance is heard, and the like), output control of the user image (avatar image or real image), and the like in accordance with the user position information stored in the user position information storage unit 103.

The background data acquisition unit 104 acquires (downloads) various background data (background sound data and background image data) from the background data provision server 70 via the communication unit 101. Background sound data constituting the background data acquired by the background data acquisition unit 104 from the background data provision server 70 is stored in the sound data storage unit 105. The background image data is stored in the image data storage unit 106.

The background sound data stored in the sound data storage unit 105 is selectively acquired and output via the sound output unit 109 under the control of the output sound control unit 108.

Further, the background image data stored in the image data storage unit 106 is selectively acquired and output to the display unit 112 via the image output unit 111 under the control of the output image control unit 110.

The sound data receiving unit 107 receives sound data such as a voice of another conversation participant user via the communication unit 101 and outputs the sound data to the output sound control unit 108.

The output sound control unit 108 outputs the sound data such as the voice of another conversation participant user input from the sound data receiving unit 107 and the background sound data selected and acquired from the sound data storage unit 105 to a speaker such as a headphone worn by the user via the sound output unit 1109.

Note that the output sound control unit 108 also executes output control of the utterance sound of each user, specifically, control of the direction in which each user utterance is heard and the magnitude of the voice, according to the position of each user stored in the user position information storage unit 103.

The output image control unit 110 executes control to output the background image data selected and acquired from the image data storage unit 106 to the display unit 112 via the image output unit 111.

Note that the output image control unit 110 also performs control to display a virtual image (character image) indicating each user such as an avatar image indicating each user or a real image of each user so as to be superimposed on the background image according to the position of each user stored in the user position information storage unit 103.

Note that a virtual image (character image) indicating each user, such as an avatar image indicating each user, which is stored in advance in the image data storage unit 106, is used. Alternatively, an image received from each user terminal via the communication unit 101 may be used.

In a case where the real image of each user is displayed, the image received from each user terminal via the communication unit 101 is used.

The sound input unit 113 inputs sound data such as an utterance sound of a user via a microphone and transmits the sound data to each device such as each user terminal connected to a network via the data transmission unit 116 and the communication unit 101.

The image input unit 115 inputs image data such as a face image of the user photographed by the camera 114, and transmits the image data to each device such as each user terminal connected to a network via the data transmission unit 116 and the communication unit 101.

[2-2. Specific Example of Sound Control Processing Based on User Position]

Next, a specific example of processing executed by the user terminal 21 of the present first embodiment, that is, sound control processing based on the user position will be described.

As described above with reference to Fig. 4, the output sound control unit 108 of the user terminal executes output control of the utterance sound of each user, specifically, control of the direction in which each user utterance is heard and control of the magnitude of the voice, according to the position of each user stored in the user position information storage unit 103.

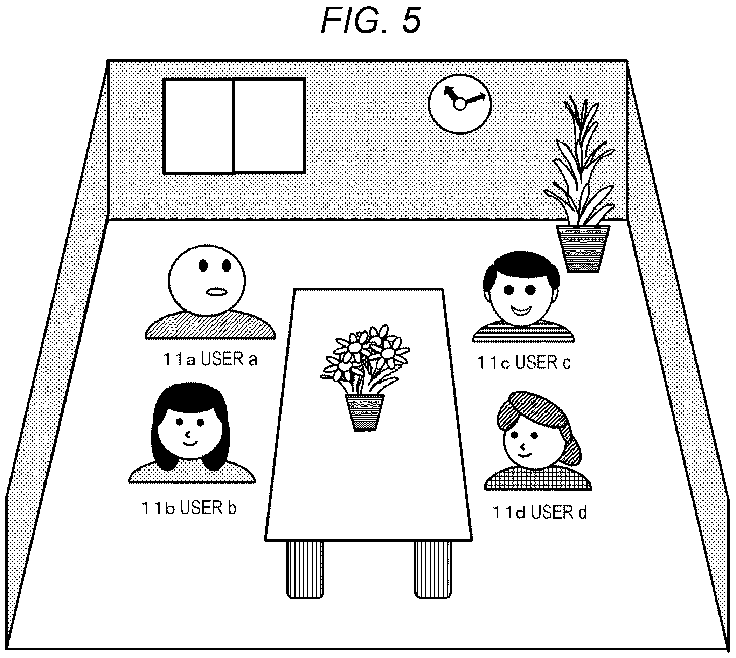

A specific example of the sound control processing executed by the output sound control unit 108 of the user terminal will be described with reference to Fig. 5 and subsequent drawings.

A processing example in a case where four users a, 11a to d, 11d illustrated in Fig. 1 hold an online meeting will be described.

As illustrated in Fig. 5, the four users a, 11a to d, 11d perform an online conference in which a conference is set to be held in one conference room.

In this case, the image data of the conference room is used as the background image data, and the sound data of the conference room is used as the background sound data. Note that the sound data of the conference room is, for example, substantially silent sound data, actual sound data of air-conditioned sound, or the like.

First, before starting an online meeting, the position of each user is determined. Specifically, processing of determining the positions of the four users a, 11a to d, 11d is performed as illustrated in Fig. 5, for example.

For example, after the users a, 11a to d, 11d connect the user terminals a, 21a to d, 21d via the communication network, setting of the background and the position of each user are discussed and determined.

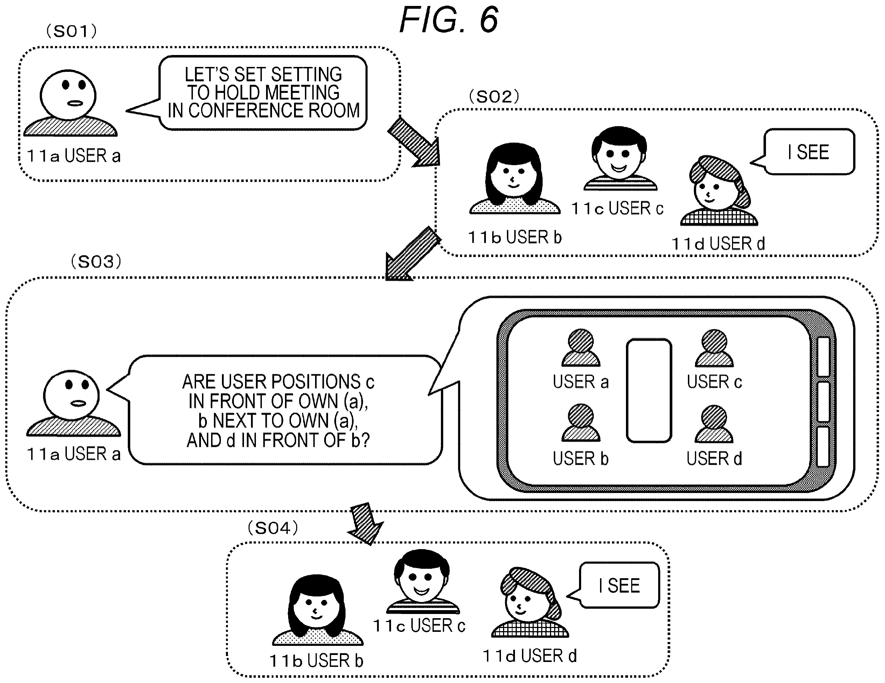

An example of a processing sequence for setting the background and determining the position of each user will be described with reference to Fig. 6.

The processing sequence for setting the background and determining the position of each user can be executed by, for example, the procedures of steps (S01) to (S04) in Fig. 6.

First, in step S01, the user a, 11a make a proposal such as

"Let's set the setting to hold a meeting in the conference room"

to the other users b to d as a proposal for setting the online conference.

When all the users a to d approve the proposal in step S02, each user operates each user terminal to execute an operation for selecting background data of the conference room as background data (background image data and background sound data). For example, a background data selection UI is displayed on each user terminal, and the user selects background data of the conference room by using the UI.

With the background data selection processing, the output sound control unit 108 of each user terminal is set to input the sound data of the conference room from the sound data storage unit 105 and output the sound data of the conference room via the sound output unit 109.

Similarly, the output image control unit 110 of each user terminal is set to input the image data of the conference room from the image data storage unit 106 and output the background image of the conference room to the display unit 112 via the image output unit 111.

Next, as illustrated in Fig. 6, in step S03, the user a, 11a propose the setting of the user position in the online meeting to the other users b to d as follows.

"Are the user positions c in front of own (a), b next to own (a), and d in front of b?"

Such a user position is proposed.

This processing can be executed using the user position determination unit (UI) 102 of the user terminal described with reference to Fig. 4.

For example, user arrangement data as illustrated on the right side of (S03) in Fig. 6 is displayed on each user terminal, and each user can confirm the proposed user position of the user a, 11a.

Finally, in step S04, when all the users a to d approve the positions of the users a to d in the conference room proposed by the user a, 11a, an online conference is then started.

Note that the position information of the users a to d set by the user a, 11a using the user position determination unit (UI) 102 of the user terminal a, 21a is also transmitted to the user terminals b to d, and the user position information is stored in the user position information storage unit 103 in each user terminal.

Thereafter, the output sound control unit 108 of each user terminal executes the sound direction control and the volume control of the utterance sound of each user according to the user position stored in the user position information storage unit 103.

Furthermore, the output image control unit 110 of each user terminal superimposes and displays the avatar image or the real image of each user on the background image data of the conference room according to the user position stored in the user position information storage unit 103.

That is, the image data as illustrated in Fig. 5 is displayed on the display unit of the user terminal of each of the users a to d.

After these settings are completed, the online meeting is started.

After starting the online meeting, each of the users a to d can listen to the utterance of another user as a sound uttered from the position of each user set according to the sequence described with reference to Fig. 6.

In other words, the output sound control units 108 of the user terminals a, 21a to d, 21d of the users a to d respectively execute the sound direction control and the volume control of the utterance sound of each user according to the user positions stored in the user position information storage unit 103. With this output sound control processing, each user can listen to the utterance of another user as if it were uttered from each user setting position.

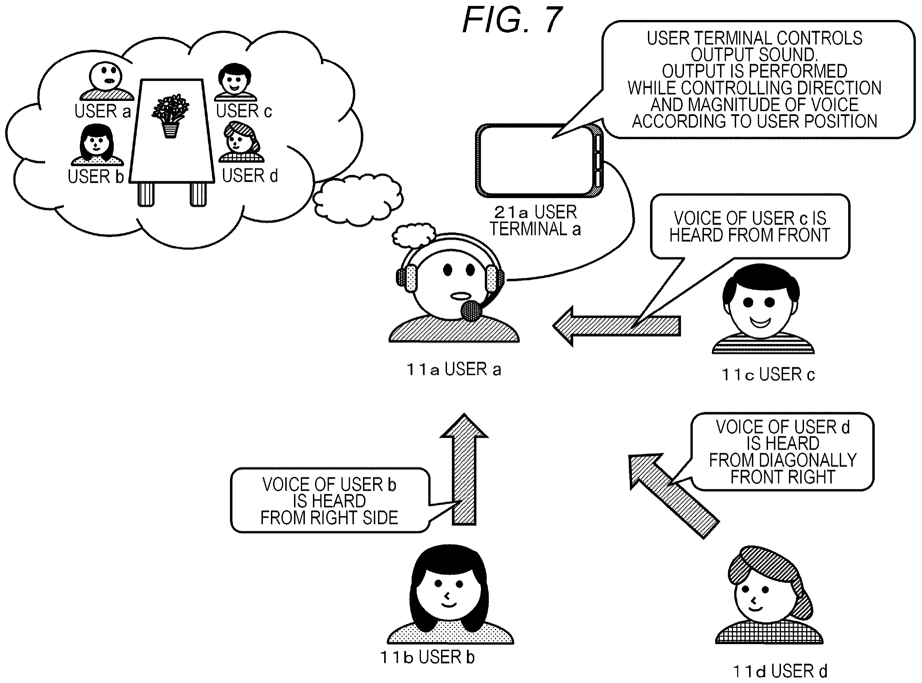

A specific example will be described with reference to Fig. 7.

Fig. 7 illustrates a specific example in which the user a, 11a recognize from which direction the utterances of the other users b to d have been made under the control of the user terminal a, 21a used by the user a, 11a.

As illustrated in Fig. 7, the recognition directions of the utterances of the other users b to d by the user a, 11a are as follows.

The voice of the user b, 11b is heard from the right side of the user a, 11a.

The voice of the user c, 11c is heard from the front of the user a, 11a.

The voice of the user b, 11b is heard from diagonally front right of the user a, 11a.

This is an effect of the output sound control processing of the output sound control unit 108 of the user terminal a, 21a.

The output sound control unit 108 of the user terminal a, 21a executes sound direction control and volume control of the utterance sound of each user according to the user position stored in the user position information storage unit 103. With this output sound control processing, the user a, 11a can listen to the utterances of the other users b to d as if they were uttered from the user positions illustrated in Fig. 5.

The output sound control processing executed by the output sound control unit 108 of the user terminal a, 21a is sound direction control processing and volume control processing of the user utterance sound according to the user position stored in the user position information storage unit 103.

In order to execute this processing, the output sound control unit 108 calculates and holds in advance sound output control parameters corresponding to various sound source positions around the position of the user who listens to the sound as the center position, and performs output control of the sound from each position using the control parameters.

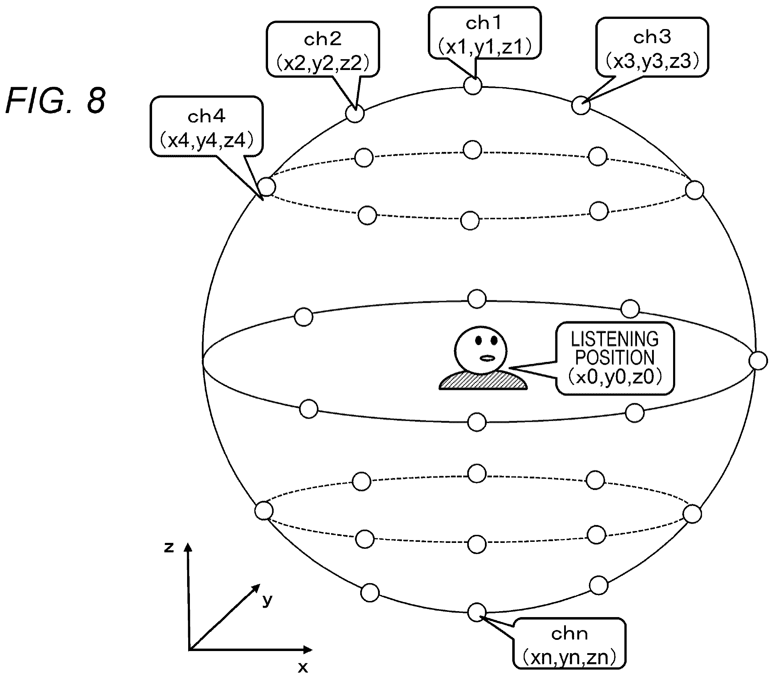

A calculation processing example of the sound output control parameter applied to the output sound control processing executed by the output sound control unit 108 will be described with reference to Fig. 8.

Fig. 8 illustrates an example in which the position of the user listening to the sound = listening position is set to the center position (x0, y0, z0) of the xyz three-dimensional space, and various virtual sound source positions (x1, y1, z1) to (xn, yn, zn) are set around the center position.

Sound output channels from the virtual sound source positions (x1, y1, z1) to (xn, yn, zn) are ch1 to chn.

A channel-corresponding sound control parameter is calculated for each of the sound output channels ch1 to chn. That is, the output control parameter of the sound to be output to the sound output unit (speaker) of the user terminal of the user located at the center position (x0, y0, z0) or each sound output unit (speaker) of the LR of the headphone or earphone worn by the user is calculated.

The channel-corresponding sound control parameter is a parameter for causing the user located at the center position (x0, y0, z0) to recognize the sound of each of the channels ch1 to chn as the output sound from the sound source positions (x1, y1, z1) to (xn, yn, zn) of each channel.

Note that the channel-corresponding sound control parameter is a parameter including not only a control parameter for a direction in which a sound is heard but also a sound volume control parameter for adjusting the loudness of sound.

That is, the sound volume control parameter according to the distance between the center position (x0, y0, z0) and each channel position is also included, and control is performed such that the sound volume is large at a channel position close to the center position (x0, y0, z0) and is small at a position far from the center position.

In this manner, the output sound control unit 108 calculates and holds in advance the sound output control parameters corresponding to various sound source positions around the position of the user who listens to the sound as the center position.

The output sound control unit 108 executes sound output control for the utterance of each user using the parameter corresponding to the setting position of the uttering user using the control parameter calculated in advance.

Note that, in a case where the setting position of the uttering user is between a plurality of channel positions illustrated in Fig. 8, control parameters of a plurality of channel positions around the setting position of the uttering user are synthesized, a parameter corresponding to the setting position of the uttering user is calculated, and sound output control for the user utterance is executed using the calculated parameter.

With this control processing, as described with reference to Fig. 7, the recognition directions of the utterances of the other users b to d by the user a, 11a are as follows.

The voice of the user b, 11b is heard from the right side of the user a, 11a.

The voice of the user c, 11c is heard from the front of the user a, 11a.

The voice of the user b, 11b is heard from diagonally front right of the user a, 11a.

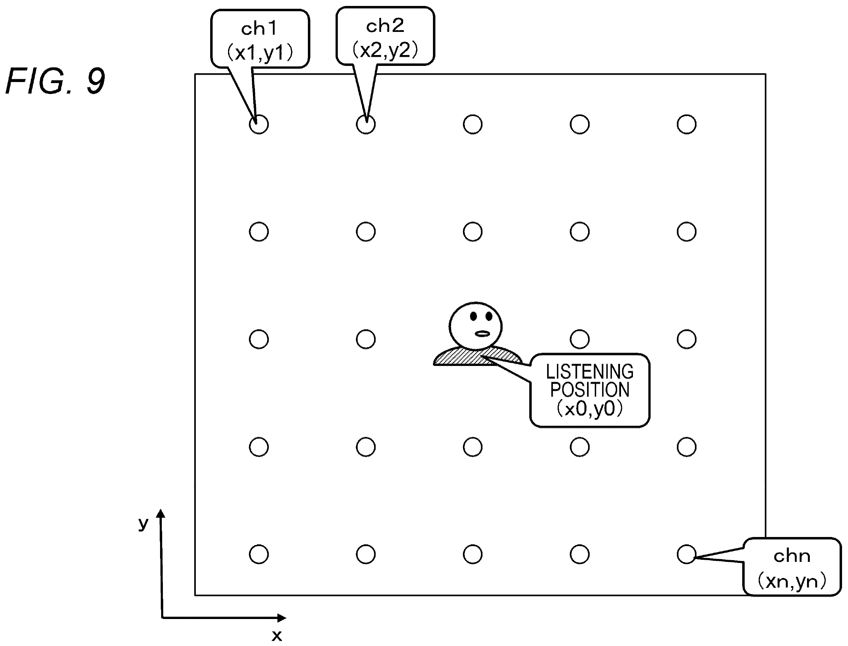

Note that, in the calculation example of the control parameter illustrated in Fig. 8, a plurality of channels is set around the three-dimensional space centered on the position of the user who is a listener. However, for example, as illustrated in Fig. 9, a virtual sound source position may be set on an xy two-dimensional plane, and the control parameter corresponding to each position may be calculated and used.

Even if such simple processing is performed, it is possible to recognize an utterance direction in at least a two-dimensional direction.

In Fig. 9, the position of the user listening to the sound = listening position is set as the center position (x0, y0) of the xy two-dimensional space, and various virtual sound source positions (x1, y1) to (xn, yn) are set around the center position.

Sound output channels from the virtual sound source positions (x1, y1) to (xn, yn) are ch1 to chn.

A channel-corresponding sound control parameter is calculated for each of the sound output channels ch1 to chn. That is, the output control parameter of the sound to be output to each of the LR sound output units (speakers) of the headphones or earphones worn by the user located at the center position (x0, y0) is calculated.

Even in a case where the channel-corresponding control parameter on the dimensional plane is calculated and used by such simple processing, it is possible to recognize the utterance direction in at least the two-dimensional direction.

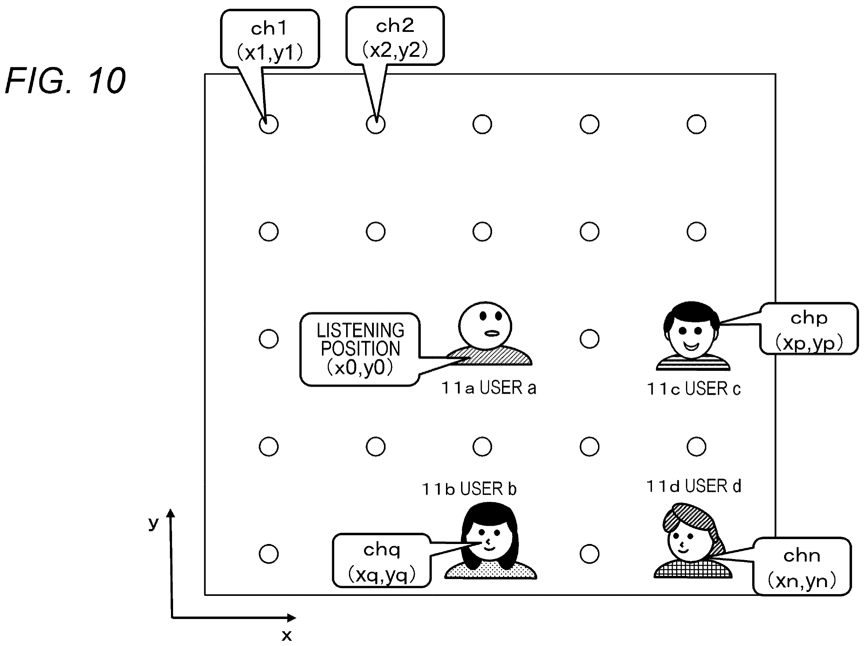

A control processing example in the case of the user arrangement illustrated in Fig. 5 described above using the channel-corresponding control parameter on the two-dimensional plane calculated by the processing described with reference to Fig. 9 will be described with reference to Fig. 10.

The example illustrated in Fig. 10 is a diagram for explaining an output control processing example of the utterance sounds of the other users b to d executed by the output sound control unit 108 of the user terminal a, 21a of the user a, 11a.

The position of the user a, 11a is set at the center position (x0, y0) of the xy two-dimensional plane illustrated in Fig. 10.

The other user b, 11b to d, 11d are located at positions determined according to the sequence illustrated in Fig. 6 described above, that is, arranged as illustrated in Fig. 5 described above.

In other words, the arrangement is as follows:

the user b, 11b is on the right side of the user a, 11a,
the user c, 11c is in front of the user a, 11a, and
the user d, 11d is on the right side of the user a, 11a.


As illustrated in Fig. 10, this user arrangement is associated with the virtual sound source positions in the xy two-dimensional plane for which the channel-corresponding parameters have been calculated.

As a result, as illustrated in Fig. 10,
The user b, 11b is set at a position of chq(xq, yp).

The user c, 11c is set at a position of chp(xp, yp).

The user d, 11d is set at a position of chn(xn, yn).

In this manner, the user position can be associated with each channel position.

The output sound control unit 108 of the user terminal a, 21a of the user a, 11a executes output control of the utterance sound of each of the users b to d using the sound output control parameter corresponding to the channel position corresponding to each user according to the channel position corresponding to each of the users b to d as illustrated in Fig. 10.

That is,
For the utterance sound of the user b, 11b input via the network, the control sound using the control parameter corresponding to chq is output to the sound output unit (headphone) of the user a, 11a.

For the utterance sound of the user c, 11c, the control sound using the control parameter corresponding to chp is output to the sound output unit (headphone) of the user a, 11a.

For the utterance sound of the user d, 11d, control sound using the control parameter corresponding to chn is output to the sound output unit (headphone) of the user a, 11a.

Note that, in a case where the setting position of the uttering user is between the plurality of channel positions illustrated in Fig. 10, as described above, the control parameters of the plurality of channel positions around the setting position of the uttering user are synthesized, the parameter corresponding to the setting position of the uttering user is calculated, and the sound output control for the user utterance is executed using the calculated parameter.

By executing such sound output control, as described above with reference to Fig. 7, the recognition directions of the utterances of the other users b to d by the user a, 11a are set as follows.

The voice of the user b, 11b is heard from the right side of the user a, 11a.

The voice of the user c, 11c is heard from the front of the user a, 11a.

The voice of the user b, 11b is heard from diagonally front right of the user a, 11a.

As described above, the output sound control unit 108 of the user terminal a, 21a executes sound direction control and volume control of the utterance sound of each user according to the user position stored in the user position information storage unit 103. With this output sound control processing, the user a, 11a can listen to the utterances of the other users b to d as if they were uttered from the respective user positions as illustrated in Fig. 7.

Although Fig. 7 described above illustrates a processing example by the output sound control unit 108 of the user terminal a, 21a, the other users b to d also execute similar processing in the respective user terminals b, 21b to d, 21d.

Each of the user terminals b, 21b to d, 21d of the users b to d sets the user himself/herself as the center position, analyzes the positions of the other users, and performs sound control of each user such that the utterance of the other user is uttered from each user position.

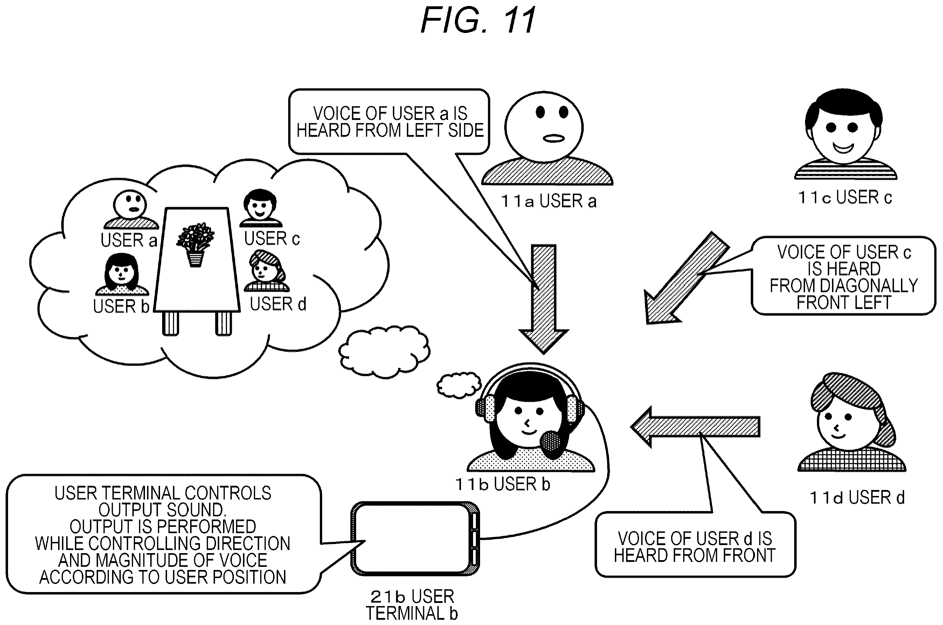

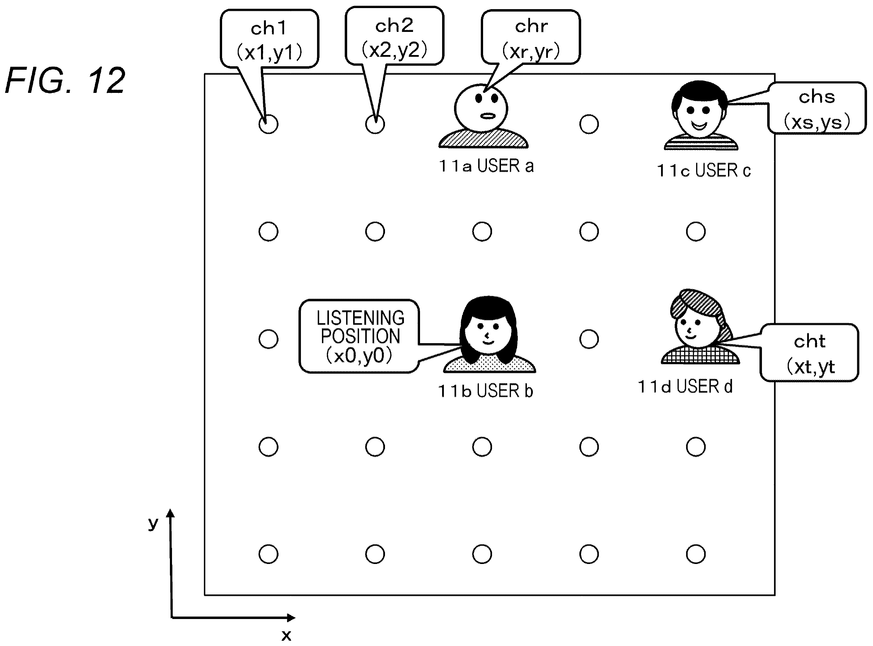

A processing example of the output sound control unit 108 of the user terminal b, 21b of the user b, 11b will be described with reference to Figs. 11 and 12.

Fig. 11 illustrates a specific example in which the user b, 11b recognize from which direction the utterances of the other users a, c, and d have been made under the control of the user terminal b, 21b used by the user b, 11b.

As illustrated in Fig. 11, recognition directions of utterances of the other users a, c, and d by the user b, 11b are as follows.

The voice of the user a, 11a is heard from the left side of the user b, 11b.

The voice of the user c, 11c is heard from diagonally front left of the user b, 11b.

The voice of the user b, 11b is heard from the front of the user b, 11b.

This is an effect of the output sound control processing of the output sound control unit 108 of the user terminal b, 21b.

The output sound control unit 108 of the user terminal b, 21b executes sound direction control and volume control of the utterance sound of each user according to the user position stored in the user position information storage unit 103. With this output sound control processing, the user b, 11b can listen to the utterances of the other users a, c, and d as if they were uttered from the user positions illustrated in Fig. 11.

Fig. 12 is a diagram illustrating a specific example of output sound control processing of the output sound control unit 108 of the user terminal b, 21b.

The output sound control unit 108 of the user terminal b, 21b sets the position of the user b, 11b at the center position $(x0, y0)$ of the xy two-dimensional plane illustrated in Fig. 12.

The other users a, c, and d are located at positions determined according to the sequence illustrated in Fig. 6 described above, that is, arranged as illustrated in Fig. 5 described above.

In other words, the arrangement is as follows:

the user a, 11a is on the left side of the user b, 11b,
the user c, 11c is on the left front of the user b, 11b, and
the user d, 11d is in front of the user b, 11b.

As illustrated in Fig. 12, this user arrangement is associated with the virtual sound source positions in the xy two-dimensional plane for which the channel-corresponding parameters have been calculated.

As a result, as illustrated in Fig. 10,
The user a, 11a is set at a position of chr(xr, yr).

The user c, 11c is set at a position of chs(xs, ys).

The user d, 11d is set at a position of cht(xt, yt).

In this manner, the user position can be associated with each channel position.

The output sound control unit 108 of the user terminal b, 21b of the user b, 11b executes output control of the utterance sound of each of the users a, c, and d using the sound output control parameter corresponding to the channel position corresponding to each user according to the channel position corresponding to each of the users a, c, and d as illustrated in Fig. 12.

With this processing, the user b, 11b can listen to the utterances of the other users a, c, and d as if they were uttered from the respective user positions as illustrated in Fig. 11.

Note that the output sound control unit 108 executes not only the direction control of the utterance according to the user but also the volume control according to the user position. That is, the volume of the far user is controlled to be smaller than the volume of the near user.

As described above, in the present embodiment, the utterance of each user is controlled so as to be heard from the setting position of each user according to the position of each user stored in the user position information storage unit 103, and it is possible to enjoy a feeling similar to that in a case where each user actually exists in one same space.

Note that the processing example described with reference to Figs. 5 to 12 is an example of setting four users a to d to hold a conference in a conference room. In this case, the output sound control unit 108 of each of the user terminals a, 21a to d, 21d acquires the background sound of the conference room from the sound data storage unit 105 storing the background sound, and outputs the acquired background sound from the sound output unit 109.

That is, each user listens to the utterance sound of each user together with the background sound of the conference room.

However, as described above, the background sound of the conference room is substantially silent sound data, actual sound data of air-conditioned sound, or the like.

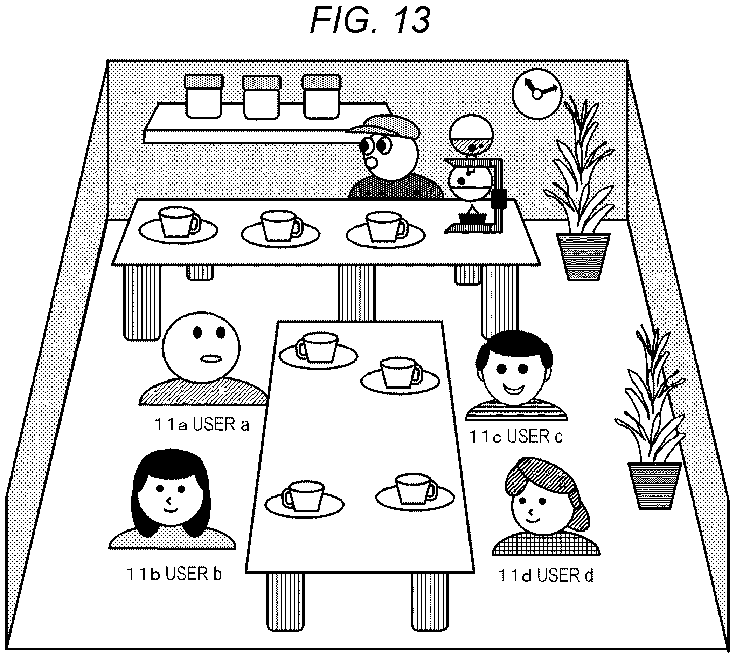

An example of a case where the four users a to d have a conversation in an environment where various background sounds exist will be described with reference to Fig. 13 and subsequent drawings.

Fig. 13 illustrates an example of a case where the four users a to d have a conversation using background data of a cafe where various background sounds exist.

The user arrangement is similar to the case of the conference room described above with reference to Fig. 5.

The output sound control unit 108 of each of the user terminals a, 21a to d, 21d acquires the background sound of the cafe from the sound data storage unit 105 storing the background sound, and outputs the background sound from the sound output unit 109.

As illustrated in Fig. 13, in a case where the background is a cafe, the background sound includes, for example, sound of a coffee siphon, sound of a coffee cup, BGM, and the like.

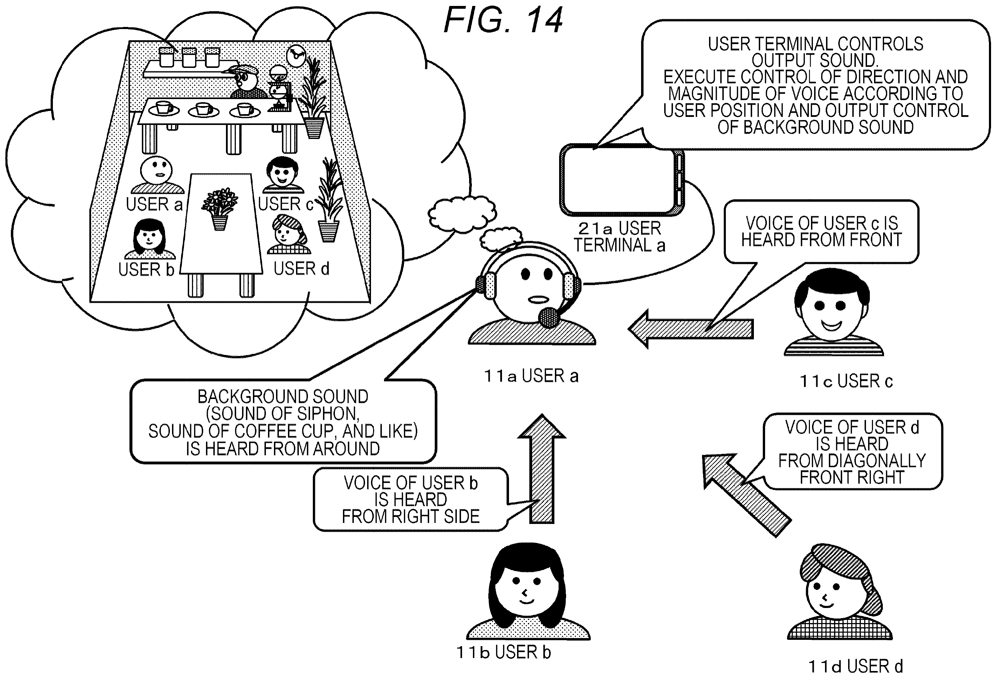

A specific example of the output sound control processing executed by the output sound control unit 108 of the user terminal when the background is the setting of the cafe as described above will be described with reference to Fig. 14.

Fig. 14 illustrates an output sound control processing example executed by the output sound control unit 108 of the user terminal a, 21a used by the user a, 11a.

As illustrated in Fig. 14, the output sound control unit 108 of the user terminal a, 21a acquires a background sound of a cafe, for example, a background sound including a sound of a coffee siphon, a sound of a coffee cup, BGM, or the like from the sound data storage unit 105, and outputs the background sound via the sound output unit 109. Furthermore, direction control of utterances of other users b to d is also executed as follows.

The voice of the user b, 11b is controlled to be heard from the right side of the user a, 11a.

The voice of the user c, 11c is controlled to be heard the front of the user a, 11a.

The voice of the user b, 11b is controlled to be heard from diagonally front right of the user a, 11a.

By executing such control, the user a, 11a can obtain a feeling that the four users a to d gather in one cafe to have a conversation.

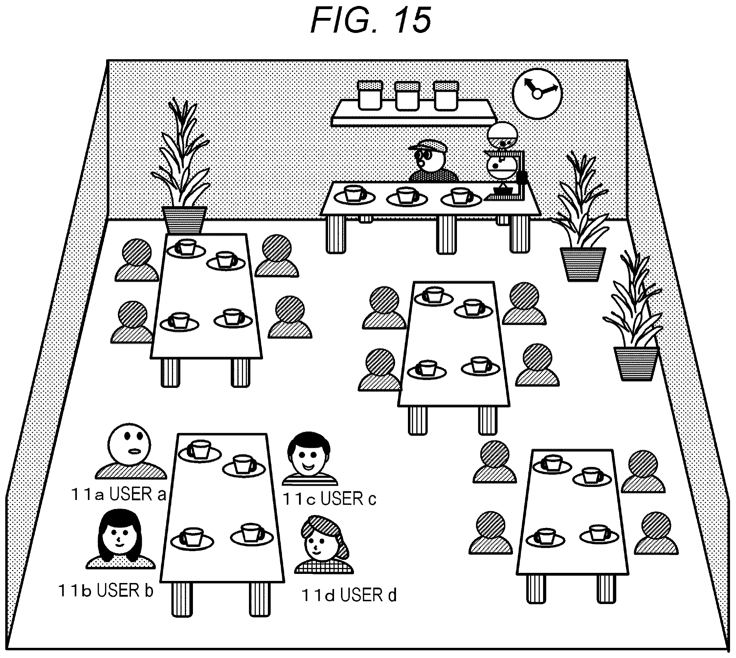

Next, a processing example in a case where a cafe where many people are around is used as background data will be described with reference to Fig. 15.

Fig. 15 illustrates an example of a case where four users a to d have a conversation using background data of a cafe where many people are around.

The user arrangement is similar to the case of the conference room described above with reference to Fig. 5.

The output sound control unit 108 of each of the user terminals a, 21a to d, 21d acquires the background sound of the cafe where many people are around from the sound data storage unit 105 storing the background sound, and outputs the background sound from the sound output unit 109.

As illustrated in Fig. 15, in a case where the background is the cafe where many people are around, the background sound includes speaking voices of many people, sound of a coffee cup, BGM, and the like.

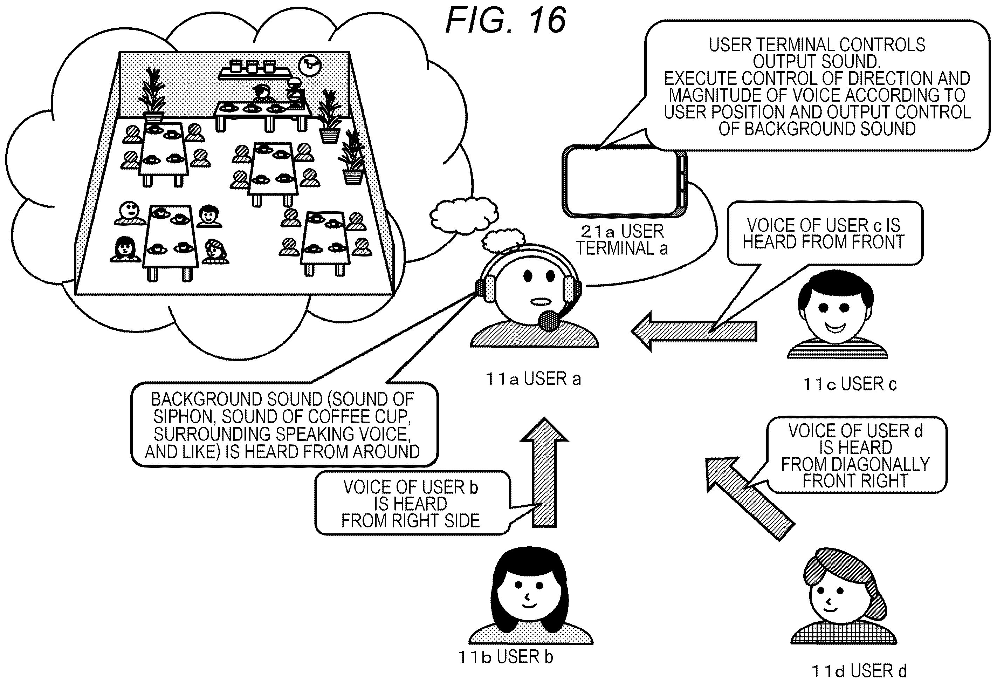

A specific example of the output sound control processing executed by the output sound control unit 108 of the user terminal in the setting of the cafe where many people are around the background as described above will be described with reference to Fig. 16.

Fig. 16 illustrates an output sound control processing example executed by the output sound control unit 108 of the user terminal a, 21a used by the user a, 11a.

As illustrated in Fig. 16, the output sound control unit 108 of the user terminal a, 21a acquires, from the sound data storage unit 105, a background sound of the cafe where many people are around, for example, a background sound including speaking voices of many people, a sound of a coffee cup, BGM, and the like, and outputs the background sound via the sound output unit 109. Furthermore, direction control of utterances of other users b to d is also executed as follows.

The voice of the user b, 11b is controlled to be heard from the right side of the user a, 11a.

The voice of the user c, 11c is controlled to be heard the front of the user a, 11a.

The voice of the user b, 11b is controlled to be heard from diagonally front right of the user a, 11a.

By executing such control, the user a, 11a can obtain a feeling that the four users a to d gather in a cafe with many people to have a conversation.

[3. (Second Embodiment) Embodiment of Executing Sound Output Control and Display Control According to Degree of Intimacy Between Users]

Next, as a second embodiment, an embodiment in which sound output control and display control according to the degree of intimacy between users are executed will be described.

[3-1. Specific Processing Example of Sound Output Control and Display Control Processing According to Degree of Intimacy Between Users]

First, a specific processing example of sound output control and display control processing according to the degree of intimacy between users will be described.

In the first embodiment described above, for example, the position of each of the plurality of users participating in the conversation is determined in advance, and the sound output control of the user utterance and the display control of the user image (avatar or real image) are executed according to the determined position of each user.

Examples described below are examples in which, for example, the position of each of a plurality of users participating in a conversation is not determined in advance, and sound output control of a user utterance and display control of a user image (avatar or real image) are executed according to the degree of intimacy between the users.

For example, the user terminal a, 21a of the user a, 11a executes sound output control for setting the volume of the utterance of the user who is in a good relationship (has high degree of intimacy) with the user a, 11a to be large, and further executes display control for setting the display position to a position close to the display position of the user a or a front position.

On the other hand, the sound output control for setting the volume of the utterance of the user who is in a bad relationship (has low degree of intimacy) with the user a, 11a to be small is execute, and the display control for setting the display position to a position far from the display position of the user a or a position behind the display position of the user a is executed.

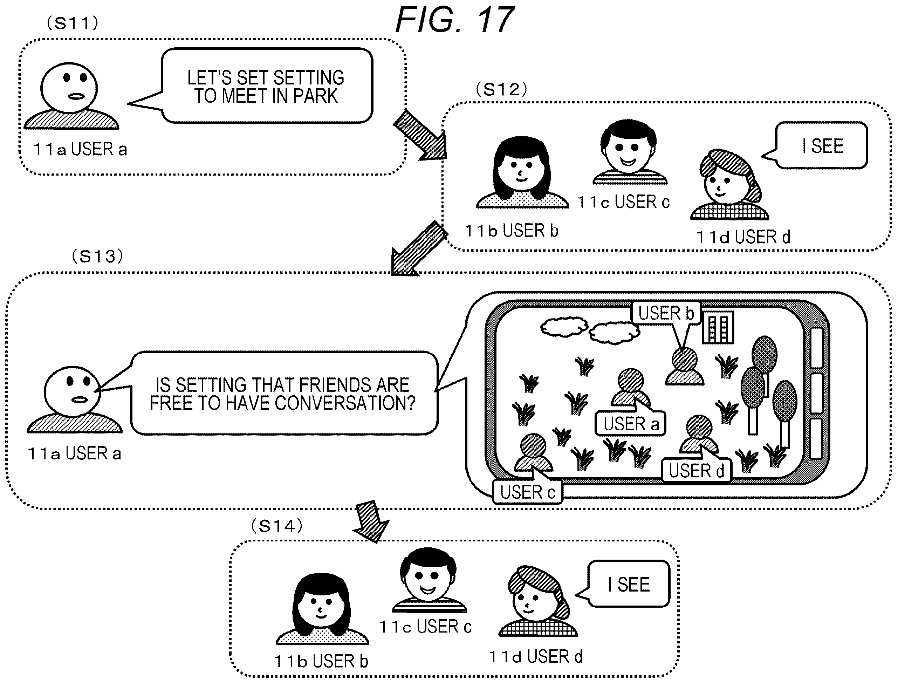

A specific processing example of the present second embodiment will be described with reference to Fig. 17 and subsequent drawings.

Fig. 17 illustrates processing similar to the preprocessing described in the first embodiment. That is, it is a diagram for explaining a sequence of background determination processing and user arrangement determination processing executed before a conversation between users is started.

The processing sequence for setting the background and determining the position of each user can be executed by, for example, the procedures of steps (S11) to (S14) in Fig. 17.

First, in step S11, the user a, 11a gives a proposal of

"Let's set the setting to meet in a park"
as a proposal of conversation setting to the other users b to d.

When all the users a to d approve the proposal in step S12, each user operates each user terminal to execute an operation for selecting the background data of the park as the background data (background image data and background sound data). For example, a background data selection UI is displayed on each user terminal, and the user selects the background data of the park by using the UI.

With this background data selection processing, the output sound control unit 108 of each user terminal is set to input the sound data of the park from the sound data storage unit 105 and output the sound data of the park via the sound output unit 109. For example, setting is performed so as to output sound data of the park including the sound of bird singing, the sound of a brook, and the like.

Similarly, the output image control unit 110 of each user terminal is set to receive the image data of the park from the image data storage unit 106 and output the background image of the park to the display unit 112 via the image output unit 111.

Next, as illustrated in Fig. 17, in step S13, the user a, 11a proposes the setting of the user positions to the other users b to d as follows.

"Is setting that friends are free to have a conversation?"

Such a proposal is made.

This processing can be executed using the user position determination unit (UI) 102 of the user terminal described with reference to Fig. 4.

For example, user arrangement data as illustrated on the right side of (S13) in Fig. 17 is displayed on each user terminal, and each user can confirm the proposed user position of the user a, 11a.

Finally, in step S14, the setting proposed by the user a, 11a, that is,

"Setting in which friends are free to have a conversation in a park"
when all the users a to d approve this setting, a conversation is then started.

The user terminal 21 is provided having a degree-of-intimacy calculation unit that calculates a degree of intimacy between users.

The degree-of-intimacy calculation unit of the user terminal 21 analyzes the conversation situation between the users, further analyzes the preference information or the like of other users input by the user, and sequentially calculates and updates the degree of intimacy between the users.

Note that a specific example of the degree-of-intimacy calculation processing will be described later.

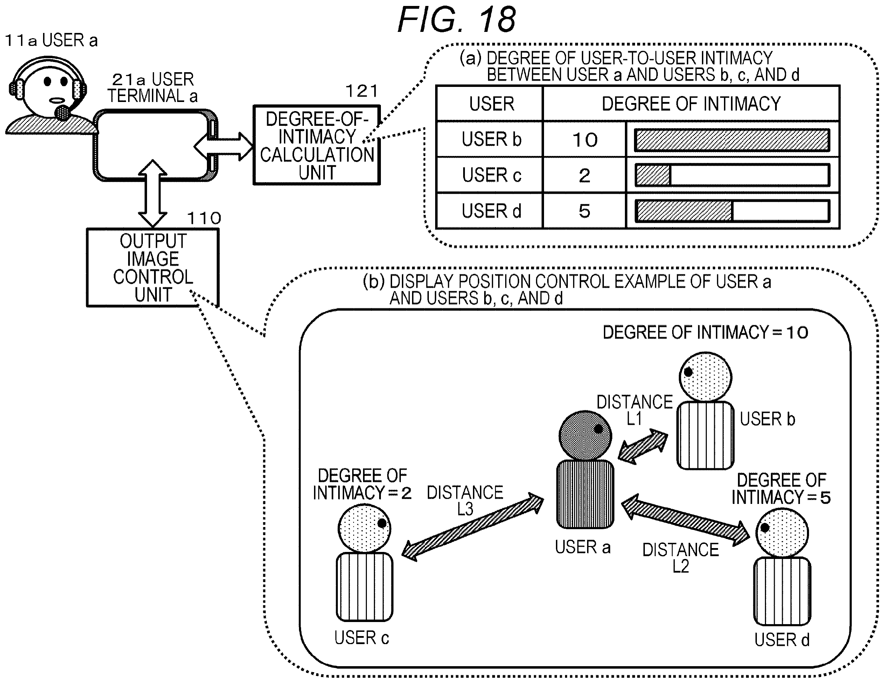

A user position setting example according to the degree of intimacy between the users, that is, a display control processing example of each user (an avatar or a real image corresponding to the user) displayed on the display unit of the user terminal 21 will be described with reference to Fig. 18.

Fig. 18 illustrates a degree-of-intimacy calculation example executed by a degree-of-intimacy calculation unit 121 of the user terminal a, 21a of the user a, 11a, and an example of control of the display position of each user according to the calculated degree of intimacy executed by the output image control unit 110.

The degree-of-intimacy calculation unit 121 analyzes preference information of each user input by the user a, 11a to the user terminal a, 21a, a conversation amount between past and current users, and the like, and calculates a degree of user-to-user intimacy between the user a, 11a and other users b to d.

The graph illustrated in Fig. 18(a) is a graph illustrating an example of the degree of intimacy calculated by the degree-of-intimacy calculation unit 121.

In this example, the degree of intimacy between the users is expressed as a numerical value of 0 to 10. The degree of intimacy between users = 0 is the lowest value of the degree of intimacy, and indicates that the users are in the worst relationship. The degree of intimacy between users = 10 is the maximum value of the degree of intimacy, and indicates that the users are in the best relationship.

The graph illustrated in Fig. 18(a) indicates the following degree of intimacy between users.

The degree of intimacy between the user a and the user b is 10, indicating that the relationship between the user a and the user b is the best.

The degree of intimacy between the user a and the user c is 2, indicating that the relationship between the user a and the user c is not so good.

The degree of intimacy between the user a and the user d is 5, indicating that the relationship between the user a and the user d is a normal state that is neither good nor bad.

The output image control unit 110 of the user terminal a, 21a inputs the degree of intimacy illustrated in Fig. 18(a), that is, the degree-of-intimacy information calculated by the degree-of-intimacy calculation unit 121, and controls the display position of each user according to the calculated degree-of-intimacy information.

The user display position according to the degree-of-intimacy information determined by the output image control unit 110 is set as illustrated in Fig. 18(b).

That is, the output image control unit 110 determines the display position of each user as follows according to the degree-of-intimacy information.

The display position of the user b having the degree of intimacy 10 who is in the best relationship with the user a is a position extremely close to the user a (distance L1), and is substantially the front position of the user a.

The display position of the user c having the degree of intimacy 2 who is in a not so good relationship with the user a is a position far from the user a (distance L3), and is substantially the back position of the user a.

The display position of the user d having the degree of intimacy 5 who is in a neither good nor bad relationship with the user a is set to a position that is neither close nor far from the user a (distance L2), and the diagonally front position of the user a is set to the display position.

Note that a magnitude relationship among the distances L1, L2, and L3 is L1<L2<L3.

As described above, the output image control unit 110 performs control to set the distance from its own user display position to be shorter as the degree of intimacy of the user is higher, and perform display at a position closer to the front of its own user display position.

On the other hand, the output image control unit 110 performs control to set the distance from its own user display position to be longer as the degree of intimacy of the user is lower, and perform display at a position farther from the front of its own user display position.

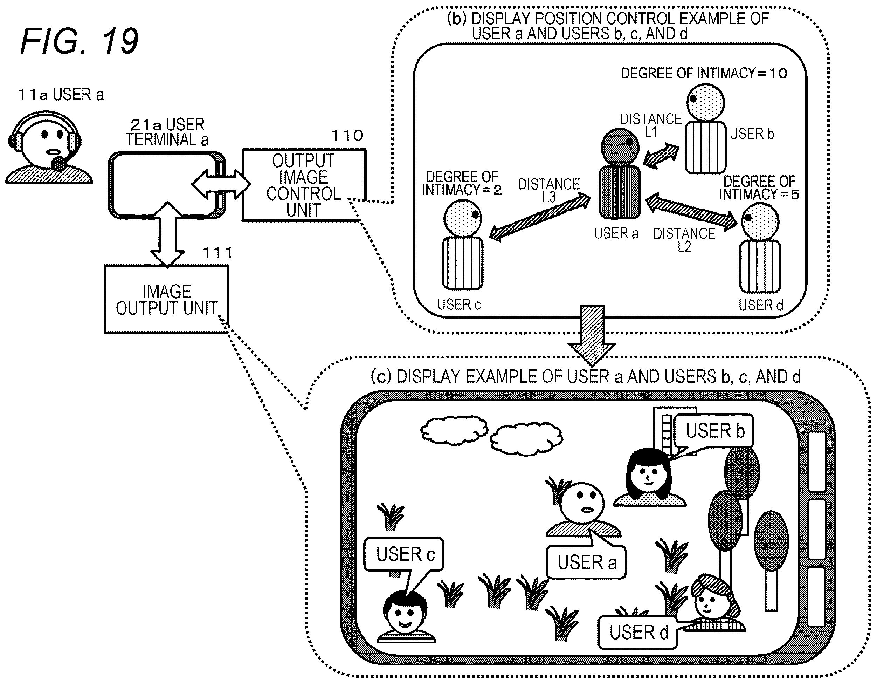

Fig. 19 is a diagram illustrating a specific example of an image displayed on the display unit 112 by the image output unit 111 according to the display position of each user determined by the output image control unit 110 according to the degree-of-intimacy information calculated by the degree-of-intimacy calculation unit 121.

Fig. 19(b) illustrates the display position of each user determined by the output image control unit 110 according to the calculated degree-of-intimacy information of the degree-of-intimacy calculation unit 121 described above with reference to Fig. 18(b).

The image output unit 111 of the user terminal a, 21a inputs the display position information of each user determined by the output image control unit 110, and displays the images (avatar or real image) of the users, that is, the users a, 11a to d, 11d on the background image (the background image of the park) as illustrated in Fig. 19(c).

The user a, 11a proceeds with a conversation with each user while viewing the image displayed on the user terminal a, 21a.

The user b who is in the best relationship with the user a, 11a is displayed at the front position near the user a, and as a result, the user a, 11a can easily talk to the user b, 11b more actively.

On the other hand, the user c who is in the worst relationship with the user a, 11a is displayed at the back position away from the user a. As a result, the user a, 11a does not talk much with the user c, 11c.

Note that the display position of each user is determined according to the degree of intimacy calculated by the degree-of-intimacy calculation unit 121 of the user terminal used by each user. Therefore, in each of the user terminals a to d used by the users a to d, the display positions of the users may be set differently.

Next, sound control processing according to the degree of intimacy executed by the user terminal 21 used by the user will be described.

As described above, for example, the user terminal a, 21a of the user a, 11a executes the sound output control for setting the volume of the utterance of the user who is in a good relationship (has high degree of intimacy) with the user a, 11a to be large.

On the other hand, the sound output control for setting the volume of the utterance of the user who is in a bad relationship (has low degree of intimacy) with the user a, 11a to be small is executed.

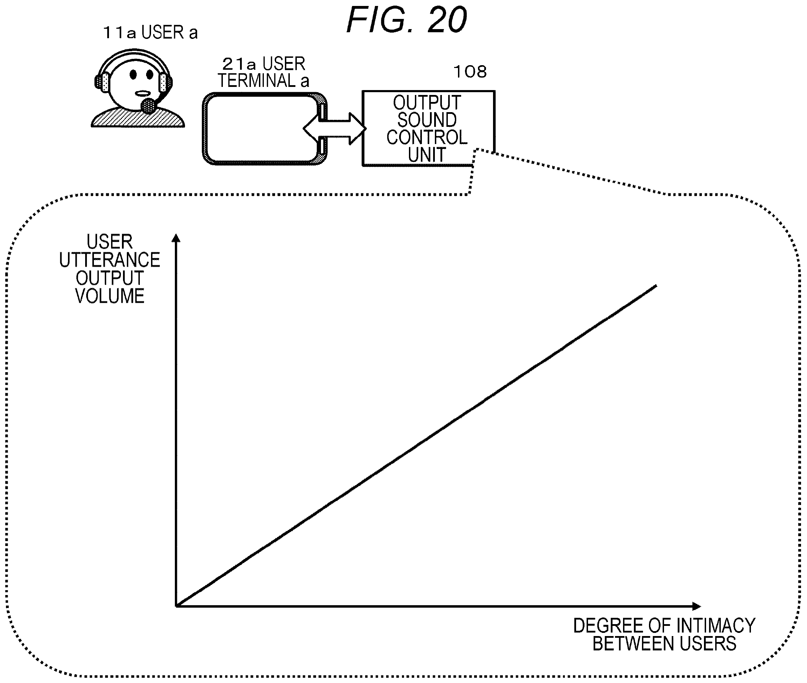

Fig. 20 is a graph illustrating a control processing example of the user utterance output volume according to the degree of intimacy executed by the output sound control unit 108 of the user terminal a, 21a used by the user a, 11a.

The graph illustrated in Fig. 20 is a graph in which the horizontal axis represents the degree of intimacy between the users and the vertical axis represents the user utterance output volume.

As can be understood from the graph, the higher the degree of intimacy between users, the larger the output volume of the user utterance.

In other words, the output sound control unit 108 of the user terminal a, 21a used by the user a, 11a executes output volume control processing of increasing the output volume of the utterance of the user having a high degree of intimacy with the user a, 11a.

On the other hand, output volume control processing of reducing the output volume of the utterance of the user having a low degree of intimacy with the user a, 11a is executed.

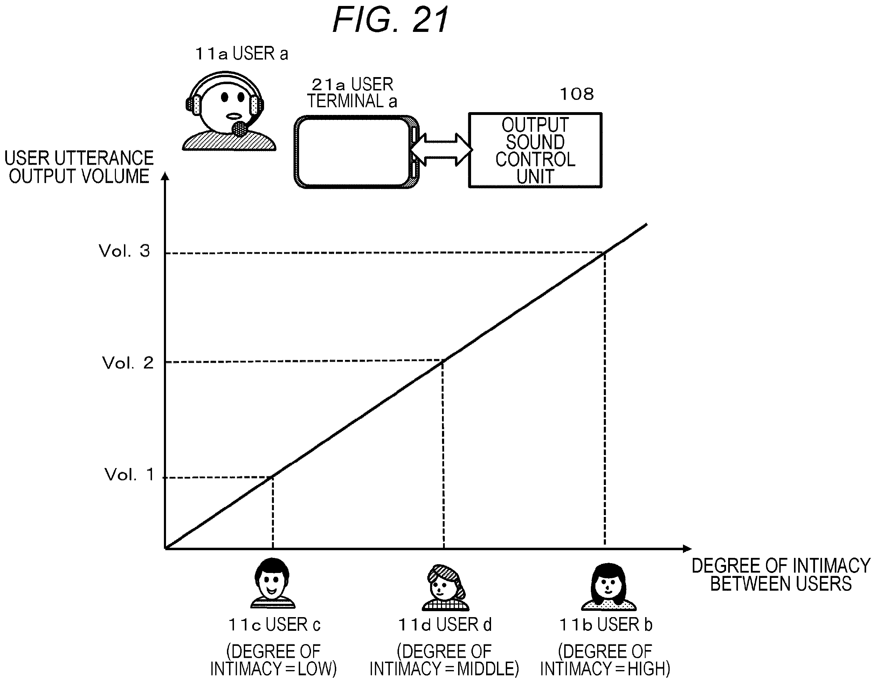

An output sound control processing example corresponding to a specific degree of intimacy between the user a, 11a and the users b to d will be described with reference to Fig. 21.

The degree of intimacy between the users is the degree of intimacy calculated by the degree-of-intimacy calculation unit 121.

It is assumed that the degree of intimacy between the user a, 11a and the users b to d calculated by the degree-of-intimacy calculation unit 121 of the user terminal a, 21a used by the user a, 11a is similar to the degree of intimacy described above with reference to Fig. 18.

That is, it is assumed that the degree-of-intimacy calculation unit 121 of the user terminal a, 21a used by the user a, 11a calculates the degree of intimacy between the users as follows.

The degree of intimacy between the user a and the user b is 10, that is, a high degree of intimacy.

The degree of intimacy between the user a and the user c is 2, that is, a low degree of intimacy.

The degree of intimacy between the user a and the user d is 5, that is, a moderate degree of intimacy.

In this case, as illustrated in Fig. 21, the output sound control unit 108 of the user terminal a, 21a used by the user a, 11a controls the output volume of each utterance of the users b to d as follows.

For the utterance volume of the user b, 11b having the degree of intimacy = 10, that is, a high degree of intimacy, volume control for setting the utterance volume to a large volume (Vol. 3) is executed, and the utterance is output to a speaker such as a headphone of the user via the sound output unit 109.

For the utterance volume of the user d, 11d having the degree of intimacy = 5, that is, a moderate degree of intimacy, volume control for setting the utterance volume to a medium volume (Vol. 2) is executed, and the utterance is output to a speaker such as a headphone of the user via the sound output unit 109.

For the utterance volume of the user c, 11c having the degree of intimacy = 2, that is, a low degree of intimacy, volume control for setting the utterance volume to a small volume (Vol. 1) is executed, and the utterance is output to a speaker such as a headphone of the user via the sound output unit 109.

As described above, the output sound control unit 108 of the user terminal 21 executes the output volume control processing of increasing the output volume for the utterance of the user having a high degree of intimacy with the user who uses the user terminal 21, and reducing the output volume for the utterance of the user having a low degree of intimacy.

Note that the output sound control unit 108 of the user terminal 21 also executes the output volume control processing of the background sound in addition to the output volume control processing of the user utterance.

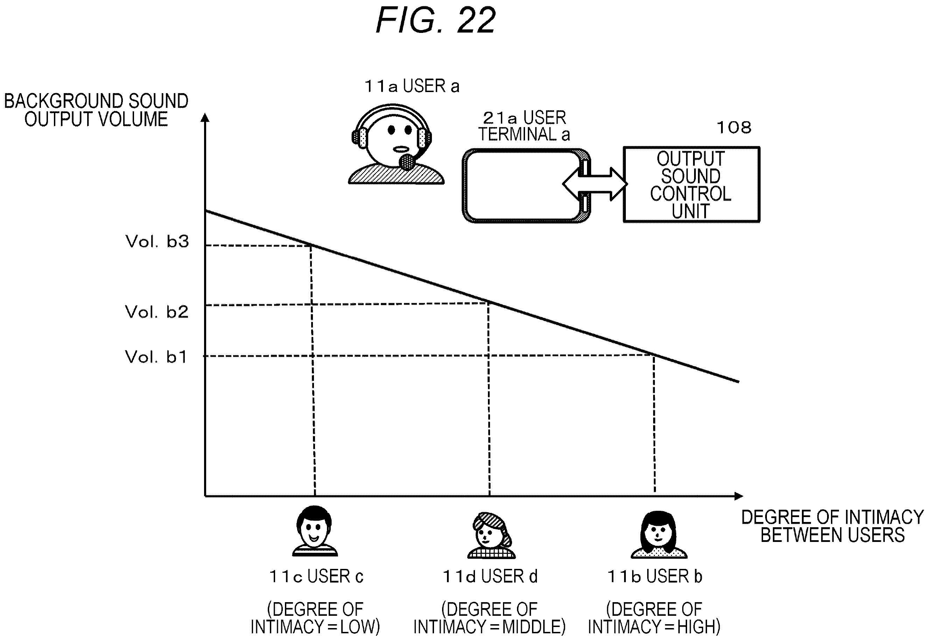

As illustrated in Fig. 22, the background sound output volume control processing executes output volume control processing of reducing the output volume of the background sound in a case where the utterance of the user having a high degree of intimacy with the user who uses the user terminal 21 is executed, and increasing the output volume of the background sound in a case where the utterance of the user having a low degree of intimacy is executed.

That is, the output sound control unit 108 of the user terminal a, 21a used by the user a, 11a executes the following control as illustrated in Fig. 22.

While the degree of intimacy = 10, that is, the user b, 11b having a high degree of intimacy is making an utterance, volume control for setting the output volume of the background sound to a small volume (Vol. b1) is executed, and the background sound is output to a speaker such as a headphone of the user via the sound output unit 109.

While the degree-of-intimacy = 5, that is, the user d, 11d having a medium degree of degree-of-intimacy is making an utterance, volume control for setting the output volume of the background sound to a medium volume (Vol. b2) is executed, and the background sound is output to a speaker such as a headphone of the user via the sound output unit 109.

While the degree of intimacy = 2, that is, the user c, 11c having a low degree of intimacy is making an utterance, volume control for setting the output volume of the background sound to a large volume (Vol. b3) is executed, and the background sound is output to a speaker such as a headphone of the user via the sound output unit 109.

As described above, the output sound control unit 108 of the user terminal 21 also executes the output volume control processing of the background sound in addition to the output volume control processing of the user utterance.

In other words, the output sound control unit 108 of the user terminal 21 of the present second embodiment executes the output volume control processing of increasing the volume of the user utterance and decreasing the volume of the background sound for the user having a high degree of intimacy, and executes the output volume control processing of decreasing the volume of the user utterance and increasing the volume of the background sound for the user having a low degree of intimacy.

[3-2. Configuration Example of User Terminal of Second Embodiment]

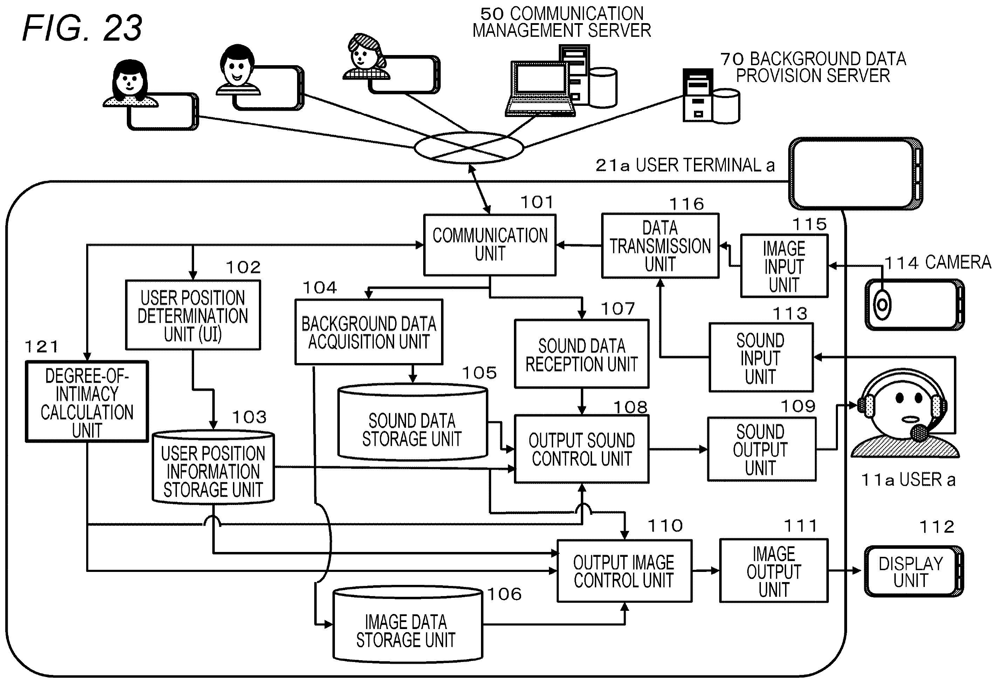

Next, a configuration example of a user terminal used in the present second embodiment will be described with reference to Fig. 23.

Fig. 23 illustrates a configuration example of the user terminal a, 21a used by the user a, 11a who are users participating in a conversation via the communication network described with reference to Fig. 1.

Note that all of the user terminals a, 21a to d, 21d used by the users a, 11a to d, 11d have a configuration substantially similar to the configuration example illustrated in Fig. 23.

Note that, as described above, the user terminals 21a to 21d include, for example, a communicable information processing apparatus such as a PC, a smartphone, or a tablet terminal.

As illustrated in Fig. 23, the user terminal a, 21a includes a communication unit 101, a user position determination unit (UI) 102, a user position information storage unit 103, a background data acquisition unit 104, a sound data storage unit 105, an image data storage unit 106, a sound data receiving unit 107, an output sound control unit 108, a sound output unit 109, an output image control unit 110, an image output unit 111, a display unit 112, a sound input unit 113, a camera 114, an image input unit 115, a data transmission unit 116, and a degree-of-intimacy calculation unit 121.

The configuration of the user terminal a, 21a illustrated in Fig. 23 is a configuration in which the degree-of-intimacy calculation unit 121 is added to the configuration of the user terminal a, 21a described with reference to Fig. 4 in the first embodiment.

Since the configuration other than the degree-of-intimacy calculation unit 121 is similar to the configuration described with reference to Fig. 4 in the first embodiment, the description thereof will be omitted.

The user terminal a, 21a of the present second embodiment executes, for example, sound output control of user utterance and display control of a user image (avatar or real image) according to the degree of intimacy of each of a plurality of users participating in a conversation.

The degree-of-intimacy calculation unit 121 calculates a degree of intimacy serving as a base of the sound output control processing and the image display control processing.

As illustrated in Fig. 23, the degree of intimacy calculated by the degree-of-intimacy calculation unit 121 is output to the output sound control unit 108 and the output image control unit 110.

The output sound control unit 108 and the output image control unit 110 execute sound output control and image output control according to the degree of intimacy calculated by the degree-of-intimacy calculation unit 121.

That is, for example, the control described above with reference to Figs. 18 to 22 is performed.

As described above, the degree-of-intimacy calculation unit 121 analyzes preference information of each user input by the user a, 11a to the user terminal a, 21a, a conversation amount between past and current users, and the like, and calculates a degree of user-to-user intimacy between the user a, 11a and other users b to d.

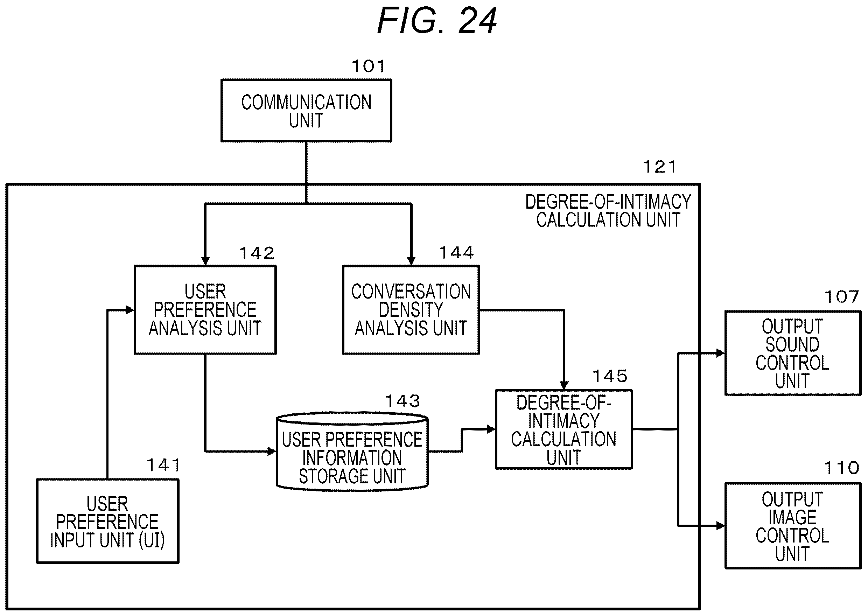

A detailed configuration example and a specific degree-of-intimacy calculation processing example of the degree-of-intimacy calculation unit 121 will be described with reference to Fig. 24 and subsequent drawings.

Fig. 24 is a diagram illustrating a detailed configuration example of the degree-of-intimacy calculation unit 121.

As illustrated in Fig. 24, the degree-of-intimacy calculation unit 121 includes a user preference input unit (UI) 141, a user preference analysis unit 142, a user preference information storage unit 143, a conversation density analysis unit 144, and a degree-of-intimacy calculation unit 145.

The user preference input unit (UI) 141 is an input unit (UI) that enables the user himself/herself to directly input a preferred level for another user.

For example, the user a, 11a inputs a preferred level (e.g. Lev. 0 to Lev. 5) for each of the other users b to d.

The preference level (Lev. 0 to Lev. 5) for each of the other users input by the user via the user preference input unit (UI) 141 is input to the user preference analysis unit 142.

The user preference analysis unit 142 calculates a final preference level (e.g. Lev. 0 to Lev. 5) of another user viewed from the user using the user terminal on the basis of the preference level (Lev. 0 to Lev. 5) of the another user input to the user preference input unit (UI) 141 and the analysis result of the conversation between the users input via the communication unit.

Note that the user preference analysis unit 142 executes, for example, the following analysis processing as the analysis processing of the conversation between the users input via the communication unit.

Processing of identifying a user who agrees well with the user a, 11a, a user who does not agree much with the user a, 11a, and the like, and determining that a user who agrees more with the user a, 11a has a higher preference level.

Processing of identifying users who laugh with each other, users who frequently quarrel with each other, and the like, and determining that the users who laugh with each other have a higher preference level.

The user preference analysis unit 142 performs, for example, these pieces of conversation analysis processing to estimate the degree of intimacy between the users.

Note that, for estimating the preference level based on these conversation analysis results, for example, learning processing results of various conversation data may be used.

In this manner, the user preference analysis unit 142 combines the preference level (Lev. 0 to Lev. 5) for each of the other users input from the user preference input unit (UI) 141 with the preference level (Lev. 0 to Lev. 5) acquired by analyzing the conversation between the users input via the communication unit, and calculates a final preference level (Lev. 0 to Lev. 5) for each of the other users viewed from the user using the user terminal.

The final preference level (Lev. 0 to Lev. 5) data for each of the other users calculated by the user preference analysis unit 142 is stored in the user preference information storage unit 143.

The conversation density analysis unit 144 executes analysis processing of a conversation between the users input via the communication unit, and calculates a conversation density between the users.

The conversation density analysis unit 144 executes analysis processing of a conversation between the users and calculates a conversation density level (Lev. 0 to Lev. 5) between the users.

The conversation density analysis unit 144 executes analysis processing of a conversation between the users in consideration of, for example, a direct conversation amount between the users, a voice chat amount, the number of times of calling the name of the user, and the like, and calculates a conversation density level (Lev. 0 to Lev. 5) between the users.

Conversation is frequently performed, and the conversation density level is calculated as a higher value (value close to Lev. 5) as the conversation density is higher. On the other hand, not much conversation is performed, and the conversation density level is calculated as a lower value (value close to Lev. 0) as the conversation density is lower.

The conversation density level (Lev. 0 to Lev. 5) calculated by the conversation density analysis unit 144 is input to the degree-of-intimacy calculation unit 145.

The degree-of-intimacy calculation unit 145 calculates a degree-of-intimacy level between the users using the user preference level (Lev. 0 to Lev. 5) stored in the user preference information storage unit 143 and the conversation density level (Lev. 0 to Lev. 5) calculated by the conversation density analysis unit 144.

For example, the degree-of-intimacy calculation unit 145 of the user terminal a, 21a calculates the degree of intimacy of each of the other users b to d with respect to the users a and 11 who is the use user of the user terminal a, 21a.

For example, the degree-of-intimacy calculation unit 145 first calculates a "user liking base degree-of-intimacy" that is a degree of intimacy corresponding to the user preference level (Lev. 0 to Lev. 5) stored in the user preference information storage unit 143.

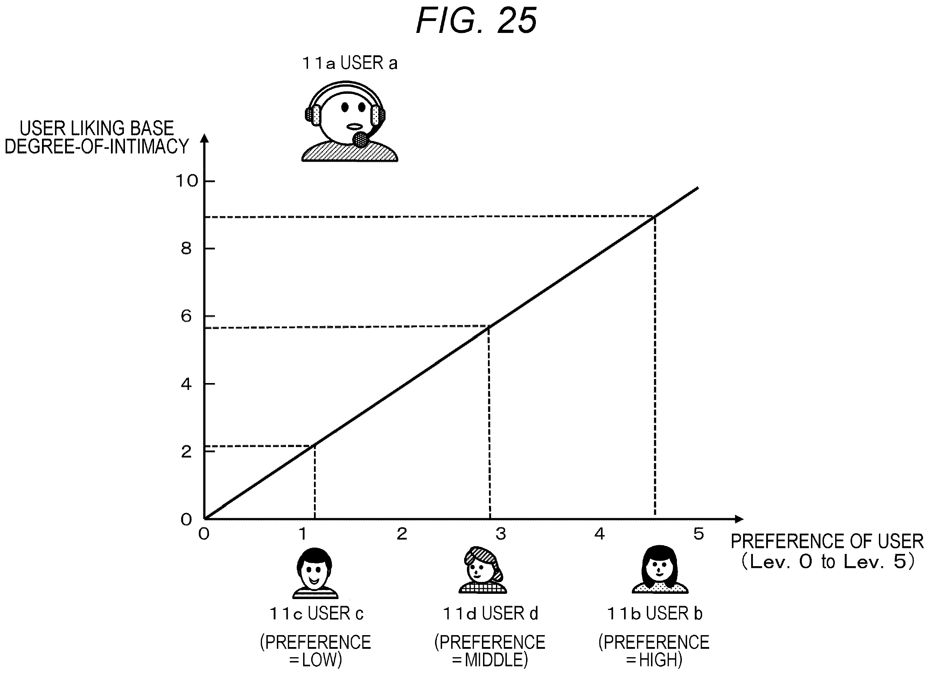

The graph illustrated in Fig. 25 illustrates a calculation processing example of the "user liking base degree-of-intimacy" calculated by the degree-of-intimacy calculation unit 145. Fig. 25 is a graph in which the horizontal axis represents the user preference level (Lev. 0 to Lev. 5) stored in the user preference information storage unit 143 and the vertical axis represents the "user liking base degree-of-intimacy".

For example, using such a graph (= relational expression), the degree-of-intimacy calculation unit 145 calculates the "user liking base degree-of-intimacy" on the basis of the user preference level (Lev. 0 to Lev. 5) stored in the user preference information storage unit 143.

In the example illustrated in Fig. 25, the users having the highest preference of the user a, 11a are the user b, 11b, and the "user liking base degree-of-intimacy" to the user b, 11b is calculated as the highest value (about 9.0).

Next, the user having a high preference of the user a, 11a is the user d, 11d, and the "user liking base degree-of-intimacy" with the user d, 11d is calculated as the next highest value (about 5.8).

Furthermore, the user having the lowest preference of the user a, 11a is the user c, 11c, and the "user liking base degree-of-intimacy" to the user c, 11c is calculated as the lowest value (about 2.1).

Next, the degree-of-intimacy calculation unit 145 calculates a "conversation density base degree-of-intimacy" which is a degree of intimacy corresponding to the conversation density level (Lev. 0 to Lev. 5) calculated by the conversation density analysis unit 144.

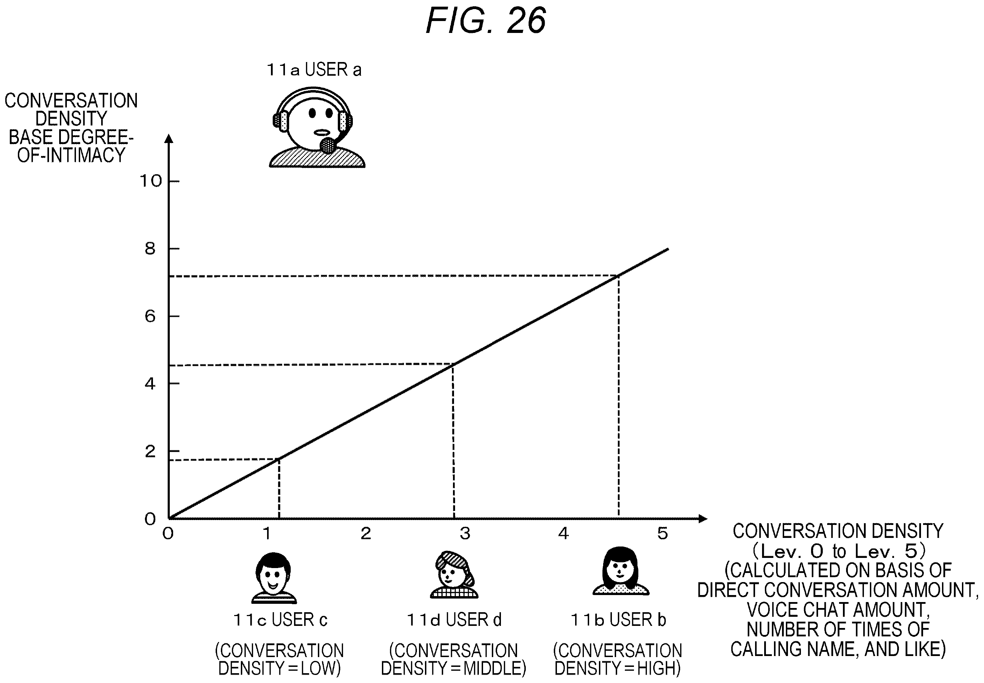

The graph illustrated in Fig. 26 illustrates a calculation processing example of the "conversation density base degree-of-intimacy" calculated by the degree-of-intimacy calculation unit 145. Fig. 25 is a graph in which the horizontal axis represents the conversation density level (Lev. 0 to Lev. 5) calculated by the conversation density analysis unit 144 and the vertical axis represents the "conversation density base degree-of-intimacy".

For example, using such a graph (= relational expression), the degree-of-intimacy calculation unit 145 calculates the "conversation density base degree-of-intimacy" on the basis of the conversation density level (Lev. 0 to Lev. 5) calculated by the conversation density analysis unit 144.

In the example illustrated in Fig. 26, the user having the highest conversation density with the user a, 11a is the user b, 11b, and the "conversation density base degree-of-intimacy " with the user b, 11b is calculated as the highest value (about 7.2).

Next, the user having a high conversation density with the user a, 11a is the user d, 11d, and the "conversation density base degree-of-intimacy" with the user d, 11d is calculated as the next highest value (about 4.5).

Furthermore, the user having the lowest preference of the user a, 11a is the user c, 11c, and the "conversation density base degree-of-intimacy" with the user c, 11c is calculated as the lowest value (about 1.8).

Finally, the degree-of-intimacy calculation unit 145 executes arithmetic processing using the "user liking base degree-of-intimacy" calculated according to the graph illustrated in Fig. 25 and the "conversation density base degree-of-intimacy" calculated according to the graph illustrated in Fig. 26 to calculate the final "degree of intimacy" corresponding to the user.

For example, in a case where a value of the "user liking base degree-of-intimacy" is p (p = 0 to 10), a value of the "conversation density base degree-of-intimacy" is q (q = 0 to 10), and a final degree of intimacy is r (r = 0 to 10), the final degree of intimacy r (r = 0 to 10) is calculated using the following arithmetic expression (weight addition arithmetic expression).

$$\texttt{Final Degree of Intimacy r = } \alpha p + \beta q$$

Note that p: user liking base degree-of-intimacy
q: conversation density base degree-of-intimacy , and
$\alpha$ and $\beta$ are multiplication weighting coefficients (where $\alpha + \beta = 1$). These weighting factors are set in advance.

In the user terminal a, 21a used by the user a, 11a,

the degree of intimacy between the user a, 11a and the user b, 11b,
the degree of intimacy between the user a, 11a and the user c, 11c,
the degree of intimacy between the user a, 11a and the user d, 11d, and
the final degree of intimacy r (0 to 10) for these three users b to d are calculated.

As illustrated in Figs. 23 and 24, the final values of the degree of intimacy r (0 to 10) for the three users b to d calculated by the degree-of-intimacy calculation unit 145 are input to the output sound control unit 107 and the output image control unit 110.

The output sound control unit 107 and the output image control unit 110 execute sound output control and image output control according to the final degree of intimacy r (0 to 10) for the three users b to d input from the degree-of-intimacy calculation unit 121.

That is, for example, the sound output control and the image output control as described above with reference to Figs. 18 to 22 are executed.

Note that the user preference analysis unit 142 and the conversation density analysis unit 144 continue the analysis processing by inputting these pieces of conversation information via the communication unit 101 even while a conversation is being held between the users, and sequentially update the "user liking base degree-of-intimacy" and the" conversation density base degree-of-intimacy" and input update data to the degree-of-intimacy calculation unit 145.

The degree-of-intimacy calculation unit 145 also performs processing of sequentially updating the final value of the degree of intimacy by using the latest "user liking base degree-of-intimacy" or "conversation density base degree-of-intimacy" input from the user preference analysis unit 142 or the conversation density analysis unit 144, and continuously inputs the updated value to the output sound control unit 107 and the output image control unit 110.

Therefore, the output sound control unit 107 and the output image control unit 110 sequentially change the control mode according to the latest value of the degree of intimacy updated during the execution of the conversation.

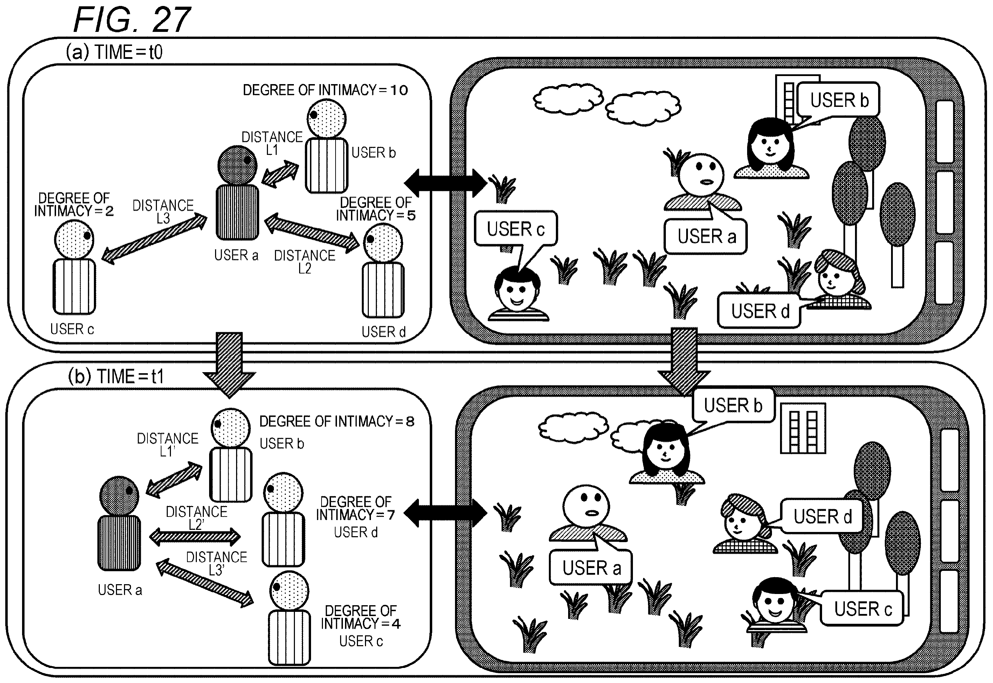

A change processing example of a display mode executed by the output image control unit 110 during execution of a conversation between a plurality of users a to d will be described with reference to Fig. 27.

Fig. 27 is a diagram illustrating a display control processing example executed by the output image control unit 110 during execution of a conversation between a plurality of users a to d, and illustrates an example of display data at the following two times.

(a)

$$Time = t0$$

(b)

$$Time = t1$$

Note that time t1 is a time after a certain time has elapsed from time t0.
First, at time t0, the degree of intimacy between the user a and the users b to d is set as follows.

Degree of intimacy of the user a and the user b = 10
Degree of intimacy between the user a and the user c = 2
Degree of intimacy between the user a and the user d = 5

In this degree-of-intimacy setting, the output image control unit 110 executes display control processing as illustrated in the upper part (a) in the upper part of Fig. 27.
The display position of the user b having the degree of intimacy 10 who is in the best relationship with the user a is a position extremely close to the user a (distance L1), and is substantially the front position of the user a.
The display position of the user c having the degree of intimacy 2 who is in a not so good relationship with the user a is a position far from the user a (distance L3), and is substantially the back position of the user a.
The display position of the user d having the degree of intimacy 5 who is in a neither good nor bad relationship with the user a is set to a position that is neither close nor far from the user a (distance L2), and the diagonally front position of the user a is set to the display position.
Note that a magnitude relationship among the distances L1, L2, and L3 is L1<L2<L3.
Furthermore, the output sound control unit 107 executes, as output sound control processing for the utterance of each user, sound direction control so that the utterance of each user can be heard from the display position of each user, and further executes volume control according to the distance (= degree of intimacy) of the display position with the user a.
As the distance to the user a is shorter (= the degree of intimacy is higher), the output sound of the utterance is set to a larger volume. On the other hand, the volume control processing of reducing the background sound as the distance to the user a is shorter (= the degree of intimacy is higher) is executed.
(b) in the lower part of Fig. 27 illustrates a display control processing example at time t1 which is a fixed time after time t0.
The conversation between the users a to d is also performed during times t0 to t1, and the user preference analysis unit 142 and the conversation density analysis unit 144 input the conversation information via the communication unit 101 and continue the analysis processing.
As a result of this analysis processing, the user preference analysis unit 142 and the conversation density analysis unit 144 sequentially update the "user liking base degree-of-intimacy" and the "conversation density base degree-of-intimacy", and input update data to the degree-of-intimacy calculation unit 145.
The degree-of-intimacy calculation unit 145 updates the final value of the degree of intimacy by using the latest "user liking base degree-of-intimacy" or "conversation density base degree-of-intimacy" input from the user preference analysis unit 142 or the conversation density analysis unit 144. This updated value is input to the output sound control unit 107 and the output image control unit 110.
The example illustrated in Fig. 27(b) illustrates an example in which the degree of intimacy between the user a and the users b to d is updated as follows at time = t1.

Degree of intimacy between the user a and the user b = 8
Degree of intimacy between the user a and the user c = 4
Degree of intimacy between the user a and the user d = 7

In this degree-of-intimacy setting, the output image control unit 110 executes display control processing as illustrated in (b) in the lower part of Fig. 27.
The display position of the user b having the degree of intimacy 8 who is in the best relationship with the user a is a position extremely close to the user a (distance L1'), and is substantially the front position of the user a.

At time t0, the degree of intimacy with the user a = 2, and the user c who is in a not so good relationship is improved to the degree of intimacy = 4 at time t1. The display position of the user c is changed to a position (distance L3') closer to the user a than time t0, and is further moved obliquely forward from the back position of the user a to be displayed.

The user d having the degree of intimacy = 5 at time $t_0$ has the degree of intimacy decreasing to the degree of intimacy = 7 at time t1. Accordingly, the display position of the user d is changed to a position (distance L2') farther from the user a than time t0.

In this manner, the display position of each user is changed by the change in the degree of intimacy with the lapse of time.

Furthermore, the output sound control unit 107 also changes the mode of the output sound control processing for each user utterance in accordance with the change in the degree of intimacy corresponding to each user or the change in the display position.

In other words, the sound direction control is executed so that the utterance of each user can be heard from the new display position of each user, and the processing of changing the output volume according to the distance (= degree of intimacy) of the new display position with the user a is further executed.

Note that, in Fig. 27, an example of changing the display position of the user has been described as the display control processing accompanying the change in the degree of intimacy executed by the output image control unit 110. However, the output image control unit 110 may further perform processing of changing an image (avatar image or real image) of the user to be displayed.

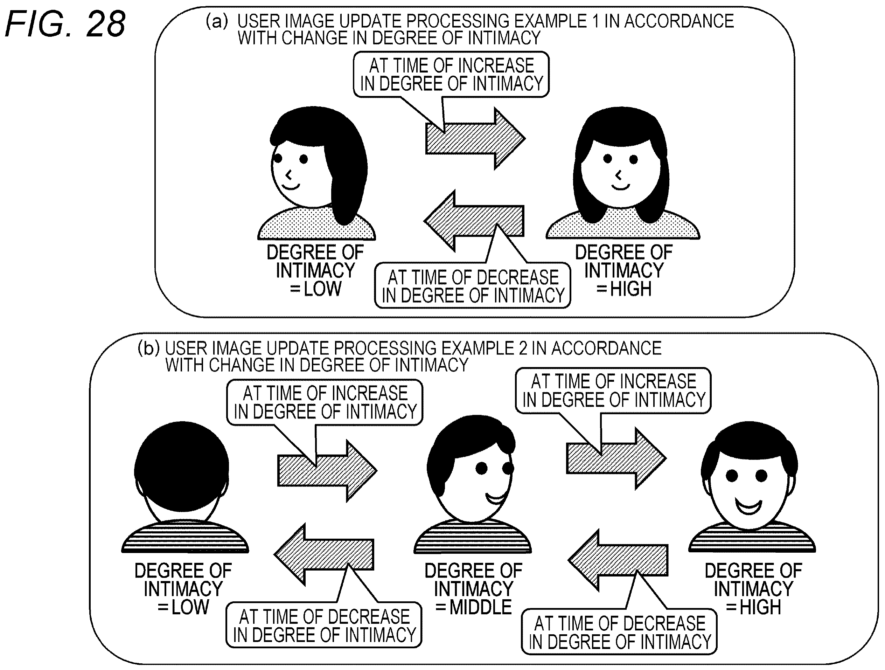

Next, a change processing example of the user image (avatar image or real image) according to the change in the degree of intimacy executed by the output image control unit 110 will be described with reference to Fig. 28.

For example, as illustrated in Fig. 28(a), a frontward user image (avatar image or real image) is displayed in a state where the degree of intimacy is high, and a sideways user image (avatar image or real image) is displayed in a state where the degree of intimacy is low.

The output image control unit 110 may execute display control of the user image (avatar image or real image) according to such a degree of intimacy.

Furthermore, as illustrated in Fig. 28(b), in a state where the degree of intimacy is high, a frontward user image (avatar image or real image) is displayed. In a state where the degree of intimacy is medium, a sideways user image (avatar image or real image) is displayed. In a state where the degree of intimacy is low, a backward user image (avatar image or real image) is displayed.

The output image control unit 110 may execute display control of the user image (avatar image or real image) according to such a degree of intimacy.


[4. (Third Embodiment) Embodiment in which Different Background Data is Used in Each User Terminal]

Next, as a third embodiment, an embodiment in which different background data is used in each user terminal will be described.

In the first and second embodiments described above, basically, the user terminal of each user having a conversation via the network has been described as an example of performing a conversation by displaying common background data.

However, each user terminal can individually set the background data, and each user terminal of each user having a conversation via the network can have a conversation via the network while outputting individual different background data to each user terminal.

The third embodiment described below is an embodiment in which such processing is performed.

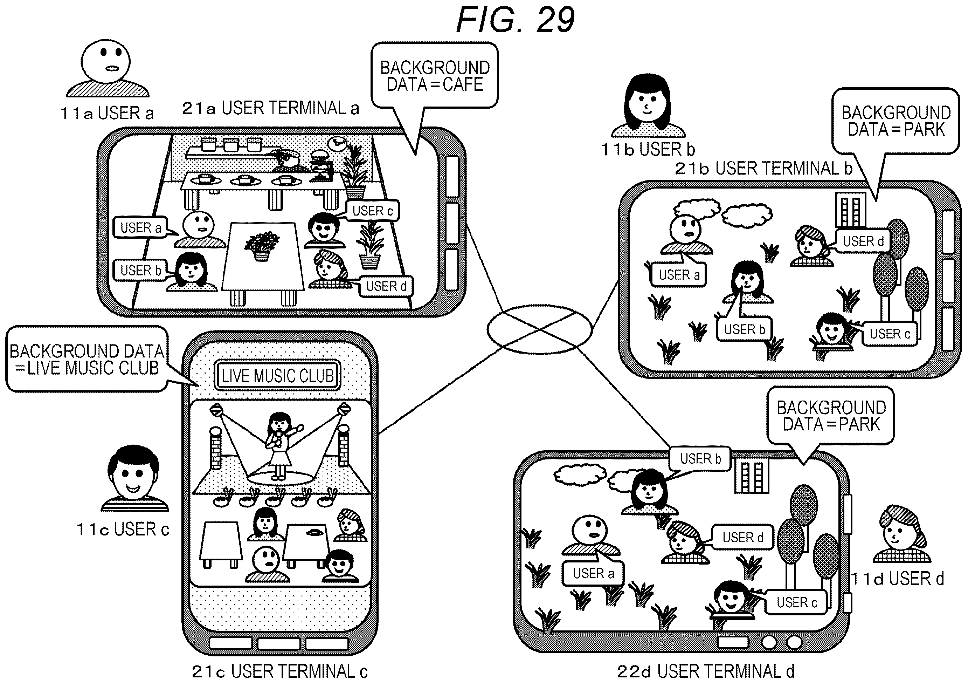

Fig. 29 is a diagram illustrating an example in which user terminals of users having a conversation via a network output different background data to the user terminals.

Four users illustrated in Fig. 29, that is, users a, 11a to d, 11d execute communication and have a conversation using the respective user terminals a, 21a to d, 21d.

The user a, 11a sets the user terminal a, 21a to output the background data of the cafe, and the user terminals a and 21a outputs the background image of the cafe and the background sound of the cafe.

On the other hand, the user b, 11b sets the user terminal b, 21b to output the background data of the park, and the user terminal b, 21b outputs the background image of the park and the background sound of the park.

In addition, the user c, 11c sets the user terminal c, 21c to output the background data of the live music club, and the user terminal c, 21c outputs the background image of the live music club and the background sound of the live music club.

Further, the user d, 11d sets the user terminal d, 21d to output the background data of the park similarly to the user terminal b, 21b, and the user terminal d, 21d outputs the background image of the park and the background sound of the park.

In this manner, the users a, 11a to d, 11d have a conversation with each other while outputting different background data to the respective user terminals a, 21a to d, 21d.

Note that the user position displayed on each user terminal can also be different for each terminal determined in each user terminal.

For example, the fixed user position described in the first embodiment can be set, and the user position may be determined according to the degree of intimacy described in the second embodiment.

Note that, in a case where different background data is output to each of the user terminals connected via the network in this manner, it is also possible to set to continuously output the background data set in the own terminal, but it is also possible to set to receive the background data set in the user terminal of the conversation partner together with the user utterance data of the conversation partner and output the received background data to the own terminal only at the time of a conversation with another user.

Whether or not to set to continuously output the background data set in the own terminal regardless of the presence or absence of the conversation with another user or to set to output the background data set in the user terminal of the conversation partner to the own terminal at the time of the conversation with the another user can be set in each user terminal.

These settings can be individually performed in each user terminal, and can be set using, for example, a UI or the like.

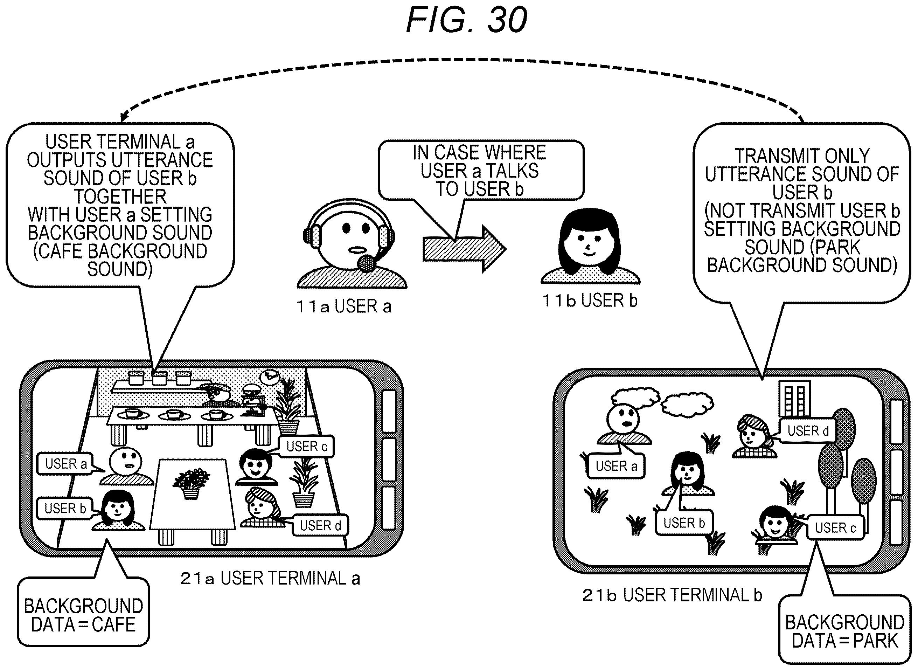

A plurality of processing examples for switching background data to be output to the own terminal according to a conversation between users in a configuration in which different background data are output to user terminals connected via a network will be described with reference to Fig. 30 and subsequent drawings.

The following processing examples 1 to 4 will be sequentially described with reference to Fig. 30 and subsequent drawings.

(Processing Example 1) Processing example in a case where, in a case where the user talks to another user and has a conversation with the another user, background data set in own terminal is continuously set to output

(Processing Example 2) Processing example in a case where, in a case where the user talks to another user and has a conversation with the another user, only background sound data in background data set in own terminal is set to be switched to a background sound set in a user terminal of a conversation partner

(Processing Example 3) Processing example in a case where, in a case where the user talks to another user and has a conversation with the another user, not only background sound data but also background image data in background data set in own terminal is set to be switched to background data set in a user terminal of a conversation partner

(Processing Example 4) Processing example in a case where, in a case where the user is spoken to by another user and has a conversation with the other user, background data set in own terminal is set to continuously output

[4-1. (Processing Example 1) Processing Example in Case Where, in Case Where User Talks to Other User and Has Conversation With Other User, Background Data Set in Own Terminal is Set to Continuously Output]

First, with reference to Fig. 30, (Processing Example 1), that is, a processing example in a case where the user talks to another user and has a conversation with the other user, background data set in own terminal is continuously set to output will be described.

Fig. 30 illustrates the user a, 11a and the user b, 11b that have a conversation by communication.

The user a, 11a uses the user terminal a, 21a that has been set to output the background data of the cafe.

The user b, 11b uses the user terminal b, 21b that has been set to output the background data of the park.

With this setting, the user a, 11a talks to the user b, 11b.

The user b, 11b executes a response utterance to the talking from the user a, 11a.

Note that the user b, 11b recognizes that the talking from the user a, 11a is a talking from the user a, 11a in the park which is the background data set in the user terminal b, 21b.

The response utterance by the user b, 11b is transmitted from the user terminal b, 21b to the user terminal a, 21a via the communication network.

Data transmitted from the user terminal b, 21b to the user terminal a, 21a is only the utterance sound data of the user b, 11b, and the background data set in the user terminal b, 21b, that is, the background image data and the background sound data of the park are not transmitted.

The user terminal a, 21a receives only the utterance sound data of the user b, 11b from the user terminal b, 21b. The output sound control unit 108 of the user terminal a, 21a executes output control on the received utterance sound data of the user b, 11b, and the controlled sound is output. For example, it is output from headphones worn by the user a, 11a connected to the user terminal a, 21a.

Note that the control processing executed for the response utterance of the user b, 11b is, for example, the control processing according to the first embodiment described above. That is, from the relative position of the user b, 11b with respect to the user a, 11a displayed on the user terminal a, 21a illustrated in Fig. 30, sound output control is performed so that the utterance of the user b, 11b can be heard, and output is performed.

Note that the background sound of the cafe set in the user terminal a, 11a is also continuously output from the headphones worn by the user a, 11a, and the response utterance of the user b, 11b is output from the headphones together with the background sound of the cafe.

With this output sound control processing, in the example illustrated in Fig. 30, the user a, 11a can have a conversation while recognizing that the user b, 11b is also in the same cafe as the user a, 11a.

[4-2. (Processing Example 2) Processing Example in Case Where, in Case Where User Talks to Other User and Has Conversation With Other User, Only Background Sound Data in Background Data Set in Own Terminal is Set to be Switched to Background Sound Set in User Terminal of Conversation Partner]

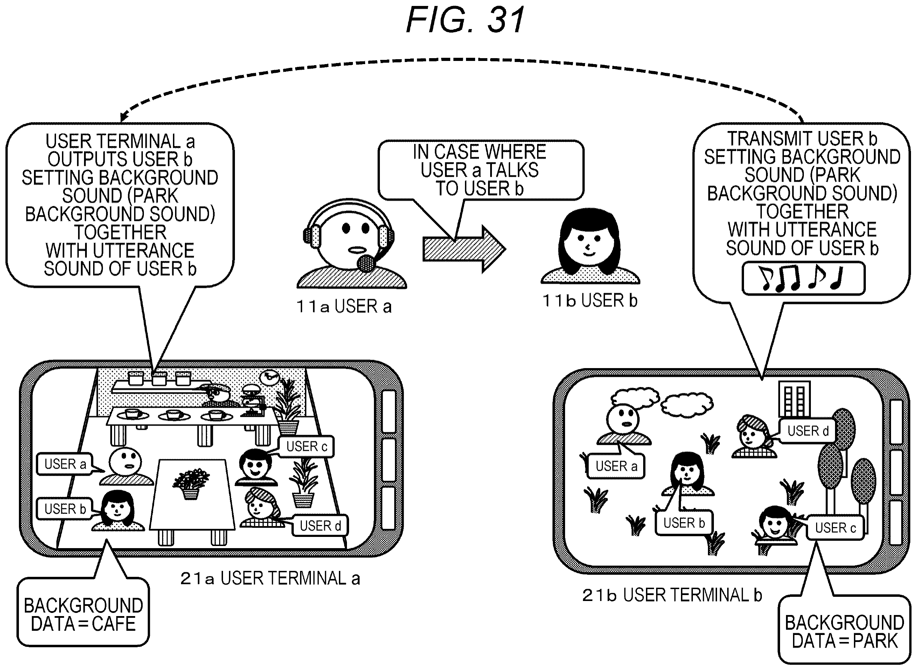

Next, with reference to Fig. 31, (Processing example 2), that is, a processing example in a case where, in a case where the user talks to another user and has a conversation with the another user, only background sound data in background data set in own terminal is set to be switched to a background sound set in a user terminal of a conversation partner will be described.

Similarly to Fig. 30, Fig. 31 also illustrates the user a, 11a and the user b, 11b that have a conversation by communication.

The user a, 11a uses the user terminal a, 21a that has been set to output the background data of the cafe.

The user b, 11b uses the user terminal b, 21b that has been set to output the background data of the park.

With this setting, the user a, 11a talks to the user b, 11b.

The user b, 11b executes a response utterance to the talking from the user a, 11a.

Note that the user b, 11b recognizes that the talking from the user a, 11a is a talking from the user a, 11a in the park which is the background data set in the user terminal b, 21b.

The response utterance by the user b, 11b is transmitted from the user terminal b, 21b to the user terminal a, 21a via the communication network.

In this (Processing Example 2), not only utterance sound data of the user b, 11b but also background sound data of a park set in the user terminal b, 21b is transmitted from the user terminal b, 21b to the user terminal a, 21a. However, the background image data of the park is not transmitted.

The user terminal a, 21a receives the utterance sound data of the user b, 11b and the background sound data of the park from the user terminal b, 21b. The output sound control unit 108 of the user terminal a, 21a executes output control on the received background sound data of the park and the utterance sound data of the user b, 11b and outputs the controlled sound. For example, it is output from headphones worn by the user a, 11a connected to the user terminal a, 21a.

Note that the output sound control unit 108 of the user terminal a, 21a performs control processing similar to the (Processing Example 1) described with reference to Fig. 30 on the response utterance of the user b, 11b. That is, in the control processing according to the first embodiment described above, sound output control is performed so that the utterance of the user b, 11b can be heard from the relative position of the user b, 11b with respect to the user a, 11a displayed on the user terminal a, 21a illustrated in Fig. 31, and output is performed.

Note that, from the headphones worn by the user a, 11a, only at the output timing of the utterance of the user b, 11b, the background sound of the park received from the user terminal b, 11b, for example, the background sound of the park including the sound of bird singing, or the like, is output.

In other words, background sound data of the cafe, which is the background sound set in the user terminal a, 21a, is output from the headphones worn by the user a, 11a except for the output timing of the utterance of the user b, 11b, but only at the output timing of the utterance of the user b, 11b, the background sound data is switched to the background sound of the park, for example, the background sound of the park including the sound of bird singing and the like received from the user terminal b, 11b.

With this output sound control processing, in the example illustrated in Fig. 31, the user a, 11a can recognize that the user b, 11b is having a conversation with the setting of being in the park.

[4-3. (Processing Example 3) Processing Example in Case Where, in Case Where User Talks to Other User and Has Conversation With Other User, Not Only Background Sound Data But Also Background Image Data In Background Data Set in Own Terminal is Set to be Switched to Background Data Set in User Terminal of Conversation Partner]

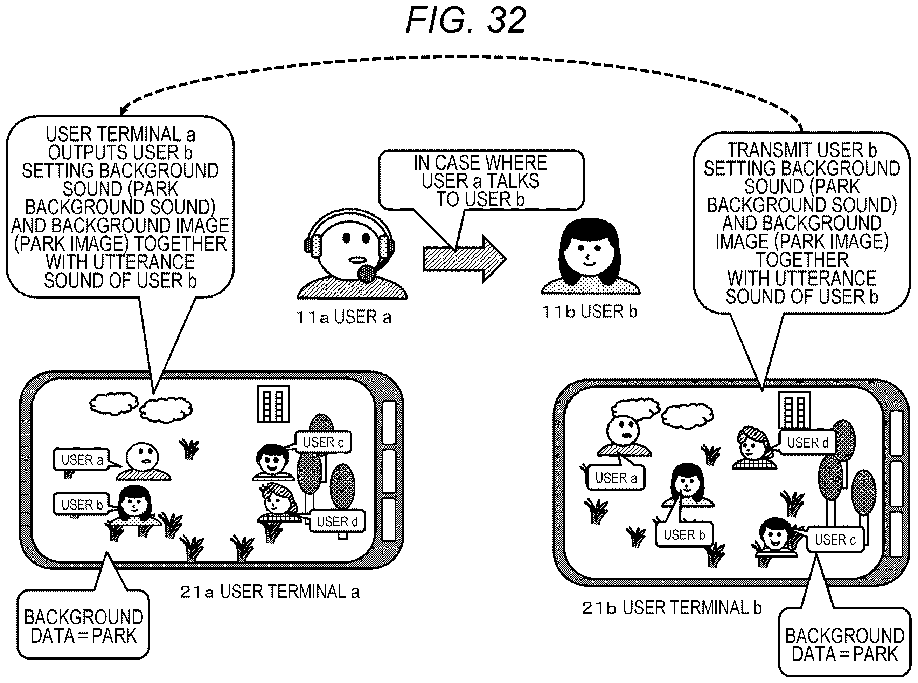

Next, with reference to Fig. 32, (Processing Example 3), that is, a processing example in a case where, in a case where the user talks to another user and has a conversation with the another user, not only background sound data but also background image data in background data set in own terminal is set to be switched to background data set in a user terminal of a conversation partner will be described.

Similarly to Figs. 30 and 31, Fig. 32 also illustrates the user a, 11a and the user b, 11b that have a conversation by communication.

The user a, 11a uses the user terminal a, 21a that has been set to output the background data of the cafe. Note that Fig. 32 illustrates a state after the background image of the user terminal a, 21a is switched to the background data of the park.

The user b, 11b uses the user terminal b, 21b that has been set to output the background data of the park.

With this setting, the user a, 11a talks to the user b, 11b.

The user b, 11b executes a response utterance to the talking from the user a, 11a.

Note that the user b, 11b recognizes that the talking from the user a, 11a is a talking from the user a, 11a in the park which is the background data set in the user terminal b, 21b.

The response utterance by the user b, 11b is transmitted from the user terminal b, 21b to the user terminal a, 21a via the communication network.

In this (Processing Example 3), not only the utterance sound data of the user b, 11b but also the background sound data of the park and the background image data of the park set in the user terminal b, 21b are transmitted from the user terminal b, 21b to the user terminal a, 21a.

The user terminal a, 21a receives the utterance sound data of the user b, 11b, the background sound data of the park, and the background image data of the park from the user terminal b, 21b.

The output sound control unit 108 of the user terminal a, 21a executes output control on the received background sound data of the park and the utterance sound data of the user b, 11b and outputs the controlled sound. For example, it is output from headphones worn by the user a, 11a connected to the user terminal a, 21a.

Note that the output sound control unit 108 of the user terminal a, 21a performs control processing similar to the (Processing Example 1) described with reference to Fig. 30 on the response utterance of the user b, 11b. That is, in the control processing according to the first embodiment described above, sound output control is performed so that the utterance of the user b, 11b can be heard from the relative position of the user b, 11b with respect to the user a, 11a displayed on the user terminal a, 21a illustrated in Fig. 31, and output is performed.

Furthermore, the output image control unit 108 of the user terminal a, 21a outputs the background image data of the park received from the user terminal b, 21b to the display unit of the user terminal a, 21a in accordance with the output timing of the response utterance of the user b, 11b.

This is a state of the display unit of the user terminal a, 21a illustrated in Fig. 32.

However, the user image (avatar image or real image) of each user arranged on the background image of the park is arranged according to the user position stored in the user position information storage unit 103 of the user terminal a, 21a. That is, the user image is displayed at a position similar to the user position arranged on the image of the cafe which is the background data set in the user terminal a, 21a.

With these pieces of processing, at the output timing of the utterance of the user b, 11b, the background data of the park is displayed on the display unit of the user terminal a, 21a, and the background sound of the park, for example, the background sound of the park including the sound of bird singing or the like is output from the headphones worn by the user a, 11a.

With the output image control processing and the output sound control processing, in the example illustrated in Fig. 32, the user a, 11a can recognize that the user a, 11a is having a conversation with the setting of being in the park together with the user b, 11b at the output timing of the utterance of the user b, 11b.

Note that, when the utterance of the user b, 11b ends, the background data of the user terminal a, 21a is switched to the background data of the original cafe. That is, the background image of the cafe is displayed on the display unit, and the background sound of the cafe is output from the headphones.

In other words, only at the output timing of the utterance of the user b, 11b, the user a, 11a can feel recognition that the user a, 11a instantaneously moves from the cafe to the park and has a conversation, and feel as if the user a, 11a returns to the original cafe when the utterance of the user b, 11b ends.

[4-4. (Processing Example 4) Processing Example in Case Where, in Case Where User is Spoken to by Other User and Has Conversation With Other User, Background Data Set in Own Terminal is Set to Continuously Output]

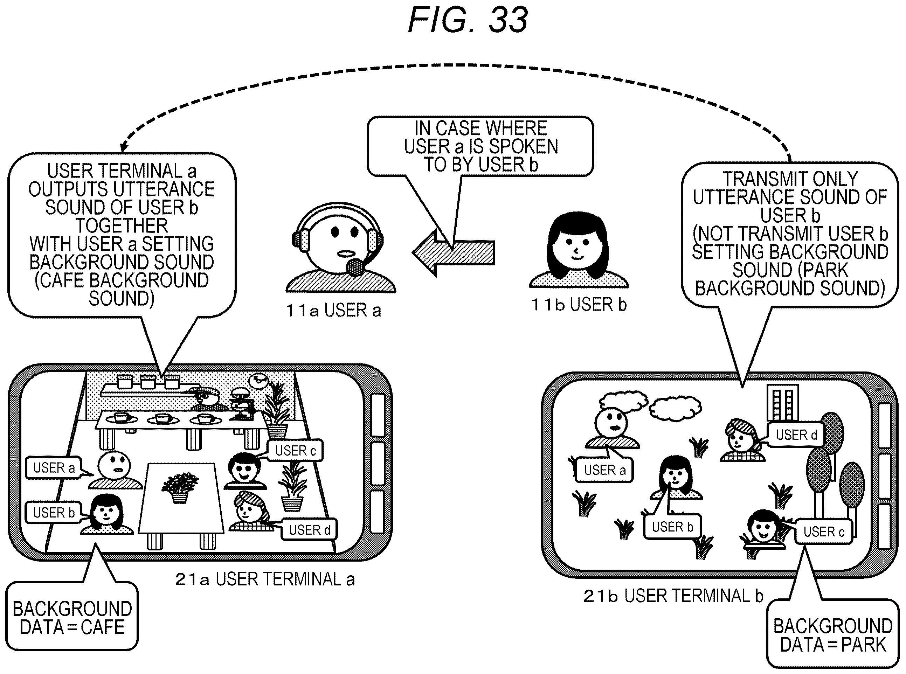

Next, with reference to Fig. 33, (Processing Example 4), that is, a processing example in a case where, in a case where the user is spoken to by another user and has a conversation with the other user, background data set in own terminal is set to continuously output will be described.

Similarly to Figs. 30 to 32, Fig. 33 illustrates the user a, 11a and the user b, 11b that have a conversation by communication.

The user a, 11a uses the user terminal a, 21a that has been set to output the background data of the cafe.

The user b, 11b uses the user terminal b, 21b that has been set to output the background data of the park.

In this setting, the user a, 11a is spoken to by the user b, 11b.

Note that the user b, 11b recognizes that the user b, 11b is talking to the user a, 11a in the park which is the background data set in the user terminal b, 21b.

The utterance by the user b, 11b is transmitted from the user terminal b, 21b to the user terminal a, 21a via the communication network.

Data transmitted from the user terminal b, 21b to the user terminal a, 21a is only the utterance sound data of the user b, 11b, and the background data set in the user terminal b, 21b, that is, the background image data and the background sound data of the park are not transmitted.

The user terminal a, 21a receives only the utterance sound data of the user b, 11b from the user terminal b, 21b. The output sound control unit 108 of the user terminal a, 21a executes output control on the received utterance sound data of the user b, 11b, and the controlled sound is output. For example, it is output from headphones worn by the user a, 11a connected to the user terminal a, 21a.

Note that the control processing executed for the response utterance of the user b, 11b is, for example, the control processing according to the first embodiment described above. That is, from the relative position of the user b, 11b with respect to the user a, 11a displayed on the user terminal a, 21a illustrated in Fig. 30, sound output control is performed so that the utterance of the user b, 11b can be heard, and output is performed.

Note that the background sound of the cafe set in the user terminal a, 11a is also continuously output from the headphones worn by the user a, 11a, and the response utterance of the user b, 11b is output from the headphones together with the background sound of the cafe.

With this output sound control processing, in the example illustrated in Fig. 33, the user a, 11a can have a conversation while recognizing that the user b, 11b is also in the same cafe as the user a, 11a.

On the other hand, the user b, 11b can have a conversation with the user a, 11a while recognizing that the user b, 11b is in the park which is the background data set in the user terminal b, 21b.

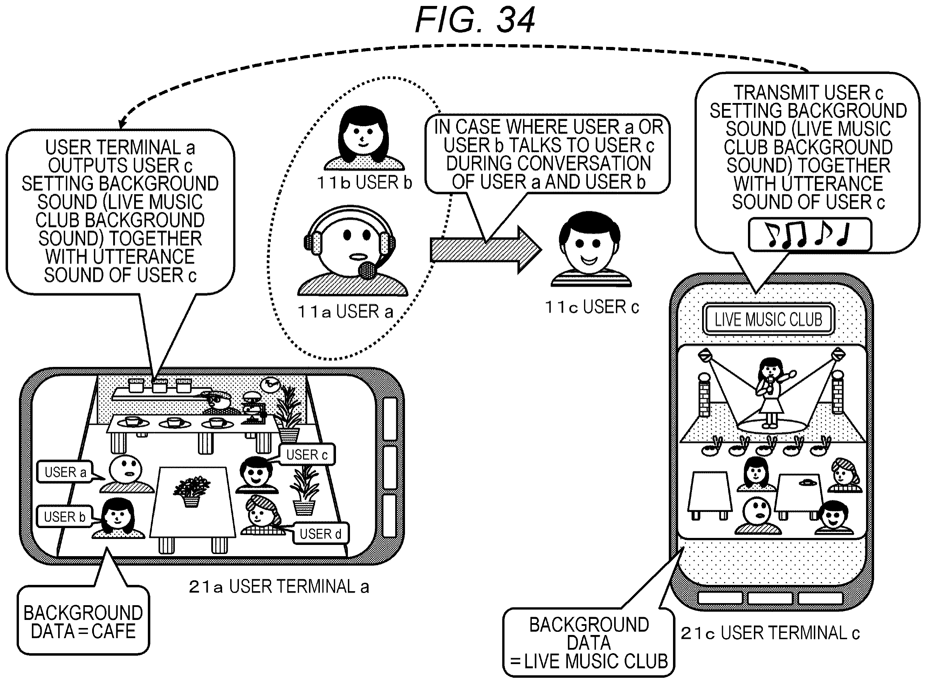

Next, processing examples in a case where the user talks to another new user or a case where the user is spoken to by a new user during a conversation of a plurality of users will be described with reference to Fig. 34 and subsequent drawings.

The following three types of processing examples will be sequentially described.

(Processing Example 5) A processing example in which, in a case where the user talks to another new user during a conversation of a plurality of users, background sound data of a user terminal of the new user is set to be transmitted and output to user terminals of the plurality of users during the conversation

(Processing Example 6) A processing example in which, in a case where the user talks to another new user during a conversation of a plurality of users, background sound data and background image data of a user terminal of the new user are set to be transmitted and output to user terminals of the plurality of users during the conversation

(Processing Example 7) A processing example in which, in a case where the user is spoken to by another new user during a conversation of a plurality of users, background sound data of a user terminal of the new user is set to be transmitted and output to user terminals of the plurality of users during the conversation

[4-5. (Processing Example 5) Processing example in which, in Case Where User Talks to Another New User During Conversation of Plurality of Users, Background Sound Data of User Terminal of New User is Set to be Transmitted and Output to User Terminals of Plurality of Users During Conversation]

First, with reference to Fig. 34, (Processing Example 5), that is, a processing example in which, in a case where the user talks to another new user during a conversation of a plurality of users, background sound data of a user terminal of the new user is set to be transmitted and output to user terminals of the plurality of users during the conversation will be described.

Fig. 34 illustrates the user a, 11a and the user b, 11b during a conversation, and further illustrates another new user c, 11c.

The user a, 11a uses the user terminal a, 21a that has been set to output the background data of the cafe.

The user c, 11c uses the user terminal c, 21c that has been set to output the background data of the live music club.

Although the user terminal b, 21b of the user b, 11b is not illustrated, the background data of the user terminal b, 21b can be set in various ways. The background data of the user terminal b, 21b is switched similarly to the user terminal a, 21a.

With this setting, the user a, 11a or the user b, 11b talks to the user c, 11c.

For example, the user c, 11c executes a response utterance to the talking from the user a, 11a.

Note that the user c, 11c recognizes the talking from the user a, 11a as a talking from the user a, 11a in the live music club, which is the background data set in the user terminal c, 21c.

The response utterance by the user c, 11c is transmitted from the user terminal c, 21c to the user terminal a, 21a and the user terminal b, 21b via the communication network.

In this (Processing Example 5), not only the utterance sound data of the user c, 11c but also the background sound data of the live music club set in the user terminal c, 21c are transmitted from the user terminal c, 21c to the user terminal a, 21a and the user terminal b, 21b. However, the background image data of the live music club is not transmitted.

The user terminal a, 21a and the user terminal b, 21b receive the utterance sound data of the user c, 11c and the background sound data of the live music club from the user terminal c, 21c. The output sound control unit 108 of each of the user terminal a, 21a and the user terminal b, 21b executes output control on the received background sound data of the live music club and the utterance sound data of the user c, 11c, and outputs the controlled sound. For example, it is output from headphones connected to the user terminal a, 21a and the user terminal b, 21b.

Note that the output sound control unit 108 of the user terminal a, 21a performs control processing similar to the (Processing Example 1) described with reference to Fig. 30 on the response utterance of the user c, 11c. That is, in the control processing according to the first embodiment described above, from the relative position of the user c, 11c with respect to the user a, 11a displayed on the user terminal a, 21a illustrated in Fig. 34, sound output control is performed so that the utterance of the user c, 11c can be heard, and output is performed.

Note that the background sound of the live music club received from the user terminal c, 11c is output from the headphones worn by the user a, 11a only at the output timing of the utterance of the user c, 11c.

That is, background sound data of the cafe, which is the background sound set in the user terminal a, 21a, is output from the headphones worn by the users a, 11a except for the output timing of the utterance of the user c, 11c, but only at the output timing of the utterance of the user c, 11c, the background sound data is switched to the background sound of the live music club received from the user terminal c, 11c.

With this output sound control processing, the user a, 11a can recognize that the user c, 11c is having a conversation in the setting of being in the live music club.

Note that, although not illustrated, similar processing is also executed in the user terminal b, 21b. The utterance sound of the user c, 11c and the background sound of the live music club are also transmitted to the user terminal b, 21b, and these pieces of sound data are output via the user terminal b, 21b.

For example, in a case where the background data set in the user terminal b, 21b is the background data of the park, the background sound of the park is switched to the background sound of the live music club and output only at the output timing of the utterance sound of the user c, 11c.

With this output sound control processing, the user b, 11b can recognize that the user c, 11c is having a conversation in the setting of being in the live music club.

[4-6. (Processing Example 6) Processing Example in which, in Case Where User Talks to Another New User During Conversation of Plurality of Users, Background Sound Data and Background Image Data of User Terminal of New User are Set to be Transmitted and Output to User Terminals of Plurality of Users During Conversation]

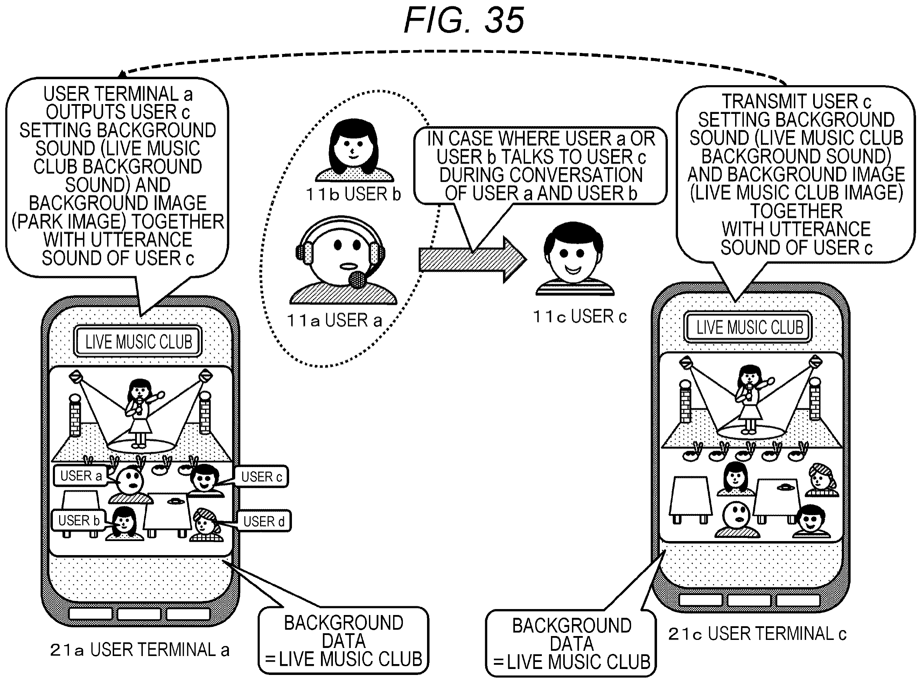

Next, with reference to Fig. 35, (Processing Example 6), that is, a processing example in which, in a case where the user talks to another new user during a conversation of a plurality of users, background sound data and background image data of a user terminal of the new user are set to be transmitted and output to user terminals of the plurality of users during the conversation will be described.

Similarly to Fig. 34, Fig. 35 illustrates the user a, 11a and the user b, 11b during a conversation, and further illustrates another new user c, 11c.

The user a, 11a uses the user terminal a, 21a that has been set to output the background data of the cafe. Note that Fig. 35 illustrates a state after the background image of the user terminal a, 21a is switched to the background data of the live music club.

The user c, 11c uses the user terminal c, 21c that has been set to output the background data of the live music club.

Although the user terminal b, 21b of the user b, 11b is not illustrated, the background data of the user terminal b, 21b can be set in various ways. The background data of the user terminal b, 21b is switched similarly to the user terminal a, 21a.

With this setting, the user a, 11a or the user b, 11b talks to the user c, 11c.

For example, the user c, 11c executes a response utterance to the talking from the user a, 11a.

Note that the user c, 11c recognizes the talking from the user a, 11a as a talking from the user a, 11a in the live music club, which is the background data set in the user terminal c, 21c.

The response utterance by the user c, 11c is transmitted from the user terminal c, 21c to the user terminal a, 21a and the user terminal b, 21b via the communication network.

In this (Processing Example 6), not only the utterance sound data of the user c, 11c but also the background sound data and the background image data of the live music club set in the user terminal c, 21c are transmitted from the user terminal c, 21c to the user terminal a, 21a and the user terminal b, 21b.

The user terminal a, 21a and the user terminal b, 21b receive the utterance sound data of the user c, 11c, the background sound data of the live music club, and the background image data from the user terminal c, 21c.

The output sound control unit 108 of each of the user terminal a, 21a and the user terminal b, 21b executes output control on the received background sound data of the live music club and the utterance sound data of the user c, 11c, and outputs the controlled sound. For example, it is output from headphones connected to the user terminal a, 21a and the user terminal b, 21b.

Note that the output sound control unit 108 of the user terminal a, 21a performs control processing similar to the (Processing Example 1) described with reference to Fig. 30 on the response utterance of the user c, 11c. That is, in the control processing according to the first embodiment described above, from the relative position of the user c, 11c with respect to the user a, 11a displayed on the user terminal a, 21a illustrated in Fig. 34, sound output control is performed so that the utterance of the user c, 11c can be heard, and output is performed.

Note that the background sound of the live music club received from the user terminal c, 11c is output from the headphones worn by the user a, 11a only at the output timing of the utterance of the user c, 11c.

That is, background sound data of the cafe, which is the background sound set in the user terminal a, 21a, is output from the headphones worn by the users a, 11a except for the output timing of the utterance of the user c, 11c, but only at the output timing of the utterance of the user c, 11c, the background sound data is switched to the background sound of the live music club received from the user terminal c, 11c.

Furthermore, the output image control unit 108 of the user terminal a, 21a outputs the background image data of the live music club received from the user terminal c, 21c to the display unit of the user terminal a, 21a in accordance with the output timing of the response utterance of the user c, 11c.

This is a state of the display unit of the user terminal a, 21a illustrated in Fig. 35.

However, the user image (avatar image or real image) of each user arranged on the background image of the live music club displayed on the display unit of the user terminal a, 21a is arranged according to the user position stored in the user position information storage unit 103 of the user terminal a, 21a. That is, the user image is displayed at a position similar to the user position arranged on the image of the cafe which is the background data set in the user terminal a, 21a.

With these pieces of processing, at the output timing of the utterance of the user c, 11c, the background data of the live music club is displayed on the display unit of the user terminal a, 21a, and the background sound of the live music club is output from the headphones worn by the user a, 11a.

Note that, although not illustrated, similar processing is also executed in the user terminal b, 21b. The utterance sound of the user c, 11c, and the background image data and the background sound data of the live music club are also transmitted to the user terminal b, 21b, and the image data and the sound data are output via the user terminal b, 21b.

For example, in a case where the background data set in the user terminal b, 21b is the background data of the park, only at the output timing of the utterance sound of the user c, 11c, the background image of the park is switched to the background image of the live music club and displayed, and the background sound is also switched from the background sound of the park to the background sound of the live music club and output.

With the image output control and the output sound control processing, the user b, 11b can also recognize that the user b, 11b is having a conversation with the setting of being in the live music club together with the user c, 11c.

With the output image control processing and the output sound control processing, in the example illustrated in Fig. 35, at the output timing of the utterance of the user c, 11c, the user a, 11a and the user b, 11b can recognize that the user a, 11a and the user b, 11b have a conversation with the setting of being in the live music club venue together with the user c, 11c.

Note that, when the utterance of the user c, 11c ends, the background data of the user terminal a, 21a is switched to the original background data of the cafe, and the background data of the user terminal b, 21b is also switched to the original background data, for example, the background data of the park.

That is, the background image of the cafe is displayed on the display unit of the user terminal a, 21a, and the background sound of the cafe is output from the headphones. Furthermore, the background image of the park is displayed on the display unit of the user terminal b, 21b, and the background sound of the park is output from the headphones.

In other words, the user a, 11a and the user b, 11b can feel recognition that they instantaneously move from a cafe or a park to a live music club venue and have a conversation only at the output timing of the utterance of the user c, 11c, and feel as if they return to the original cafe or park when the utterance of the user c, 11c ends.

[4-7. (Processing Example 7) Processing Example in which, in Case Where User is Spoken by Another New User During Conversation of Plurality of Users, Background Sound Data of User Terminal of New User is Set to be Transmitted and Output to User Terminals of Plurality of Users During Conversation]

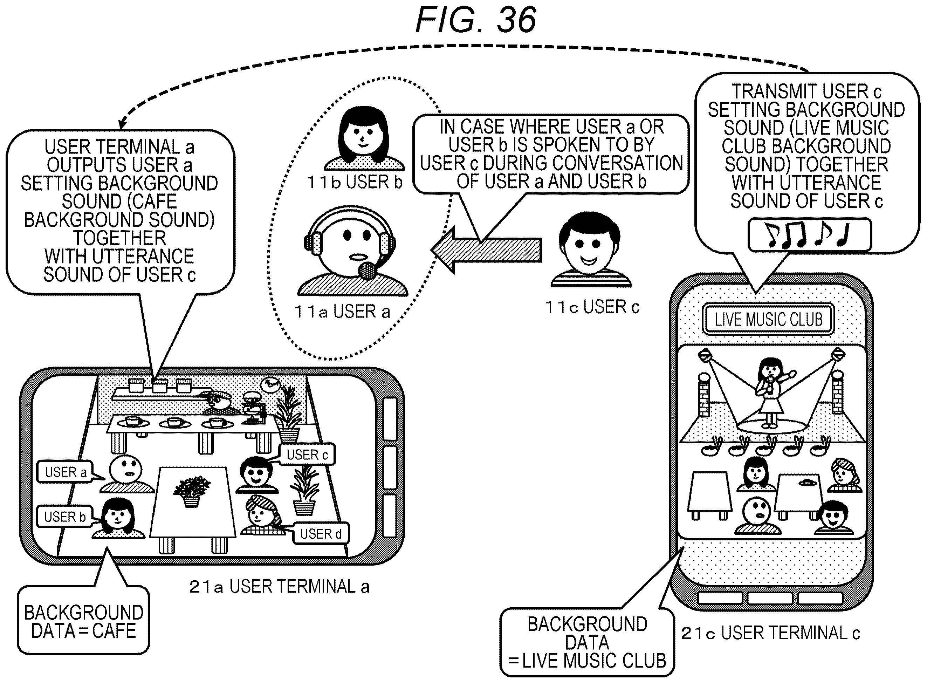

Next, with reference to Fig. 36, (Processing Example 7), that is, a processing example in which, in a case where the user is spoken to by another new user during a conversation of a plurality of users, background sound data of a user terminal of the new user is set to be transmitted and output to user terminals of the plurality of users during the conversation will be described.

Similarly to Figs. 34 and 35, Fig. 36 illustrates the user a, 11a and the user b, 11b during a conversation, and further illustrates another new user c, 11c.

The user a, 11a uses the user terminal a, 21a that has been set to output the background data of the cafe.

The user c, 11c uses the user terminal c, 21c that has been set to output the background data of the live music club.

Although the user terminal b, 21b of the user b, 11b is not illustrated, the background data of the user terminal b, 21b can be set in various ways. The background data of the user terminal b, 21b is switched similarly to the user terminal a, 21a.

In this setting, the user a, 11a or the user b, 11b is spoken to by the user c, 11c.

Note that, for example, the user c, 11c recognizes that the talking to the user a, 11a is a talking to the user a, 11a in the live music club, which is the background data set in the user terminal c, 21c.

The utterance of the user c, 11c is transmitted from the user terminal c, 21c to the user terminal a, 21a and the user terminal b, 21b via the communication network.

In this (Processing Example 7), not only the utterance sound data of the user c, 11c but also the background sound data of the live music club set in the user terminal c, 21c are transmitted from the user terminal c, 21c to the user terminal a, 21a and the user terminal b, 21b. However, the background image data of the live music club is not transmitted.

The user terminal a, 21a and the user terminal b, 21b receive the utterance sound data of the user c, 11c and the background sound data of the live music club from the user terminal c, 21c. The output sound control unit 108 of each of the user terminal a, 21a and the user terminal b, 21b executes output control on the received background sound data of the live music club and the utterance sound data of the user c, 11c, and outputs the controlled sound. For example, it is output from headphones connected to the user terminal a, 21a and the user terminal b, 21b.

Note that the output sound control unit 108 of the user terminal a, 21a performs control processing similar to the (Processing Example 1) described with reference to Fig. 30 on the utterance of the user c, 11c. That is, in the control processing according to the first embodiment described above, from the relative position of the user c, 11c with respect to the user a, 11a displayed on the user terminal a, 21a illustrated in Fig. 34, sound output control is performed so that the utterance of the user c, 11c can be heard, and output is performed.

Note that the background sound of the live music club received from the user terminal c, 11c is output from the headphones worn by the user a, 11a only at the output timing of the utterance of the user c, 11c.

That is, background sound data of the cafe, which is the background sound set in the user terminal a, 21a, is output from the headphones worn by the users a, 11a except for the output timing of the utterance of the user c, 11c, but only at the output timing of the utterance of the user c, 11c, the background sound data is switched to the background sound of the live music club received from the user terminal c, 11c.

With this output sound control processing, the user a, 11a can recognize that the user c, 11c is having a conversation in the setting of being in the live music club.

Note that, although not illustrated, similar processing is also executed in the user terminal b, 21b. The utterance sound of the user c, 11c and the background sound of the live music club are also transmitted to the user terminal b, 21b, and these pieces of sound data are output via the user terminal b, 21b.

For example, in a case where the background data set in the user terminal b, 21b is the background data of the park, the background sound of the park is switched to the background sound of the live music club and output only at the output timing of the utterance sound of the user c, 11c.

With this output sound control processing, the user b, 11b can recognize that the user c, 11c is having a conversation in the setting of being in the live music club.

A plurality of processing examples in a case where different background data is used in each user terminal has been described above with reference to Figs. 29 to 36.

In this manner, the users a, 11a to d, 11d can have a conversation with each other while outputting different background data to the user terminals a, 21a to d, 21d, and the user positions displayed on the user terminals can also be set to different positions in the user terminals. That is, the fixed user position described in the first embodiment, the position according to the degree of intimacy described in the second embodiment, and the like can be freely set.

As described with reference to Figs. 30 to 36, in a case where different background data is output to the user terminal, any one of the processing of continuously outputting the background data set in the own terminal and the processing of receiving the background data set in the user terminal of the conversation partner and outputting the background data to the own terminal can be performed, and these settings can be individually set in each user terminal using, for example, a UI or the like.

[5. Example of Specific Processing Sequence of Outputting Background Data to User Terminal and Having Conversation Between Users]

Next, an example of a specific processing sequence of outputting background data to the user terminal and having a conversation between users will be described.

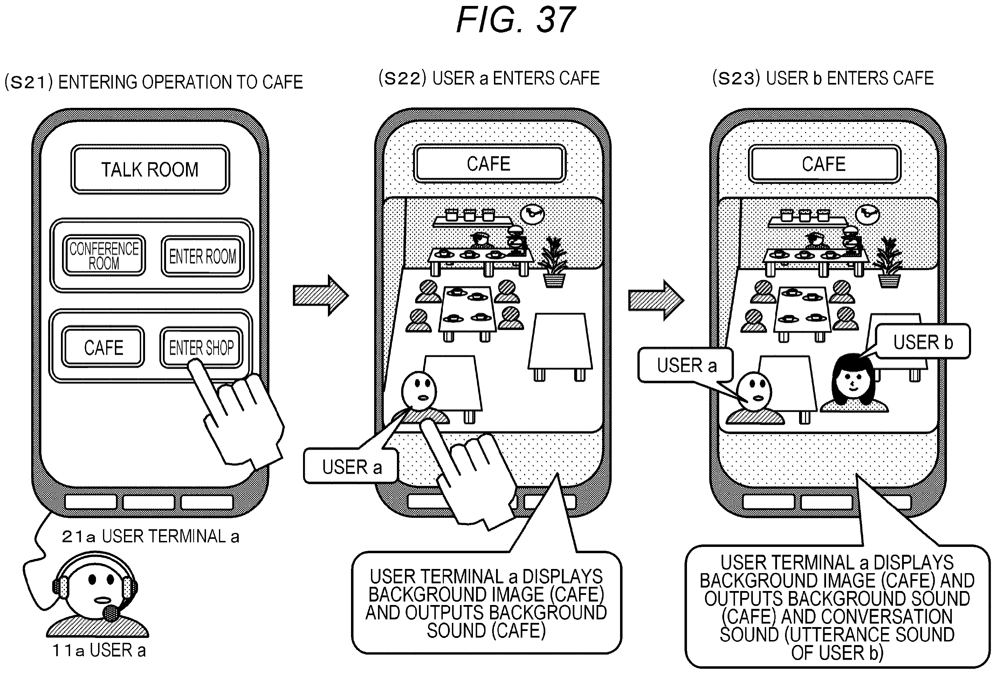

A processing example in a case where the user a, 11a has a conversation with another user via a network using the user terminal a, 21a will be described with reference to Fig. 37 and subsequent drawings.

The processing of each of step S21 and subsequent steps illustrated in Fig. 37 will be sequentially described.

(Step S21)

First, the user a, 11a performs background data selection processing for starting a conversation via the network on the display unit of the user terminal a, 21a.

The example illustrated in Fig. 37 (S21) is an example of the background data selection UI for selecting a venue of a conversation via the network.

The example illustrated in the drawing is an example in which two candidates of "Conference room" and "Cafe" are displayed as selectable background data as candidates of background data as a setting place of a talk room.

The user a, 11a performs a user operation of selecting "Café" as background data and touching the "Enter shop" button.

(Step S22)

When the background data of "cafe" is selected as the background data by the user operation in step S21, the background image of the cafe is displayed on the display unit of the user terminal a, 21a in step S22. Furthermore, a user image (avatar image) of the user a, 11a is displayed on the background image of the cafe.

Note that the display position of the user image (avatar image) of the user a, 11a can be set at an arbitrary position in the background image according to the preference of the user a, 11a. Alternatively, for example, as in the example illustrated in Fig. 37 (S22), display may be performed at a predetermined position such as the lower left of the background image.

Furthermore, the background sound of the cafe is output from the speaker of the user terminal a, 21a or the headphone connected to the user terminal a, 21a.

(Step S23)

In the next step S23, the user b, 11b enters the cafe.

The user b, 11b can also enter the same cafe where the user a, 11a enters by executing an operation similar to the processing in steps S21 to S22 described above on its own terminals 21b.

Note that the display position of the user b, 11b in the display data of the user terminal a, 21a illustrated in Fig. 37 (S23) is a position determined according to the processing according to the second embodiment described above, that is, the degree of intimacy.

In this state, the user a, 11a and the user b, 11b start a conversation.

(Step S24)

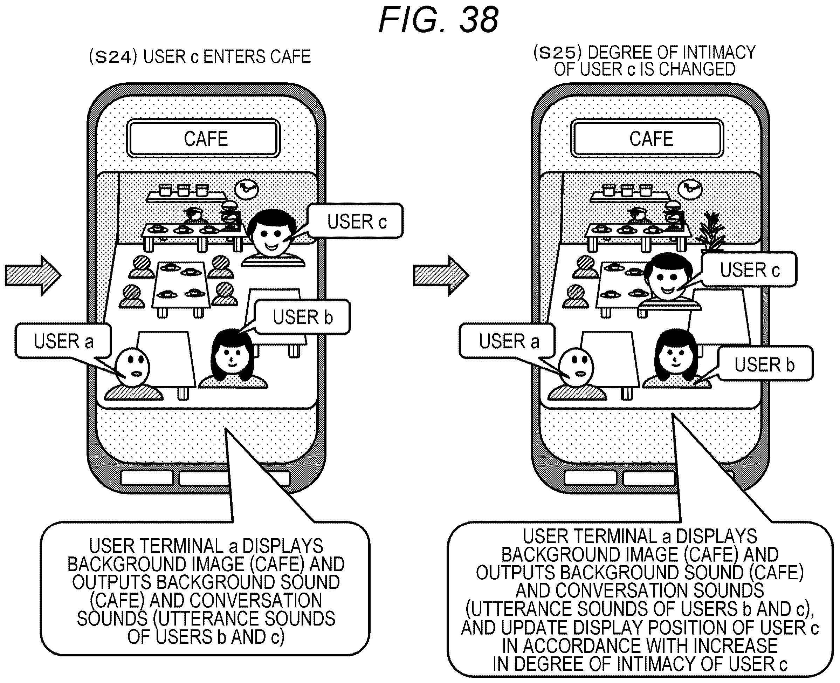

In the next step S24 illustrated in Fig. 38, the user c, 11c enters the cafe.

The user c, 11c can also enter the same cafe where the user a, 11a and the user b, 11b enter by executing an operation similar to the processing in steps S21 to S22 described above on its own user terminal 21c.

Note that the display position of the user c, 11c in the display data of the user terminal a, 21a illustrated in Fig. 38 (S24) is also a position determined according to the processing according to the second embodiment described above, that is, the degree of intimacy.

In this state, the user a, 11a, the user b, 11b, and the user c, 11c can have a conversation with each other.

Note that the output sound control unit 108 of the user terminal a, 21a executes control to adjust the sound direction and volume of the utterance of each user according to the display position of each user.

The output sound control unit 108 performs control so that the output sound from the speaker and the headphone used by the user a, 11a becomes a sound similar to that as if each voice of the users b and c is heard from the display positions of the user b, 11b and the user c, 11c at the position of the user a, 11a displayed on the display unit of the user terminal a, 21a.

(Step S25)

Next step S25 illustrates an example in which, as a result of the user a, 11a, the user b, 11b, and the user c, 11c having a conversation with each other, the degree of intimacy of the user a, 11a with respect to the user c, 11c increases, and the display position update processing of the user is performed in accordance with the increase in the degree of intimacy.

As the degree of intimacy increases, the output image control unit 110 of the user terminal a, 21a executes update processing of the user display position for moving the display position of the user c, 11c to a position close to the display position of the user a, 11a.

(Step S26)

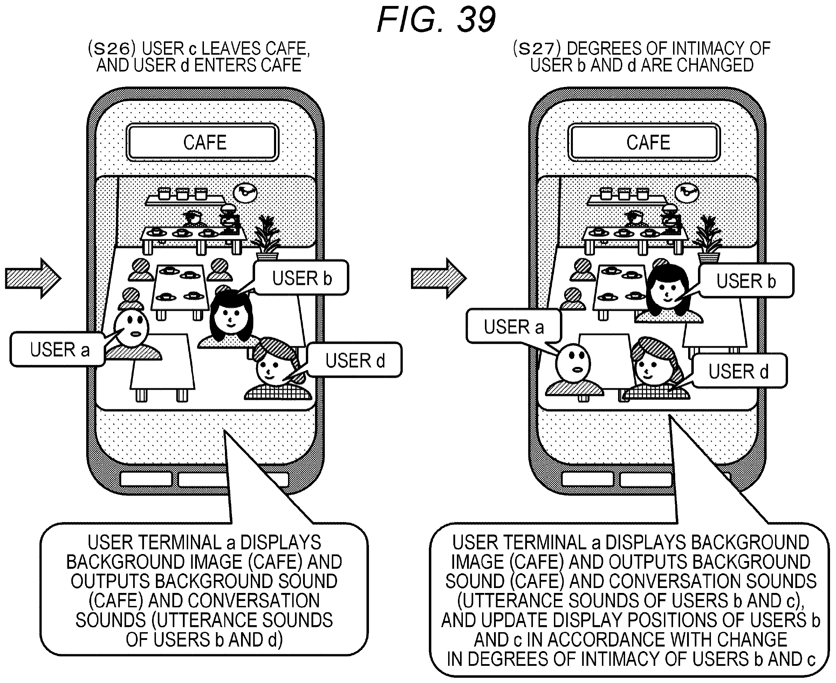

In the next step S26 illustrated in Fig. 39, the user c, 11c leaves the cafe, and the user d, 11d enters the cafe.

The user d, 11d can enter the same cafe where the user a, 11a and the user b, 11b enter by executing an operation similar to the processing in steps S21 to S22 described above on its own user terminal 21d.

Note that the display position of the user d, 11d in the display data of to the user terminal a, 21a illustrated in Fig. 39 (S26) is also a position determined according to the processing according to the second embodiment described above, that is, the degree of intimacy.

In this state, the user a, 11a, the user b, 11b, and the user d, 11d can have a conversation with each other.

Note that the output sound control unit 108 of the user terminal a, 21a executes control to adjust the sound direction and volume of the utterance of each user according to the display position of each user.

The output sound control unit 108 performs control so that the output sound from the speaker and the headphone used by the user a, 11a becomes a sound similar to that as if each voice of the users b and d is heard from the display positions of the user b, 11b and the user d, 11d at the position of the user a, 11a displayed on the display unit of the user terminal a, 21a.

(Step S27)

Next, Step S27 illustrates an example in which, as a result of the user a, 11a, the user b, 11b, and the user d, 11d having a conversation with each other, the degree of intimacy of the user a, 11a with respect to the user b, 11b and the user c, 11c changes, and the display position update processing of each user is performed according to the change in the degree of intimacy.

With this change in the degree of intimacy, the output image control unit 110 of the user terminal a, 21a executes user display position update processing of changing the display positions of the user c, 11c and the user d, 11d.

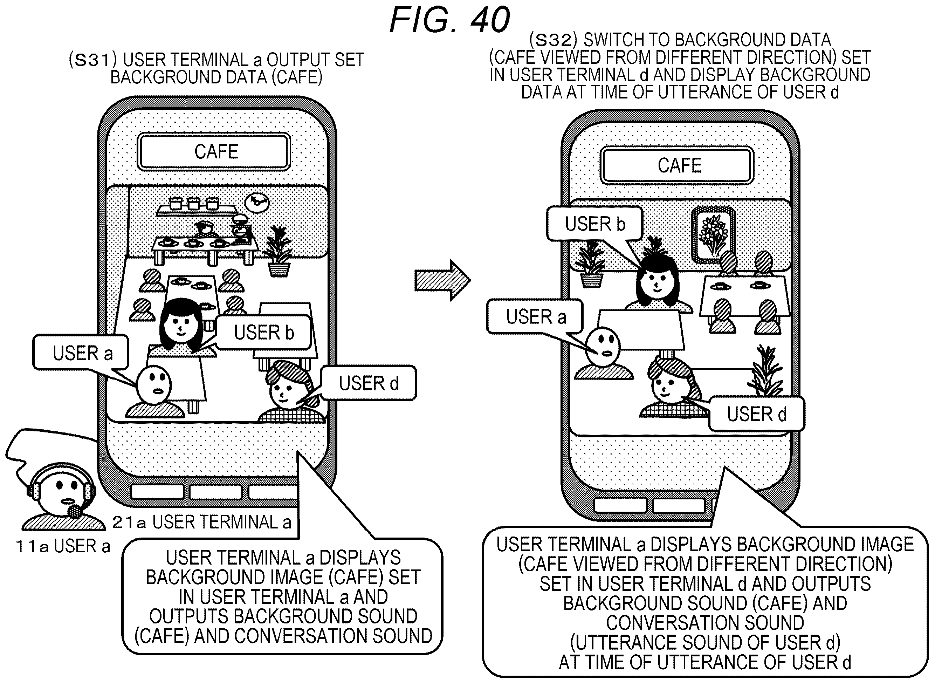

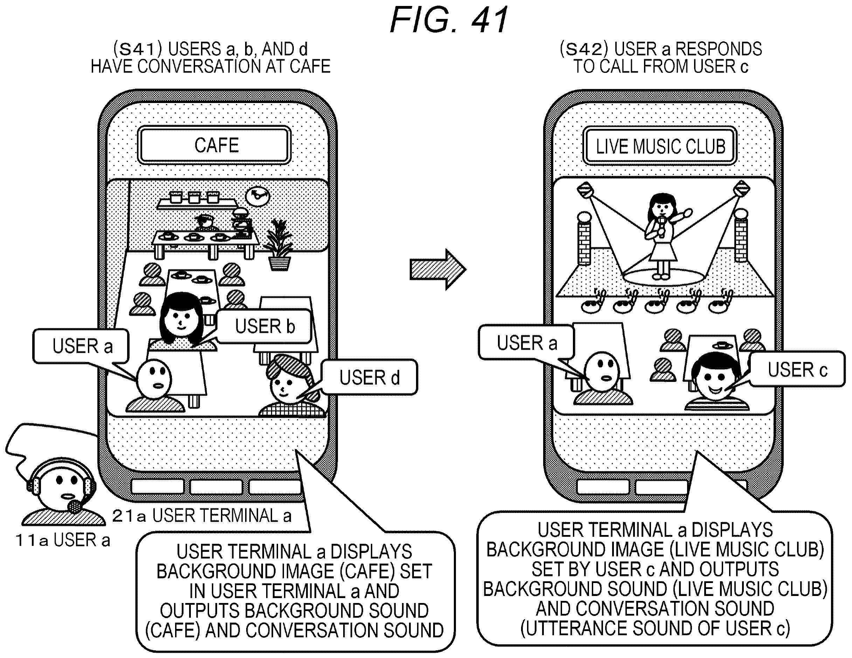

Next, an example of background data (image, sound) switching processing will be described with reference to Figs. 40 and 41.

First, with reference to Fig. 40, a processing example will be described in which the background image of the cafe is switched to an image of the cafe, which is the background image of the same cafe but is viewed from a different direction.

(Step S31)

Step S31 is a state in which the user a, 11a, the user b, 11b, and the user d, 11d are having a conversation with each other while outputting the background image and the background sound of the cafe which is the background data set by the user a, 11a to the user terminal a, 21a.

(Step S32)

Step S32 is an example in which, at the time of utterance of the user d, 11d, background data set in the user terminal d, that is, background data (image data and sound data) including image data of a cafe viewed from a different direction is input from the user terminal d, 21d, which is the use terminal of the user d, 11d, along with the user utterance, and is output to the user terminal a, 21a.

As described above, even in the background data of the same cafe, in a case where the background images viewed from different positions are used for each user, these images can be received from the user terminals, switched, and output.

Next, a processing example of switching from the background data of the cafe to the background data of the live music club will be described with reference to Fig. 41.

(Step S41)

Step S41 is a state in which the user a, 11a, the user b, 11b, and the user d, 11d are having a conversation with each other while outputting the background image and the background sound of the cafe which is the background data set by the user a, 11a to the user terminal a, 21a.

(Step S42)

Step S42 illustrates a processing example in a case where the user a, 11a responds to a call from the user c, 11c who has not entered the cafe.

At the time of receiving the utterance of the user c, 11c who does not enter the cafe, the user terminal a, 11a inputs the background data set in the user terminal c, 21c, that is, the background data (image data and sound data) including the image data of the live music club together with the reception of the user utterance from the user terminal c, 21c which is the use terminal of the user c, 11c.

When outputting the call utterance from the user c, 11c via the speaker or the headphones, the user terminal a, 21a displays the background data received from the user terminal c, 21c, that is, the image data of the live music club on the display unit, and outputs the sound data of the live music club via the speaker or the headphones.

By this processing, it becomes possible for the user a, 11a to recognize that the user c, 11c is calling from the live music club, and if interested, it becomes possible to move to the live music club and have a conversation with the user c, 11c.

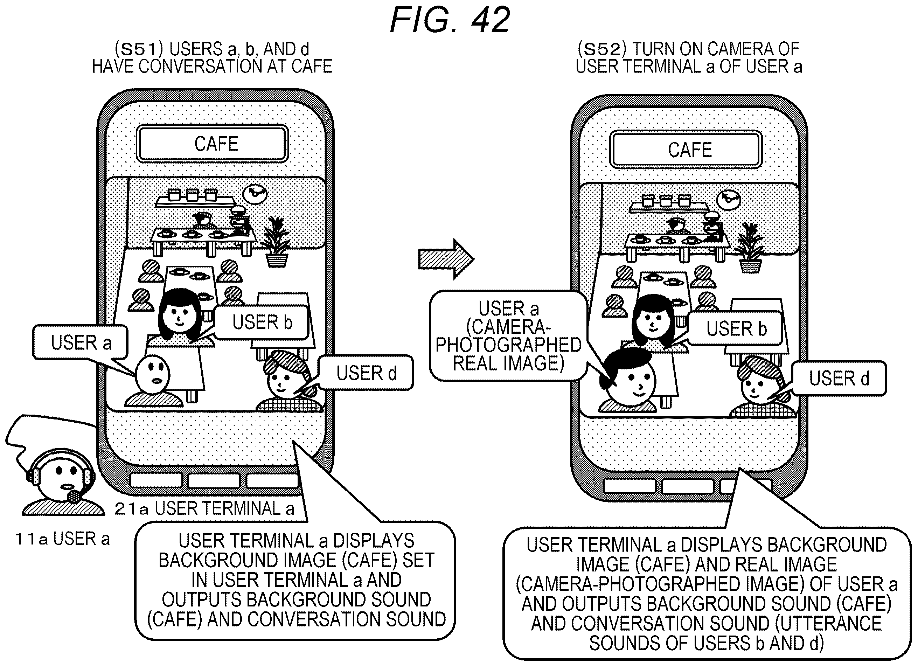

Next, a processing example of switching the user image displayed on the user terminal from the avatar image to the real image of the user (camera-photographed image) will be described with reference to Fig. 42.

(Step S51)

Step S51 is a state in which the user a, 11a, the user b, 11b, and the user d, 11d are having a conversation with each other while outputting the background image and the background sound of the cafe which is the background data set by the user a, 11a to the user terminal a, 21a.

Here, the image of the user a, 11a displayed on the display unit of the user terminal a, 21a is a virtual character image, that is, an avatar image indicating the user a.

(Step S52)

Step S52 illustrates an example in which the user a, 11a activates the camera of the user terminal a, 21a, photographs the face image of the user a, 11a, and switches the avatar image of the user a, 11a displayed on the display unit of the user terminal a, 21a to the real image of the user a, 11a, that is, the camera-photographed image.

Note that the face image of the user a, 11a photographed by the camera of the user terminal a, 21a is also transmitted to the user terminal b, 21b of the user b, 11b and the user terminal d, 21d of the users d, 11d, which are other users executing a conversation via the network, and the real image (camera-photographed image) of the user a, 11a is also displayed on the display units of these user terminals.

[6. Hardware Configuration Example of User Terminal and Server]

Next, a hardware configuration example of the user terminal and the server will be described.

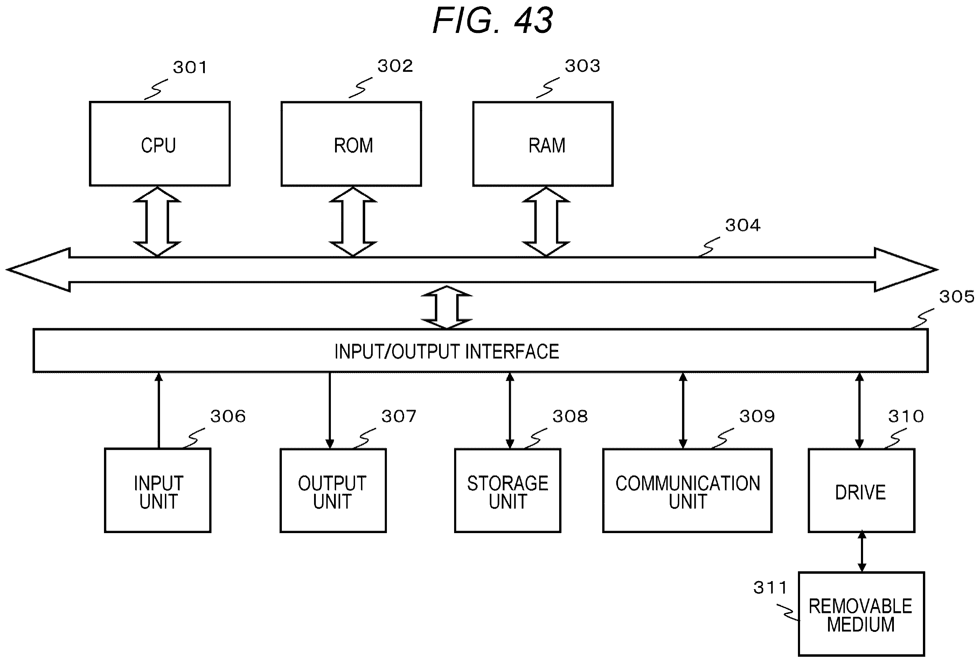

Fig. 43 is a diagram illustrating an example of a hardware configuration of the user terminal 21 and the server of the present disclosure.

Hereinafter, the hardware configuration illustrated in Fig. 43 will be described.

A central processing unit (CPU) 301 functions as a control unit and a data processing unit that executes various kinds of processing in accordance with a program stored in a read only memory (ROM) 302 or a storage unit 308. For example, the CPU 301 executes the processing according to the sequence described in the above-described embodiments. A random access memory (RAM) 303 stores programs, data, or the like to be performed by the CPU 301. The CPU 301, the ROM 302, and the RAM 303 are connected to one another by a bus 304.

The CPU 301 is connected to an input/output interface 305 via the bus 304, and an input unit 306 including various switches, a keyboard, a mouse, a microphone, a sensor, and the like, and an output unit 307 including a display, a speaker, and the like are connected to the input/output interface 305. The CPU 301 performs various kinds of processing in accordance with a command input from the input unit 306, and outputs a processing result to the output unit 307, for example.

The storage unit 308 connected to the input/output interface 305 includes, for example, a hard disk, or the like and stores programs executed by the CPU 301 and various types of data. A communication unit 309 functions as a transmission-reception unit for Wi-Fi communication, Bluetooth (registered trademark) (BT) communication, and other types of data communication via a network such as the Internet or a local area network, and communicates with external devices.

A drive 310 connected to the input/output interface 305 drives a removable medium 311 such as a magnetic disk, an optical disk, a magneto-optical disk, or a semiconductor memory such as a memory card, and records or reads data.

[7. Summary of Configurations of Present Disclosure]

The embodiments of the present disclosure have been described above in detail with reference to specific embodiments. However, it is obvious that those skilled in the art can modify or substitute the example without departing from the gist of the present disclosure. That is, the present invention has been disclosed in the form of exemplification, and should not be interpreted in a limited manner. In order to determine the gist of the present disclosure, the claims should be considered.

Note that the technology disclosed herein can have the following configurations.

(1) An information processing apparatus including:

a communication unit that receives a user utterance of a conversation partner via a network; and
an output sound control unit that executes output control of the user utterance, in which
the output sound control unit
executes sound direction control so that the user utterance is heard as an utterance from a user position of the conversation partner with respect to a predefined self-position.

(2) The information processing apparatus according to (1), in which

the output sound control unit
executes volume control so that the user utterance is heard as an utterance from the user position of the conversation partner with respect to a predefined self-position.

(3) The information processing apparatus according to (1) or (2), in which the user position of the conversation partner with respect to the self position is a fixed position determined in advance.

(4) The information processing apparatus according to any one of (1) to (3), in which the user position of the conversation partner with respect to the self position is a position determined according to a degree of intimacy with the conversation partner.

(5) The information processing apparatus according to (4), in which

the user position of the conversation partner with respect to the self position is determined to be
a position closer to the self position as the degree of intimacy with the conversation partner is higher, and
a position farther from the self position as the degree of intimacy with the conversation partner is lower.

(6) The information processing apparatus according to any one of (1) to (5), further including a degree-of-intimacy calculation unit that calculates a degree of intimacy with respect to a conversation partner user, in which

the user position of the conversation partner with respect to the self position is
a position determined according to the degree of intimacy calculated by the degree-of-intimacy calculation unit.

(7) The information processing apparatus according to (6), in which

the degree-of-intimacy calculation unit
calculates a degree of intimacy according to a preference of a use user of the information processing apparatus with respect to the conversation partner user.

(8) The information processing apparatus according to (7), in which

the degree-of-intimacy calculation unit
analyzes a preference of the use user of the information processing apparatus with respect to the conversation partner user on the basis of a past history.

(9) The information processing apparatus according to any one of (6) to (8), in which

the degree-of-intimacy calculation unit
calculates a degree of intimacy according to a conversation density between the use user of the information processing apparatus and the conversation partner user.

(10) The information processing apparatus according to any one of (1) to (9), further including an output image control unit that performs image output control on a display unit, in which

the output image control unit
executes processing of displaying a self-user image indicating a self-user and a user image of the conversation partner on the display unit.

(11) The information processing apparatus according to (10), in which

the output image control unit
displays a background image determined by a user who uses the information processing apparatus on the display unit, and
displays a user image of a user who has a conversation on the background image.

(12) The information processing apparatus according to (10) or (11), in which

the output image control unit
executes processing of displaying a self-user image indicating a self-user and a user image of the conversation partner at a fixed position determined in advance.

(13) The information processing apparatus according to any one of (6) to (12), further including an output image control unit that performs image output control on a display unit, in which

the output image control unit
determines a display position of a user image of the conversation partner with respect to a self-user image indicating a self-user according to the degree of intimacy calculated by the degree-of-intimacy calculation unit.

(14) The information processing apparatus according to any one of (10) to (13), in which

the output image control unit
executes processing of switching a background image to be displayed on the display unit from a background image set on an own terminal to a background image set by a user terminal of the conversation partner at a timing of outputting a user utterance of the conversation partner.

(15) The information processing apparatus according to any one of (1) to (14), in which

the output sound control unit
executes processing of outputting, via a sound output unit, a background sound determined by a user who uses the information processing apparatus.

(16) The information processing apparatus according to any one of (1) to (15), in which

the output sound control unit
executes processing of switching a background sound to be output to a sound output unit from a background sound set on an own terminal to a background sound set by a user terminal of the conversation partner
at a timing of outputting a user utterance of the conversation partner.

(17) An information processing method executed in an information processing apparatus,
the information processing apparatus including:

a communication unit that receives a user utterance of a conversation partner via a network; and
an output sound control unit that executes output control of the user utterance, and
the output sound control unit
executing sound direction control so that the user utterance is heard as an utterance from a user position of the conversation partner with respect to a predefined self-position.

(18) A program for causing an information processing apparatus to execute information processing,
the information processing apparatus including:

a communication unit that receives a user utterance of a conversation partner via a network; and
an output sound control unit that executes output control of the user utterance, and
the program causing the output sound control unit
to execute sound direction control so that the user utterance is heard as an utterance from a user position of the conversation partner with respect to a predefined self-position.

In addition, a series of processing described herein can be executed by hardware, software, or a combined configuration of hardware and software. In a case where processing based on software is executed, a program in which a processing sequence is recorded can be installed in a memory in a computer incorporated in dedicated hardware and executed, or the program can be installed in a general-purpose computer capable of executing various types of processing and executed. For example, the program can be recorded in advance in a recording medium. Instead of installing the program on a computer from a storage medium, the program may be received via a network such as a local area network (LAN) or the Internet, and installed in a storage medium such as an internal hard disk or the like.

Note that the various kinds of processing described herein may be executed not in a chronological order in accordance with the description, but in parallel or individually depending on processing capability of an apparatus that executes the processing or depending on the necessity. Furthermore, a system in the present specification is a logical set configuration of a plurality of devices, and is not limited to a system in which devices of the respective configurations are in the same housing.

INDUSTRIAL APPLICABILITY

As described above, according to the configuration of the embodiment of the present disclosure, the configuration is realized in which sound direction control is executed so that the user utterance of the conversation partner via the network is heard as an utterance from the user position of the conversation partner with respect to the predefined self-position.

Specifically, for example, a communication unit that receives a user utterance of a conversation partner via a network, and an output sound control unit that executes output control of the user utterance are included. An output sound control unit executes sound direction control and volume control so that a user utterance is heard as an utterance from a user position of a conversation partner with respect to a predefined self-position. The user position of the conversation partner with respect to the self position is determined according to a predetermined fixed position or a degree of intimacy with the conversation partner, and is set to a position closer to the self position as the degree of intimacy is higher.

With the present configuration, the configuration is realized in which sound direction control is executed so that the user utterance of the conversation partner via the network is heard as the utterance from the user position of the conversation partner with respect to the predefined self-position.

REFERENCE SIGNS LIST

11      User
21      User terminal
50      Communication management server
70      Background data provision server
101     Communication unit
102     User position determination unit (UI)
103     User position information storage unit
104     Background data acquisition unit
105     Sound data storage unit
106     Image data storage unit
107     Sound data receiving unit
108     Output sound control unit
109     Sound output unit
110     Output image control unit
111     Image output unit
112     Display unit
113     Sound input unit
114     Camera
115     Image input unit

116     Data transmission unit
121     Degree-of-intimacy calculation unit
141     User preference input unit (UI)
142     User preference analysis unit
143     User preference information storage unit
144     Conversation density analysis unit
145     Degree-of-intimacy calculation unit
301     CPU
302     ROM
303     RAM
304     Bus
305     Input/output interface
306     Input unit
307     Output unit
308     Storage unit
309     Communication unit
310     Drive
311     Removable medium

**Claims**

1.  An information processing apparatus comprising:

    a communication unit that receives a user utterance of a conversation partner via a network; and
    an output sound control unit that executes output control of the user utterance, wherein
    the output sound control unit
    executes sound direction control so that the user utterance is heard as an utterance from a user position of the
    conversation partner with respect to a predefined self-position.

2.  The information processing apparatus according to claim 1, wherein

    the output sound control unit
    executes volume control so that the user utterance is heard as an utterance from the user position of the
    conversation partner with respect to a predefined self-position.

3.  The information processing apparatus according to claim 1, wherein the user position of the conversation partner with
    respect to the self position is a fixed position determined in advance.

4.  The information processing apparatus according to claim 1, wherein the user position of the conversation partner with
    respect to the self position is a position determined according to a degree of intimacy with the conversation partner.

5.  The information processing apparatus according to claim 4, wherein

    the user position of the conversation partner with respect to the self position is determined to be
    a position closer to the self position as the degree of intimacy with the conversation partner is higher, and
    a position farther from the self position as the degree of intimacy with the conversation partner is lower.

6.  The information processing apparatus according to claim 1, further comprising a degree-of-intimacy calculation unit
    that calculates a degree of intimacy with respect to a conversation partner user, wherein

    the user position of the conversation partner with respect to the self position is
    a position determined according to the degree of intimacy calculated by the degree-of-intimacy calculation unit.

7.  The information processing apparatus according to claim 6, wherein

    the degree-of-intimacy calculation unit
    calculates a degree of intimacy according to a preference of a use user of the information processing apparatus
    with respect to the conversation partner user.

8. The information processing apparatus according to claim 7, wherein

   the degree-of-intimacy calculation unit
   analyzes a preference of the use user of the information processing apparatus with respect to the conversation partner user on a basis of a past history.

9. The information processing apparatus according to claim 6, wherein

   the degree-of-intimacy calculation unit
   calculates a degree of intimacy according to a conversation density between the use user of the information processing apparatus and the conversation partner user.

10. The information processing apparatus according to claim 1, further comprising an output image control unit that performs image output control on a display unit, wherein

    the output image control unit
    executes processing of displaying a self-user image indicating a self-user and a user image of the conversation partner on the display unit.

11. The information processing apparatus according to claim 10, wherein

    the output image control unit
    displays a background image determined by a user who uses the information processing apparatus on the display unit, and
    displays a user image of a user who has a conversation on the background image.

12. The information processing apparatus according to claim 10, wherein

    the output image control unit
    executes processing of displaying a self-user image indicating a self-user and a user image of the conversation partner at a fixed position determined in advance.

13. The information processing apparatus according to claim 6, further comprising an output image control unit that performs image output control on a display unit, wherein

    the output image control unit
    determines a display position of a user image of the conversation partner with respect to a self-user image indicating a self-user according to the degree of intimacy calculated by the degree-of-intimacy calculation unit.

14. The information processing apparatus according to claim 10, wherein

    the output image control unit
    executes processing of switching a background image to be displayed on the display unit from a background image set on an own terminal to a background image set by a user terminal of the conversation partner at a timing of outputting a user utterance of the conversation partner.

15. The information processing apparatus according to claim 1, wherein

    the output sound control unit
    executes processing of outputting, via a sound output unit, a background sound determined by a user who uses the information processing apparatus.

16. The information processing apparatus according to claim 1, wherein

    the output sound control unit
    executes processing of switching a background sound to be output to a sound output unit from a background sound set on an own terminal to a background sound set by a user terminal of the conversation partner at a timing of outputting a user utterance of the conversation partner.

17. An information processing method executed in an information processing apparatus,
    the information processing apparatus including:

    a communication unit that receives a user utterance of a conversation partner via a network; and
    an output sound control unit that executes output control of the user utterance, and
    the output sound control unit
    executing sound direction control so that the user utterance is heard as an utterance from a user position of the
    conversation partner with respect to a predefined self-position.

18. A program for causing an information processing apparatus to execute information processing,
    the information processing apparatus including:

    a communication unit that receives a user utterance of a conversation partner via a network; and
    an output sound control unit that executes output control of the user utterance, and
    the program causing the output sound control unit
    to execute sound direction control so that the user utterance is heard as an utterance from a user position of the
    conversation partner with respect to a predefined self-position.

# FIG. 1

50 COMMUNICATION
MANAGEMENT SERVER
(REMOTE CONFERENCE
MANAGEMENT SERVER,
GAME SERVER, OR THE LIKE)

70 BACKGROUND DATA
PROVISION SERVER

11a USER a

21a USER TERMINAL a

11d USER d

30 COMMUNICATION
NETWORK

22d USER TERMINAL d

11b USER b

21b USER TERMINAL b

21c USER TERMINAL c

11c USER c

EP 4 679 862 A1

# FIG. 2

70 BACKGROUND DATA PROVISION SERVER

| | BACKGROUND TYPE | BACKGROUND SOUND DATA FILE | BACKGROUND IMAGE DATA FILE |
|---|---|---|---|
| (1) | CONFERENCE ROOM | | |
| (2) | CAFE | | |
| (3) | PARK | | |
| (4) | LIVE MUSIC CLUB | | |
| (5) | IN TRAIN | | |
| (6) | STATION | | |
| (7) | AIRPORT | | |
| .. | ... | | ... |

EP 4 679 862 A1

# FIG. 3

70 BACKGROUND DATA PROVISION SERVER

CONFERENCE ROOM BACKGROUND DATA

CONFERENCE ROOM SOUND DATA

CONFERENCE ROOM IMAGE DATA

CAFE BACKGROUND DATA

CAFE SOUND DATA

CAFE IMAGE DATA

SOUND DATA STORAGE UNIT

IMAGE DATA STORAGE UNIT

11a USER a

21a USER TERMINAL a

EP 4 679 862 A1

FIG. 4

50 COMMUNICATION MANAGEMENT SERVER

70 BACKGROUND DATA PROVISION SERVER

21a USER TERMINAL a

101 COMMUNICATION UNIT

116 DATA TRANSMISSION UNIT

115 IMAGE INPUT UNIT

114 CAMERA

102 USER POSITION DETERMINATION UNIT (UI)

104 BACKGROUND DATA ACQUISITION UNIT

107 SOUND DATA RECEPTION UNIT

113 SOUND INPUT UNIT

105 SOUND DATA STORAGE UNIT

108 OUTPUT SOUND CONTROL UNIT

109 SOUND OUTPUT UNIT

103 USER POSITION INFORMATION STORAGE UNIT

11a USER a

106 IMAGE DATA STORAGE UNIT

110 OUTPUT IMAGE CONTROL UNIT

111 IMAGE OUTPUT UNIT

112 DISPLAY UNIT

EP 4 679 862 A1

# FIG. 5

11a USER a

11b USER b

11c USER c

11d USER d

EP 4 679 862 A1

# FIG. 6

(S01)

11a USER a: LET'S SET SETTING TO HOLD MEETING IN CONFERENCE ROOM

(S02)

11b USER b

11c USER c

11d USER d: I SEE

(S03)

11a USER a: ARE USER POSITIONS c IN FRONT OF OWN (a), b NEXT TO OWN (a), AND d IN FRONT OF b?

USER a    USER c

USER b    USER d

(S04)

11b USER b

11c USER c

11d USER d: I SEE

EP 4 679 862 A1

# FIG. 7

USER TERMINAL CONTROLS OUTPUT SOUND. OUTPUT IS PERFORMED WHILE CONTROLLING DIRECTION AND MAGNITUDE OF VOICE ACCORDING TO USER POSITION

USER a

USER c

USER b

USER d

21a USER TERMINAL a

VOICE OF USER c IS HEARD FROM FRONT

11a USER a

11c USER c

VOICE OF USER b IS HEARD FROM RIGHT SIDE

VOICE OF USER d IS HEARD FROM DIAGONALLY FRONT RIGHT

11b USER b

11d USER d

EP 4 679 862 A1

FIG. 8

FIG. 9

FIG. 10

# FIG. 11

VOICE OF USER a IS HEARD FROM LEFT SIDE

11a USER a

11c USER c

USER a    USER c

USER b    USER d

VOICE OF USER c IS HEARD FROM DIAGONALLY FRONT LEFT

11b USER b

11d USER d

USER TERMINAL CONTROLS OUTPUT SOUND. OUTPUT IS PERFORMED WHILE CONTROLLING DIRECTION AND MAGNITUDE OF VOICE ACCORDING TO USER POSITION

VOICE OF USER d IS HEARD FROM FRONT

21b USER TERMINAL b

EP 4 679 862 A1

FIG. 12

ch1 (x1,y1)
ch2 (x2,y2)
chr (xr,yr)
chs (xs,ys)
11a USER a
11c USER c
LISTENING POSITION (x0,y0)
cht (xt,yt
11b USER b
11d USER d

EP 4 679 862 A1

FIG. 13

*FIG. 14*

USER TERMINAL CONTROLS OUTPUT SOUND.
EXECUTE CONTROL OF DIRECTION AND MAGNITUDE OF VOICE ACCORDING TO USER POSITION AND OUTPUT CONTROL OF BACKGROUND SOUND

21a USER TERMINAL a

VOICE OF USER c IS HEARD FROM FRONT

11c USER c

VOICE OF USER d IS HEARD FROM DIAGONALLY FRONT RIGHT

11d USER d

11a USER a

11b USER b

VOICE OF USER b IS HEARD FROM RIGHT SIDE

BACKGROUND SOUND (SOUND OF SIPHON, SOUND OF COFFEE CUP, AND LIKE) IS HEARD FROM AROUND

USER c

USER d

USER a

USER b

FIG. 15

11a USER a

11b USER b

11c USER c

11d USER d

FIG. 16

USER TERMINAL CONTROLS OUTPUT SOUND.
EXECUTE CONTROL OF DIRECTION AND MAGNITUDE OF VOICE ACCORDING TO USER POSITION AND OUTPUT CONTROL OF BACKGROUND SOUND

21a USER TERMINAL a

VOICE OF USER c IS HEARD FROM FRONT

11c USER c

BACKGROUND SOUND (SOUND OF SIPHON, SOUND OF COFFEE CUP, SURROUNDING SPEAKING VOICE, AND LIKE) IS HEARD FROM AROUND

11a USER a

VOICE OF USER d IS HEARD FROM DIAGONALLY FRONT RIGHT

VOICE OF USER b IS HEARD FROM RIGHT SIDE

11b USER b

11d USER d

# FIG. 17

(S11)

LET'S SET SETTING TO MEET IN PARK

11a USER a

(S12)

I SEE

11b USER b  11c USER c  11d USER d

(S13)

IS SETTING THAT FRIENDS ARE FREE TO HAVE CONVERSATION?

11a USER a

USER b

USER a

USER c

USER d

(S14)

I SEE

11b USER b  11c USER c  11d USER d

EP 4 679 862 A1

# FIG. 18

11a USER a

21a USER TERMINAL a

121 DEGREE-OF-INTIMACY CALCULATION UNIT

110 OUTPUT IMAGE CONTROL UNIT

**(a) DEGREE OF USER-TO-USER INTIMACY BETWEEN USER a AND USERS b, c, AND d**

| USER | DEGREE OF INTIMACY | |
|------|--------------------|--|
| USER b | 10 | |
| USER c | 2 | |
| USER d | 5 | |

**(b) DISPLAY POSITION CONTROL EXAMPLE OF USER a AND USERS b, c, AND d**

DEGREE OF INTIMACY = 10

DISTANCE L1

USER b

DEGREE OF INTIMACY = 2

DISTANCE L3

USER a

DEGREE OF INTIMACY = 5

DISTANCE L2

USER c

USER d

EP 4 679 862 A1

# FIG. 19

11a USER a

21a USER TERMINAL a

110 OUTPUT IMAGE CONTROL UNIT

111 IMAGE OUTPUT UNIT

(b) DISPLAY POSITION CONTROL EXAMPLE OF USER a AND USERS b, c, AND d

DEGREE OF INTIMACY = 10

DISTANCE L1

USER b

DEGREE OF INTIMACY = 2

DISTANCE L3

USER a

DISTANCE L2

DEGREE OF INTIMACY = 5

USER c

USER d

(c) DISPLAY EXAMPLE OF USER a AND USERS b, c, AND d

USER b

USER c

USER a

USER d

EP 4 679 862 A1

# FIG. 20

11a USER a

21a USER TERMINAL a

108

OUTPUT SOUND CONTROL UNIT

USER UTTERANCE OUTPUT VOLUME

DEGREE OF INTIMACY BETWEEN USERS

EP 4 679 862 A1

# FIG. 21

11a USER a

21a USER TERMINAL a

108 OUTPUT SOUND CONTROL UNIT

USER UTTERANCE OUTPUT VOLUME

Vol. 3

Vol. 2

Vol. 1

DEGREE OF INTIMACY BETWEEN USERS

11c USER c (DEGREE OF INTIMACY=LOW)

11d USER d (DEGREE OF INTIMACY=MIDDLE)

11b USER b (DEGREE OF INTIMACY=HIGH)

# FIG. 22

11a USER a

21a USER TERMINAL a

108

OUTPUT SOUND CONTROL UNIT

BACKGROUND SOUND OUTPUT VOLUME

Vol. b3

Vol. b2

Vol. b1

DEGREE OF INTIMACY BETWEEN USERS

11c USER c

(DEGREE OF INTIMACY = LOW)

11d USER d

(DEGREE OF INTIMACY = MIDDLE)

11b USER b

(DEGREE OF INTIMACY = HIGH)

EP 4 679 862 A1

# FIG. 23

**50 COMMUNICATION MANAGEMENT SERVER**

**70 BACKGROUND DATA PROVISION SERVER**

**21a USER TERMINAL a**

- 101 COMMUNICATION UNIT
- 116 DATA TRANSMISSION UNIT
- 115 IMAGE INPUT UNIT
- 114 CAMERA
- 102 USER POSITION DETERMINATION UNIT (UI)
- 104 BACKGROUND DATA ACQUISITION UNIT
- 107 SOUND DATA RECEPTION UNIT
- 113 SOUND INPUT UNIT
- 121 DEGREE-OF-INTIMACY CALCULATION UNIT
- 103 USER POSITION INFORMATION STORAGE UNIT
- 105 SOUND DATA STORAGE UNIT
- 108 OUTPUT SOUND CONTROL UNIT
- 109 SOUND OUTPUT UNIT
- 11a USER a
- 110 OUTPUT IMAGE CONTROL UNIT
- 111 IMAGE OUTPUT UNIT
- 112 DISPLAY UNIT
- 106 IMAGE DATA STORAGE UNIT

EP 4 679 862 A1

# FIG. 24

- 101 COMMUNICATION UNIT
- 121 DEGREE-OF-INTIMACY CALCULATION UNIT
- 142 USER PREFERENCE ANALYSIS UNIT
- 144 CONVERSATION DENSITY ANALYSIS UNIT
- 143 USER PREFERENCE INFORMATION STORAGE UNIT
- 145 DEGREE-OF-INTIMACY CALCULATION UNIT
- 141 USER PREFERENCE INPUT UNIT (UI)
- 107 OUTPUT SOUND CONTROL UNIT
- 110 OUTPUT IMAGE CONTROL UNIT

# FIG. 25

11a USER a

USER LIKING BASE
DEGREE-OF-INTIMACY

PREFERENCE OF USER
(Lev. 0 to Lev. 5)

11c USER c
(PREFERENCE
=LOW)

11d USER d
(PREFERENCE
=MIDDLE)

11b USER b
(PREFERENCE
=HIGH)

EP 4 679 862 A1

FIG. 26

CONVERSATION DENSITY
BASE DEGREE-OF-INTIMACY

11a USER a

CONVERSATION DENSITY
(Lev. 0 to Lev. 5)
(CALCULATED ON BASIS OF
DIRECT CONVERSATION AMOUNT,
VOICE CHAT AMOUNT,
NUMBER OF TIMES OF
CALLING NAME, AND LIKE)

11b USER b
(CONVERSATION DENSITY=HIGH)

11d USER d
(CONVERSATION DENSITY=MIDDLE)

11c USER c
(CONVERSATION DENSITY=LOW)

FIG. 27

(a) TIME = t0

DEGREE OF INTIMACY = 10

DISTANCE L1

USER b

DEGREE OF INTIMACY = 2

DISTANCE L3

DEGREE OF INTIMACY = 5

USER a

DISTANCE L2

USER c

USER d

USER b

USER c

USER a

USER d

(b) TIME = t1

DISTANCE L1'

DEGREE OF INTIMACY = 8

USER b

DISTANCE L2'

DEGREE OF INTIMACY = 7

USER d

DISTANCE L3'

USER a

DEGREE OF INTIMACY = 4

USER c

USER b

USER d

USER a

USER c

EP 4 679 862 A1

**FIG. 28**

(a) USER IMAGE UPDATE PROCESSING EXAMPLE 1 IN ACCORDANCE WITH CHANGE IN DEGREE OF INTIMACY

AT TIME OF INCREASE IN DEGREE OF INTIMACY

DEGREE OF INTIMACY = LOW

AT TIME OF DECREASE IN DEGREE OF INTIMACY

DEGREE OF INTIMACY = HIGH

(b) USER IMAGE UPDATE PROCESSING EXAMPLE 2 IN ACCORDANCE WITH CHANGE IN DEGREE OF INTIMACY

AT TIME OF INCREASE IN DEGREE OF INTIMACY

AT TIME OF INCREASE IN DEGREE OF INTIMACY

DEGREE OF INTIMACY = LOW

AT TIME OF DECREASE IN DEGREE OF INTIMACY

DEGREE OF INTIMACY = MIDDLE

AT TIME OF DECREASE IN DEGREE OF INTIMACY

DEGREE OF INTIMACY = HIGH

EP 4 679 862 A1

# FIG. 29

11a USER a  21a USER TERMINAL a

BACKGROUND DATA=CAFE

USER c
USER a
USER b
USER d

BACKGROUND DATA =LIVE MUSIC CLUB

LIVE MUSIC CLUB

11c USER c

21c USER TERMINAL c

11b USER b

21b USER TERMINAL b

BACKGROUND DATA=PARK

USER d
USER a
USER b
USER c

BACKGROUND DATA=PARK

USER b
USER d
USER a
USER c

11d USER d

22d USER TERMINAL d

EP 4 679 862 A1

## FIG. 30

EP 4 679 862 A1

# FIG. 31

USER TERMINAL a OUTPUTS USER b SETTING BACKGROUND SOUND (PARK BACKGROUND SOUND) TOGETHER WITH UTTERANCE SOUND OF USER b

IN CASE WHERE USER a TALKS TO USER b

11a USER a

11b USER b

TRANSMIT USER b SETTING BACKGROUND SOUND (PARK BACKGROUND SOUND) TOGETHER WITH UTTERANCE SOUND OF USER b

USER a
USER b
USER c
USER d

21a USER TERMINAL a

BACKGROUND DATA = CAFE

USER a
USER b
USER c
USER d

21b USER TERMINAL b

BACKGROUND DATA = PARK

EP 4 679 862 A1

# FIG. 32

USER TERMINAL a OUTPUTS USER b SETTING BACKGROUND SOUND (PARK BACKGROUND SOUND) AND BACKGROUND IMAGE (PARK IMAGE) TOGETHER WITH UTTERANCE SOUND OF USER b

IN CASE WHERE USER a TALKS TO USER b

TRANSMIT USER b SETTING BACKGROUND SOUND (PARK BACKGROUND SOUND) AND BACKGROUND IMAGE (PARK IMAGE) TOGETHER WITH UTTERANCE SOUND OF USER b

11a USER a

11b USER b

USER c

USER a

USER b

USER d

BACKGROUND DATA=PARK

21a USER TERMINAL a

USER d

USER a

USER b

USER c

21b USER TERMINAL b

BACKGROUND DATA=PARK

EP 4 679 862 A1

# FIG. 33

IN CASE WHERE USER a IS SPOKEN TO BY USER b

USER TERMINAL a OUTPUTS UTTERANCE SOUND OF USER b TOGETHER WITH USER a SETTING BACKGROUND SOUND (CAFE BACKGROUND SOUND)

TRANSMIT ONLY UTTERANCE SOUND OF USER b (NOT TRANSMIT USER b SETTING BACKGROUND SOUND (PARK BACKGROUND SOUND)

11a USER a

11b USER b

USER c
USER a
USER b
USER d

21a USER TERMINAL a

BACKGROUND DATA = CAFE

USER a
USER d
USER b
USER c

21b USER TERMINAL b

BACKGROUND DATA = PARK

EP 4 679 862 A1

## FIG. 34

USER TERMINAL a OUTPUTS USER c SETTING BACKGROUND SOUND (LIVE MUSIC CLUB BACKGROUND SOUND) TOGETHER WITH UTTERANCE SOUND OF USER c

11b USER b

11a USER a

IN CASE WHERE USER a OR USER b TALKS TO USER c DURING CONVERSATION OF USER a AND USER b

11c USER c

TRANSMIT USER c SETTING BACKGROUND SOUND (LIVE MUSIC CLUB BACKGROUND SOUND) TOGETHER WITH UTTERANCE SOUND OF USER c

LIVE MUSIC CLUB

USER a

USER c

USER b

USER d

21a USER TERMINAL a

BACKGROUND DATA = CAFE

BACKGROUND DATA = LIVE MUSIC CLUB

21c USER TERMINAL c

EP 4 679 862 A1

# FIG. 35

USER TERMINAL a OUTPUTS USER c SETTING BACKGROUND SOUND (LIVE MUSIC CLUB BACKGROUND SOUND) AND BACKGROUND IMAGE (PARK IMAGE) TOGETHER WITH UTTERANCE SOUND OF USER c

11b USER b

IN CASE WHERE USER a OR USER b TALKS TO USER c DURING CONVERSATION OF USER a AND USER b

11a USER a

11c USER c

TRANSMIT USER c SETTING BACKGROUND SOUND (LIVE MUSIC CLUB BACKGROUND SOUND) AND BACKGROUND IMAGE (LIVE MUSIC CLUB IMAGE) TOGETHER WITH UTTERANCE SOUND OF USER c

LIVE MUSIC CLUB

USER a

USER c

USER b

USER d

21a USER TERMINAL a

BACKGROUND DATA = LIVE MUSIC CLUB

BACKGROUND DATA = LIVE MUSIC CLUB

LIVE MUSIC CLUB

21c USER TERMINAL c

EP 4 679 862 A1

# FIG. 36

USER TERMINAL a OUTPUTS USER a SETTING BACKGROUND SOUND (CAFE BACKGROUND SOUND) TOGETHER WITH UTTERANCE SOUND OF USER c

11b USER b

IN CASE WHERE USER a OR USER b IS SPOKEN TO BY USER c DURING CONVERSATION OF USER a AND USER b

TRANSMIT USER c SETTING BACKGROUND SOUND (LIVE MUSIC CLUB BACKGROUND SOUND) TOGETHER WITH UTTERANCE SOUND OF USER c

11a USER a

11c USER c

LIVE MUSIC CLUB

USER a

USER c

USER b

USER d

21a USER TERMINAL a

BACKGROUND DATA = CAFE

BACKGROUND DATA = LIVE MUSIC CLUB

21c USER TERMINAL c

EP 4 679 862 A1

# FIG. 37

**(S21) ENTERING OPERATION TO CAFE**

TALK ROOM

CONFERENCE ROOM | ENTER ROOM

CAFE | ENTER SHOP

21a USER TERMINAL a

11a USER a

**(S22) USER a ENTERS CAFE**

CAFE

USER a

USER TERMINAL a DISPLAYS BACKGROUND IMAGE (CAFE) AND OUTPUTS BACKGROUND SOUND (CAFE)

**(S23) USER b ENTERS CAFE**

CAFE

USER b

USER a

USER TERMINAL a DISPLAYS BACKGROUND IMAGE (CAFE) AND OUTPUTS BACKGROUND SOUND (CAFE) AND CONVERSATION SOUND (UTTERANCE SOUND OF USER b)

FIG. 38

(S24) USER c ENTERS CAFE

CAFE

USER c

USER b

USER a

USER TERMINAL a DISPLAYS BACKGROUND IMAGE (CAFE) AND OUTPUTS BACKGROUND SOUND (CAFE) AND CONVERSATION SOUNDS (UTTERANCE SOUNDS OF USERS b AND c)

(S25) DEGREE OF INTIMACY OF USER c IS CHANGED

CAFE

USER c

USER b

USER a

USER TERMINAL a DISPLAYS BACKGROUND IMAGE (CAFE) AND OUTPUTS BACKGROUND SOUND (CAFE) AND CONVERSATION SOUNDS (UTTERANCE SOUNDS OF USERS b AND c), AND UPDATE DISPLAY POSITION OF USER c IN ACCORDANCE WITH INCREASE IN DEGREE OF INTIMACY OF USER c

FIG. 39

(S26) USER c LEAVES CAFE, AND USER d ENTERS CAFE

USER b
USER d
USER a
CAFE

USER TERMINAL a DISPLAYS BACKGROUND IMAGE (CAFE) AND OUTPUTS BACKGROUND SOUND (CAFE) AND CONVERSATION SOUNDS (UTTERANCE SOUNDS OF USERS b AND d)

(S27) DEGREES OF INTIMACY OF USER b AND d ARE CHANGED

USER b
USER d
USER a
CAFE

USER TERMINAL a DISPLAYS BACKGROUND IMAGE (CAFE) AND OUTPUTS BACKGROUND SOUND (CAFE) AND CONVERSATION SOUNDS (UTTERANCE SOUNDS OF USERS b AND c), AND UPDATE DISPLAY POSITIONS OF USERS b AND c IN ACCORDANCE WITH CHANGE IN DEGREES OF INTIMACY OF USERS b AND c

FIG. 40

(S31) USER TERMINAL a OUTPUT SET BACKGROUND DATA (CAFE)

CAFE

USER a
USER b
USER d

11a USER a
21a USER TERMINAL a

USER TERMINAL a DISPLAYS BACKGROUND IMAGE (CAFE) SET IN USER TERMINAL a AND OUTPUTS BACKGROUND SOUND (CAFE) AND CONVERSATION SOUND

(S32) SWITCH TO BACKGROUND DATA (CAFE VIEWED FROM DIFFERENT DIRECTION) SET IN USER TERMINAL d AND DISPLAY BACKGROUND DATA AT TIME OF UTTERANCE OF USER d

CAFE

USER b
USER a
USER d

USER TERMINAL a DISPLAYS BACKGROUND IMAGE (CAFE VIEWED FROM DIFFERENT DIRECTION) SET IN USER TERMINAL d AND OUTPUTS BACKGROUND SOUND (CAFE) AND CONVERSATION SOUND (UTTERANCE SOUND OF USER d) AT TIME OF UTTERANCE OF USER d

77

# FIG. 41

(S41) USERS a, b, AND d
HAVE CONVERSATION AT CAFE

(S42) USER a RESPONDS
TO CALL FROM USER c

CAFE

USER a

USER b

USER d

21a USER TERMINAL a

11a USER a

USER TERMINAL a DISPLAYS
BACKGROUND IMAGE (CAFE) SET
IN USER TERMINAL a AND
OUTPUTS BACKGROUND SOUND
(CAFE) AND CONVERSATION SOUND

LIVE MUSIC CLUB

USER a

USER c

USER TERMINAL a DISPLAYS
BACKGROUND IMAGE (LIVE MUSIC CLUB)
SET BY USER c AND OUTPUTS
BACKGROUND SOUND (LIVE MUSIC CLUB)
AND CONVERSATION SOUND
(UTTERANCE SOUND OF USER c)

EP 4 679 862 A1

# FIG. 42

(S51) USERS a, b, AND d HAVE CONVERSATION AT CAFE

CAFE

USER a

USER b

USER d

21a USER TERMINAL a

11a USER a

USER TERMINAL a DISPLAYS BACKGROUND IMAGE (CAFE) SET IN USER TERMINAL a AND OUTPUTS BACKGROUND SOUND (CAFE) AND CONVERSATION SOUND

(S52) TURN ON CAMERA OF USER TERMINAL a OF USER a

CAFE

USER a (CAMERA-PHOTOGRAPHED REAL IMAGE)

USER b

USER d

USER TERMINAL a DISPLAYS BACKGROUND IMAGE (CAFE) AND REAL IMAGE (CAMERA-PHOTOGRAPHED IMAGE) OF USER a AND OUTPUTS BACKGROUND SOUND (CAFE) AND CONVERSATION SOUND (UTTERANCE SOUNDS OF USERS b AND d)

EP 4 679 862 A1

# FIG. 43

EP 4 679 862 A1

## INTERNATIONAL SEARCH REPORT

International application No.

**PCT/JP2024/002446**

### A. CLASSIFICATION OF SUBJECT MATTER

*H04R 3/00*(2006.01)i; *G10K 15/04*(2006.01)i; *H04M 1/72*(2021.01)i; *H04M 3/56*(2006.01)i; *H04N 7/14*(2006.01)n; *H04N 7/15*(2006.01)n; *H04S 7/00*(2006.01)n
FI:   H04R3/00 310; G10K15/04 302F; H04M1/72; H04M3/56 C; H04N7/14 110; H04N7/15 170; H04S7/00 320

According to International Patent Classification (IPC) or to both national classification and IPC

### B. FIELDS SEARCHED

Minimum documentation searched (classification system followed by classification symbols)

H04R3/00; G10K15/04; H04M1/72; H04M3/56; H04N7/14; H04N7/15; H04S7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2013-017027 A (NIPPON TELEGRAPH AND TELEPHONE CORPORATION) 24 January 2013 (2013-01-24) | 1-2, 4, 6-9, 17-18 |
|   | paragraphs [0015], [0021], [0027]-[0046], fig. 1-6 | |
| Y | | 4-5, 10-11, 13, 15 |
| A | | 14, 16 |
| X | JP 2001-036881 A (CANON KABUSHIKI KAISHA) 09 February 2001 (2001-02-09) | 1-3, 10, 12, 17-18 |
|   | paragraphs [0019], [0025]-[0027], [0030]-[0038], fig. 2-3 | |
| Y | | 4-5, 10-11, 13, 15 |
| A | | 6-9, 14, 16 |
| Y | JP 2006-140595 A (SONY CORPORATION) 01 June 2006 (2006-06-01) | 4-5 |
|   | paragraphs [0022]-[0030], [0043]-[0051], fig. 1-3 | |

☑ Further documents are listed in the continuation of Box C.

☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 April 2024** | **16 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

International application No.

**PCT/JP2024/002446**

### C. DOCUMENTS CONSIDERED TO BE RELEVANT

| Category* | Citation of document, with indication, where appropriate, of the relevant passages | Relevant to claim No. |
|---|---|---|
| Y | JP 2022-116906 A (UNIVERISTY OF WASEDA) 10 August 2022 (2022-08-10) paragraphs [0012]-[0015], [0022]-[0023], [0030]-[0031], [0035], [0050]-[0051], fig. 1-3, 6, 8 | 10, 13 |
| Y | JP 6-165173 A (NIPPON TELEGRAPH AND TELEPHONE CORPORATION) 10 June 1994 (1994-06-10) paragraphs [0008]-[0009], [0013]-[0014], fig. 1-3 | 10-11, 15 |
| A | | 14, 16 |
| A | JP 2014-011509 A (SHARP KABUSHIKI KAISHA) 20 January 2014 (2014-01-20) paragraph [132] | 5 |
| A | WO 2021/125081 A1 (NEC CORPORATION) 24 June 2021 (2021-06-24) paragraph [134] | 5 |

Form PCT/ISA/210 (second sheet) (July 2022)

**INTERNATIONAL SEARCH REPORT**
Information on patent family members

International application No.

**PCT/JP2024/002446**

| Patent document cited in search report | | | Publication date (day/month/year) | Patent family member(s) | Publication date (day/month/year) |
|---|---|---|---|---|---|
| JP | 2013-017027 | A | 24 January 2013 | (Family: none) | |
| JP | 2001-036881 | A | 09 February 2001 | (Family: none) | |
| JP | 2006-140595 | A | 01 June 2006 | (Family: none) | |
| JP | 2022-116906 | A | 10 August 2022 | (Family: none) | |
| JP | 6-165173 | A | 10 June 1994 | (Family: none) | |
| JP | 2014-011509 | A | 20 January 2014 | (Family: none) | |
| WO | 2021/125081 | A1 | 24 June 2021 | US 2023/0007428 A1 paragraph [168] | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019155735 A